(19) Europäisches Patentamt
European Patent Office
Office européen des brevets

(11) **EP 2 336 859 A1**

(12) **EUROPEAN PATENT APPLICATION**
published in accordance with Art. 153(4) EPC

(43) Date of publication:
**22.06.2011 Bulletin 2011/25**

(51) Int Cl.:
*G06F 3/041* (2006.01)   *G02F 1/1333* (2006.01)
*G02F 1/13357* (2006.01)   *G02F 1/1343* (2006.01)
*G06F 3/042* (2006.01)   *G09F 9/00* (2006.01)

(21) Application number: **09809663.9**

(22) Date of filing: **29.05.2009**

(86) International application number:
**PCT/JP2009/059898**

(87) International publication number:
**WO 2010/024008 (04.03.2010 Gazette 2010/09)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **29.08.2008 JP 2008222872**
**06.02.2009 JP 2009026658**

(71) Applicant: **Sharp Kabushiki Kaisha**
**Osaka-shi, Osaka 545-8522 (JP)**

(72) Inventors:
• **HAMADA, Hiroshi**
**Osaka 545-8522 (JP)**
• **MIYAZAKI, Shinichi**
**Osaka 545-8522 (JP)**

• **NOMA, Mikihiro**
**Osaka 545-8522 (JP)**
• **TAKAHAMA, Kengo**
**Osaka 545-8522 (JP)**
• **WADA, Masakazu**
**Osaka 545-8522 (JP)**
• **HOHSHI, Norikazu**
**Osaka 545-8522 (JP)**
• **ODA, Kohichi**
**Osaka 545-8522 (JP)**
• **MIZUNO, Yukio**
**Osaka 545-8522 (JP)**

(74) Representative: **Müller-Boré & Partner**
**Patentanwälte**
**Grafinger Straße 2**
**81671 München (DE)**

(54) **COORDINATE SENSOR, ELECTRONIC DEVICE, DISPLAY DEVICE, AND LIGHT-RECEIVING UNIT**

(57)   A coordinate sensor (10) includes at least two line sensors (1) that are disposed in x-axis and y-axis directions, and right-angle prisms (2) each of which changes a light path of light that has passed through an image display region of a liquid crystal panel (20). Each of the line sensors (1) is disposed outside the image display region and has a light-receiving surface (1a) parallel to an image display surface of the liquid crystal panel (20). The right angle prisms (2) cause light which travels in the x-axis and y-axis directions and which has passed through the image display region to be guided to the light-receiving surfaces (1a) of the line sensors (1). The coordinate sensor (10) receives the light which has thus passed through the image display region of the liquid crystal panel (20) so as to detect a coordinate, on the image display region, that is indicated by an object to be detected such as a finger. Consequently, a thin coordinate sensor that enables easy alignment with no reduction in aperture ratio and no restriction on operation speed can be realized at low cost.

FIG.1

**Description**

Technical Field

The present invention relates to (i) a coordinate sensor which detects, based on received light which has passed through an image display region of an image display member, a coordinate, on the image display region, indicated by an object to be detected, (ii) an electronic device including the coordinate sensor, (iii) a display device including the coordinate sensor, (iv) a liquid crystal display device with a built-in coordinate sensor, and (v) a light-receiving unit that can be suitably applied to the coordinate sensor.

Background Art

Various kinds of display devices such as liquid crystal display devices have been developed. Such display devices include display devices with a touch panel that have a touch panel (coordinate sensor) function, i.e., are capable of detecting a position, of a panel surface, touched by a finger or an input pen.

As such display devices with a touch panel, display devices with a so-called resistive touch panel and display devices with a so-called capacitive touch panel have been conventionally used. However, each of such display devices requires a special panel used for position detection. This results in an increase in thickness of an entire device. Moreover, use of such a touch panel as a screen (display region) of a display device undesirably causes a decrease in viewability.

In view of this, instead of the display devices with a resistive touch panel and the display devices with a capacitive touch panel, display devices with a built-in coordinate sensor have been developed in recent years which include, within a screen, a light-receiving element (optical sensor element) such as a photodiode or a phototransistor.

Such a display device including an optical coordinate sensor is disclosed, for example, in Patent Literature 1 and Patent Literature 2. Such a display device including an optical coordinate sensor can be referred to as a display device with a two-dimensional sensor array since light-receiving elements are disposed in a matrix within a display region (i.e., within a screen) of a display panel.

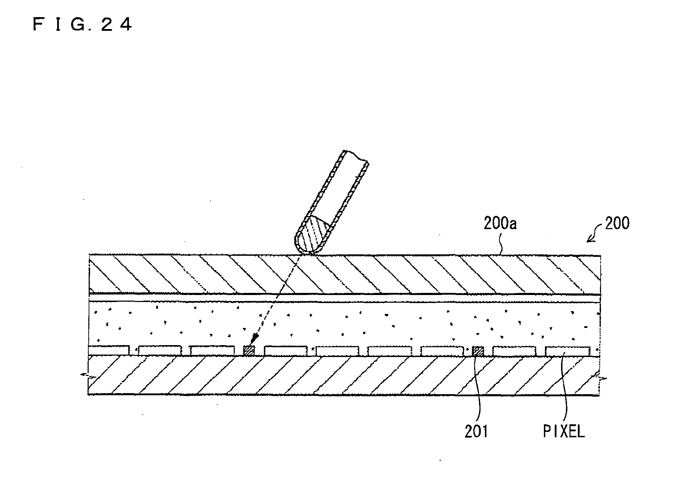

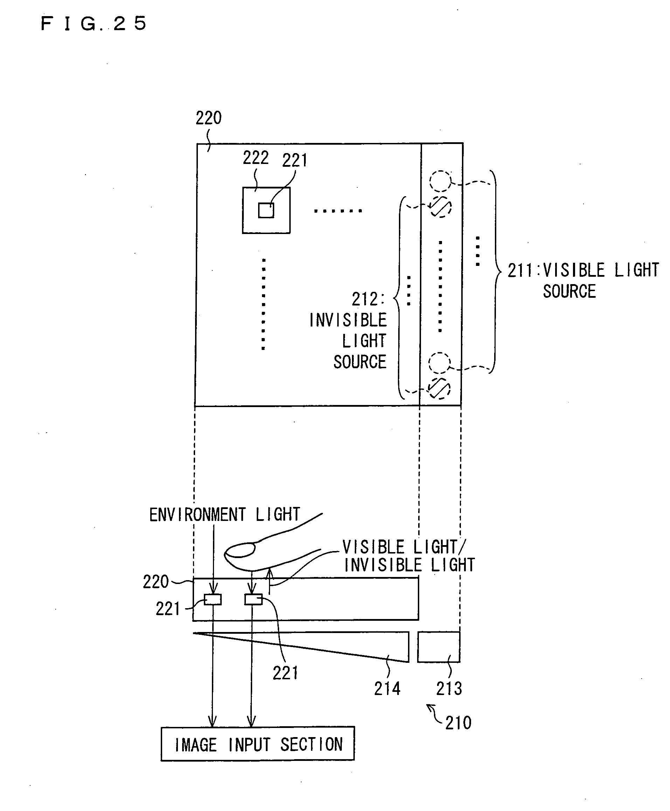

Fig. 24 is a cross-sectional view illustrating an outline configuration of a substantial part of a liquid crystal display device disclosed in Patent Literature 1. Fig. 25 is a view schematically illustrating an outline configuration of a substantial part of a liquid crystal display device disclosed in Patent Literature 2.

As illustrated in Fig. 24, the liquid crystal display device disclosed in Patent Literature 1 includes a liquid crystal panel 200; and light-receiving elements 201 that are provided in the liquid crystal panel 200. In the liquid crystal display device disclosed in Patent Literature 1, the light-receiving elements 201 detect a light beam which is emitted from a light pen and then enters a display surface 200a of the liquid crystal panel 200 from an outside of the liquid crystal panel 200. Thus, a coordinate inputted by the light pen is detected.

Meanwhile, as illustrated in Fig. 25, the liquid crystal display device disclosed in Patent Literature 2 detects a coordinate inputted by an imaging target such as a finger by causing light-receiving elements 221 provided in a liquid crystal panel 220 to detect a distribution of received light amount that is caused by blocking of an environment light by the imaging target or by blocking or reflection, by the imaging target, of an invisible light that enters the liquid crystal panel 220 from a backlight 210. The backlight 210 includes a light source section 213 and a light guide plate 214. The light source section 213 includes visible light sources 211 that are white LEDs (Light Emitting Diode) and infrared light sources 212 that are infrared LEDs serving as invisible light sources. Note that the light-receiving elements 221 are disposed so that a single light-receiving element 201 is provided for a single display element (pixel) 222 or for a plurality of display elements (pixels) 222.

As described above, conventionally known liquid crystal display devices with an optical coordinate sensor are liquid crystal display devices with a two-dimensional sensor array. However, a coordinate sensor disclosed in Patent Literature 3 is recently proposed as an optical coordinate sensor.

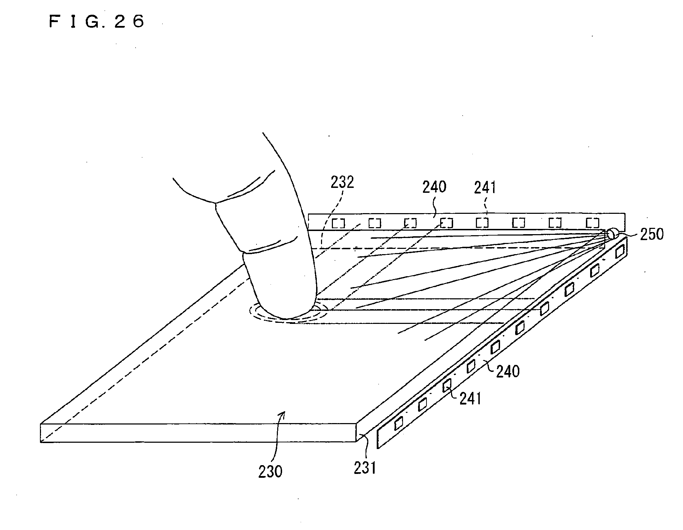

Fig. 26 is a perspective view illustrating an outline configuration of the coordinate sensor disclosed in Patent Literature 3.

As illustrated in Fig. 26, the coordinate sensor disclosed in Patent Literature 3 includes: (i) a plate 230; (ii) detection arrays 240 that are bonded to end surfaces 231 and 232 extending in x-axis and y-axis directions, respectively, the detection arrays 240 each including discrete light-receiving elements 241 (detection elements) that are arranged in a one-dimensional array; and (iii) an LED 250 that is provided on a corner section of the plate 230 or on an end surface facing the light-receiving elements 241. In Patent Literature 3, the light-receiving elements 241 receive light that is emitted from the LED 250 and is then reflected by a user's finger. Thus, a point (inputted coordinate) at which the light collided with the user's finger is detected.

Citation List

Patent Literature 1
Japanese Patent Application Publication, Tokukai, No. 2004-264846 A (Publication Date: September 24, 2004)
Patent Literature 2
Japanese Patent Application Publication, Tokukai, No. 2008-3296 A (Publication Date: January 10, 2008)
Patent Literature 3
WO 2007/029257 (Publication Date: March 15, 2007)

Summary of Invention

However, there occurs a reduction in aperture ratio in a display device with a two-dimensional sensor array since light-receiving elements are disposed within a screen as described above. In addition, an optical signal read-out circuit becomes complicated. Further, there is a restriction on operation speed in a case where, in order to suppress a reduction in aperture ratio, bus lines (scanning signal lines and display data signal lines) for display elements (driving elements) such as TFTs (Thin Film Transistor) are used along with bus lines (scanning signal lines and data read-out lines) for light-receiving elements so that displaying and sensing are carried out in time division. These problems are common among display devices with a two-dimensional sensor array.
Meanwhile, a display device using the coordinate sensor disclosed in Patent Literature 3 is not a display device with a two-dimensional sensor array, and therefore does not cause the problems such as a reduction in aperture ratio and restriction on operation speed.
However, the coordinate sensor disclosed in Patent Literature 3 has problems such as difficult alignment and large manufacturing time and cost since the detection arrays 240 on which the discrete light-receiving elements 241 are arranged in a one-dimensional array are bonded to the end surfaces 231 and 232 of the plate 230 as described above.
Further, in a case where the light-receiving elements 241 are provided on the end surfaces 231 and 232 of the plate 230 as shown in Patent Literature 3, a size of the light-receiving elements 241 1 imposes a restriction on a thickness of the plate 230. That is, it is impossible to reduce a thickness of the plate 230. Accordingly, use of the coordinate sensor is restricted. Moreover, in a case where the coordinate sensor is used in a display device, an entire thickness of the display device becomes large.
The present invention was attained in view of the above problems, and an object of the present invention is to realize (i) a thin coordinate sensor which allows easy alignment with no reduction in aperture ratio and no restriction on operation speed at low cost, (ii) an electronic apparatus including the coordinate sensor, (iii) a display device including the coordinate sensor, (iv) a display device with a built-in coordinate sensor, and (v) a light-receiving unit that can be suitably applied to the coordinate sensor.
In order to attain the above object, a coordinate sensor of the present invention which detects, based on a difference in amount of light received by light-receiving elements, an indicated coordinate, on an image display region of an image display member, that is indicated by an object to be detected, includes: at least two line sensors (i.e., one-dimensional sensor arrays) including a line sensor having light-receiving elements disposed in an x-axis direction and a line sensor having light-receiving elements disposed in a y-axis direction; and light path changing sections that are paired with the respective line sensors and that are disposed outside the image display region in the x-axis direction and the y-axis direction, the light path changing sections changing a light path of light that enters the light path changing sections, said at least two line sensors being disposed outside the image display region and having light-receiving surfaces parallel to an image display surface of the image display member, and the light path changing sections each guiding the light that enters the light path changing sections to a light-receiving surface of a corresponding one of said at least two line sensors.
For example, in order to attain the above object, a coordinate sensor of the present invention which causes light-receiving elements to receive light that has passed through an image display region of an image display member and which detects, based on a difference in amount of light received by the light-receiving elements, an indicated coordinate, on the image display region, that is indicated by an object to be detected, includes: at least two line sensors including a line sensor having light-receiving elements disposed in an x-axis direction and a line sensor having light-receiving elements disposed in a y-axis direction; and light path changing sections that are paired with the respective line sensors and that are disposed in the x-axis direction and the y-axis direction, the light path changing sections changing a light path of the light that has passed through the image display region, said at least two line sensors being disposed outside the image display region and having light-receiving surfaces parallel to an image display surface of the image display member, and the light path changing sections each guiding the light that has passed through the image display region to a light-receiving surface of a corresponding one of said at least two line sensors.

As described above, in the coordinate sensor, the line sensors that are disposed in the x-axis direction and the y-axis direction are provided, outside the image display region, on the image display member. Since there is no light-receiving element in the image display region, displaying and sensing (detection of the coordinate indicated by the object to be detected) are carried out independently of each other. As such, the coordinate sensor of the present invention does not cause problems such as a reduction in aperture ratio and restriction on operation speed unlike a conventional two-dimensional array display device with a built-in coordinate sensor.

Further, since the coordinate sensor includes the light path changing sections, the line sensors can be disposed outside the image display region so that the light-receiving surfaces of the line sensors are parallel to the image display surface. That is, even in a case where the line sensors are disposed as above, light that travels through the image display region in the x-axis and y-axis directions can be guided to the light-receiving surfaces of the light-receiving elements of the line sensors.

According to the arrangement, the line sensors are disposed so that the light-receiving surfaces are parallel to the image display surface. Accordingly, the line sensors and wiring and circuits necessary for the line sensors can be formed on a surface on which other circuits in the image display region are formed, concurrently with the formation of these circuits, for example. Further, detection lines and circuits necessary for processing of a detection signal can be formed corresponding to the respective line sensors in the x-axis and y-axis directions. As a result, the coordinate sensor allows for easy alignment with a simple arrangement. According to the arrangement, the line sensors are disposed so that the light-receiving surfaces are parallel to the image display surface. This allows the coordinate sensor to have a reduced thickness, and allows the line sensors to be provided so as to face side surfaces of a thin substrate. As a result, the coordinate sensor can be used without any restriction. Consequently, according to the arrangement, a thin coordinate sensor which allows for easy alignment with no reduction in aperture ratio and no restriction in operation speed can be realized at low cost.

Further, the line sensors can be disposed in an originally existing non-image display region outside the image display region of the image display member. This can prevent a region other than the image display region from becoming large, thereby preventing the image display member from unintendedly (unnecessarily) becoming large.

Further, it is preferable that the coordinate sensor further includes a light guide member that is provided at least in the image display region, the light guide member causing light that enters the image display region of the image display member to propagate in the x-axis direction and the y-axis direction in the image display region and to be guided to the light path changing sections, the light path changing sections being provided so as to face respective end surfaces of the light guide member and being light reflecting members that reflect light outputted from the end surfaces of the light guide member.

According to the arrangement, the coordinate sensor includes the light guide member. This allows light to propagate in the x-axis direction and the y-axis direction of the image display region and to be guided to the light path changing sections. This eliminates the need for disposing a plurality of light sources in the x-axis direction and y-axis direction of the image display region, thereby improving flexibility in disposing light sources for emitting light into the image display region. Further, in a case where the light sources are disposed in a certain manner, a coordinate indicated by the object to be detected can be detected just by bringing the object to be detected close to the light guide member.

Further, according to the arrangement, the coordinate sensor includes the light reflecting members as the light path changing sections. This allows light outputted from an end surface of the light guide member to be easily guided to the light-receiving surfaces of the line sensors.

Further, it is preferable that the light reflecting members are bonded to the light guide member with use of an optical coupling material having a refractive index equal to that of the light guide member.

Normally, in a case where the light guide member is a transparent substrate such as a glass substrate, an end surface of such a transparent substrate is not flat since minute concavities and convexities are produced on the end surface by a normal glass cutting method. This causes light to be refracted/scattered by the end surface. However, in a case where the concavities and convexities of the end surface are filled with the optical coupling material, it is possible to prevent refraction/scattering of light, thereby allowing light outputted from the light guide member to be efficiently guided to the line sensors via the light reflecting members.

It is preferable that the light guide member is a reflectance changing member that changes reflectance of light propagating within the light guide member when a pressure is applied to a surface of the light guide member by the object to be detected.

According to the arrangement, when a pressure is applied to the surface (coordinate detection surface) of the light guide member by the object to be detected, reflectance of light that has entered the image display region declines in a part where the object to be detected makes contact with the surface of the light guide member. This causes light amounts received by light-receiving elements that detect light which corresponds to the part and which travels through the image display region in the x-axis and y-axis direction to be smaller than those received by other light-receiving elements. Therefore, in a case where the light guide member is a reflectance changing member having the above function, reflectance of light that has entered the image display region can be varied depending on whether or not a pressure is applied to the surface (coordinate detection surface) of the light guide member. This makes it possible to surely judge whether or not the object to be detected has touched the surface of the light guide member.

Further, it is preferable that the light guide member includes two elastic films, and has an air layer that is created between the two elastic films while no pressure is being applied to the surface of the light guide member, and when a pressure is applied to the surface of the light guide member, the two elastic films make contact with each other, thereby changing the reflectance of the light propagating within the light guide member.

According to the arrangement, when a pressure is applied to the surface (coordinate detection surface) of the light guide member by the object to be detected, the two elastic films make contact with each other, so that the air layer formed between the two elastic films disappears. As a result, a light reflecting effect at borders between the elastic films and the air layer disappears. Accordingly, reflectance of light that has enter the image display region declines in a part where the object to be detected makes contact with the surface of the light guide member. This causes light amounts received by light-receiving elements that detect light which corresponds to the part and which travels through the image display region in the x-axis and y-axis direction to be smaller than those received by other light-receiving elements. Therefore, in a case where the light guide member is a reflectance changing member arranged as above, it is possible to surely judge whether or not the object to be detected has touched the surface of the light guide member.

Further, in a case where the light guide member is constituted by the two elastic films and the air layer as described above, it is possible to reduce the number of factors causing scattering of light. This is because each of the elastic films has a flat shape and has a flat surface facing the air layer. Consequently, in a case where the image display member is an electronic display panel such as a liquid crystal panel, it is possible to suppress a reduction in display quality of an image displayed on the electronic display panel. Further, according to the arrangement, the light guide member can be manufactured from two flat elastic films. This eliminates the need for high-accuracy molding, thereby making it possible to manufacture the light guide member at low cost.

Further, it is preferable that the light guide member includes an elastic film and a transparent substrate that are stacked on each other.

According to the arrangement, it is possible to realize a light guide member in which when a pressure is applied to the surface (coordinate detection surface) of the light guide member by the object to be detected, reflectance of light that has entered the image display region declines in a part where the object to be detected makes contact with the surface of the light guide member. Examples of the elastic film include a film made of a material such as silicon rubber. A material of which the transparent substrate is made is not limited to a specific one, provided that the transparent substrate is a hard substrate that transmits light. Examples of the material include a transparent resin such as an acrylic resin (e.g., PMMA; Polymethylmethacrylate), a polycarbonate resin, a cyclic polyolefin resin (e.g., "ZEONEX", "ZEONOR", "ARTON", each of which is a product name), a polyester resin (PET; Polyethylene Terephtalate) or a fluorine resin; glass, diamond, and quartz.

Further, in a case where the light guide member includes two elastic films as described above, it is preferable that a distance maintaining member for creating the air layer is provided on at least one of the two elastic films.

Similarly, in a case where the light guide member includes an elastic film and a transparent substrate stacked on the elastic film, it is preferable that the light guide member has an air layer that is created between the elastic film and the transparent substrate while no pressure is being applied to the surface of the light guide member, a distance maintaining member for creating the air layer is provided on at least one of the elastic film and the transparent substrate, and when a pressure is applied to the surface of the light guide member, the elastic film and the transparent substrate make contact with each other, thereby changing the reflectance of the light propagating within the light guide member.

According to the arrangements, the air layer can be surely created while no pressure is being applied to the surface of the light guide member.

Further, in a case where the light guide member includes two elastic films as described above, it is preferable that at least one of the two elastic films has ridges and grooves on a surface which makes contact with the other one of the two elastic films.

Similarly, in a case where the light guide member includes an elastic film and a transparent substrate stacked on the elastic film, it is preferable that the elastic film has ridges and grooves on at least one of (i) a surface which makes contact with the transparent substrate and (ii) a surface opposite to the surface which makes contact with the transparent substrate.

In a case where no pressure is applied to the surface of the light guide member, presence of such ridges and grooves on the surface that makes contact with the transparent substrate allows not only an improvement in boundary reflection but also an improvement in reflectance of light propagating within the light guide member. Meanwhile, in a case where a pressure is applied to the surface of the light guide member, presence of such ridges and grooves on the surface that makes contact with the transparent substrate allows not only a reduction in boundary reflection but also a further reduction in reflectance of light that has entered the image display region, in a part where the object to be detected makes contact with the surface of the light guide member.

Further, presence of such ridges and grooves on the surface that makes contact with the transparent substrate allows the air layer to be partially created in a case where a pressure is applied to the surface (coordinate detection surface) of the light guide member by the object to be detected so that the elastic film makes contact with the transparent substrate. This allows an improvement in detachability of the elastic film and the transparent substrate in a case where the pressure is removed. Consequently, it is possible to prevent a problem that the elastic film and the transparent substrate cannot be detached from each other after completion of input to the coordinate sensor.

Further, in a case where the light guide member includes an elastic film and a transparent substrate stacked on the elastic film, ridges and grooves may be formed on a surface of the elastic film which surface is opposite to a surface that makes contact with the transparent substrate, as described above.

Also with this arrangement, it is possible to realize a light guide member in which when a pressure is applied to the surface (coordinate detection surface) of the light guide member by the object to be detected, reflectance of light that has entered the image display region declines in a part where the object to be detected makes contact with the surface of the light guide member.

Further, in a case where the light guide member includes an elastic film and a transparent substrate stacked on the elastic film, ridges and grooves may be formed on a surface of the transparent substrate which surface makes contact with the elastic film.

Also with this arrangement, it is possible to realize a light guide member in which when a pressure is applied to the surface (coordinate detection surface) of the light guide member by the object to be detected, reflectance of light that has entered the image display region declines in a part where the object to be detected makes contact with the surface of the light guide member.

Further, it is preferable that the coordinate sensor further includes a light guide member that is provided at least in the image display region, the light guide member causing light that enters the image display region of the image display member to propagate in the x-axis direction and the y-axis direction in the image display region and to be guided to the light path changing sections, the light guide member being provided so as to overlap said at least two line sensors, and the light path changing sections being diffraction gratings that are provided on at least one of a top surface and a rear surface of the light guide member so as to overlap said at least two line sensors.

According to the arrangement, the coordinate sensor includes the light guide member. This improves flexibility in disposing light sources for emitting light into the image display region as described above. Further, in a case where the light sources are disposed in a certain manner, a coordinate indicated by the object to be detected can be detected just by bringing the object to be detected close to the light guide member.

Further, according to the arrangement, the coordinate sensor includes the diffraction gratings as the light path changing sections. This allows light outputted from the end surface of the light guide member to be easily guided to the light-receiving surfaces of the line sensors.

Further, it is preferable that the coordinate sensor further includes a light guide member that is provided at least in the image display region, the light guide member causing light that enters the image display region of the image display member to propagate in the x-axis direction and the y-axis direction in the image display region and to be guided to the light path changing sections, the light guide member being provided so that end portions of the light guide member overlap said at least two line sensors, the light path changing sections being provided so as to be integral with the light guide member so that the end portions of the light guide member that are curved or tilted serve as the light path changing sections, and the light guide member causing light propagating within the light guide member to be reflected by the end portions that are curved or tilted so that the light is outputted.

Also according to the arrangement, the coordinate sensor includes the light guide member. This allows an improvement in flexibility in disposing light sources for emitting light into the image display region as described above. Further, in a case where the light sources are disposed in a certain manner, a coordinate indicated by the object to be detected can be detected just by bringing the object to be detected close to the light guide member.

Further, in a case where the light path changing sections are provided so as to be integral with the light guide member so that the end portions of the light guide member that are curved or tilted serve as the light path changing sections, light outputted from the end surface of the light guide member can be easily guided to the light-receiving surfaces of the line sensors and the number of components can be reduced just by partially changing a shape of the light guide member. Consequently, according to the arrangement, a coordinate sensor can be realized at lower cost.

Further, it is preferable that the coordinate sensor further includes light sources that emit light into the image display region of the image display member, the light sources being provided so as to face, in plan view, the light path changing sections across the image display region in the x-axis direction and the y-axis direction or being provided so as to face respective corner sections of the image display region.

According to the arrangement, it is unnecessary to irradiate the image display region with light from behind the image display member. This makes it possible to detect a coordinate indicated by an object to be detected even if the image display member is a reflective liquid crystal display device, an electronic paper, each of which does not transmit light, or a medium (fixed display medium), such as a plastic material or paper (printed material), which hardly transmit light.

Further, according to the arrangement, in a case where the coordinate sensor is mounted in an electronic device such as a display device including a backlight constituted only by visible light sources, the image display region can be irradiated with light for detection of the indicated coordinate without changing a configuration of the backlight.

Further, it is preferable that the coordinate sensor further includes a light source that emits light into the image display region of the image display member, the light source being provided so as to face a surface of the image display member which surface is opposite to the image display surface and to irradiate the image display region with light from behind the image display member.

According to the arrangement, it is possible to increase an irradiation intensity of light for detection of the indicated coordinate which enters the image display region, thereby improving detection sensitivity. This arrangement is also suitable for a large-sized image display surface.

Further, in order to attain the above object, the coordinate sensor of the present invention may be for example arranged such that each of the light path changing sections is provided on the image display member and causes light that travels over the image display region along the image display surface to be guided to a light-receiving surface of a corresponding one of said at least two line sensors.

That is, in order to attain the above object, a coordinate sensor of the present invention which causes light-receiving elements to receive light that travels over an image display region of an image display member and which detects, based on a difference in amount of light received by the light-receiving elements, an indicated coordinate, on the image display region, that is indicated by an object to be detected, may include: at least two line sensors including a line sensor having light-receiving elements disposed in an x-axis direction and a line sensor having light-receiving elements disposed in a y-axis direction; and light path changing sections that are paired with the respective line sensors and that are disposed, outside the image display region, on the image display member in the x-axis direction and the y-axis direction, the light path changing sections changing a light path of the light that has entered the light path changing sections, said at least two line sensors being disposed outside the image display region and having light-receiving surfaces parallel to an image display surface of the image display member, and the light path changing sections each guiding the light that has entered the light path changing sections after traveling over the image display region to a light-receiving surface of a corresponding one of said at least two line sensors.

Also in this coordinate sensor, the line sensors that are disposed in the x-axis direction and the y-axis direction are provided, outside the image display region, on the image display member. Since there is no light-receiving element in the image display region, displaying and sensing (detection of the coordinate indicated by the object to be detected) are carried out independently of each other. As such, the coordinate sensor of the present invention does not cause problems such as a reduction in aperture ratio and restriction on operation speed unlike a conventional two-dimensional sensor array display device with a built-in coordinate sensor.

Further, since the coordinate sensor includes the light path changing sections, the line sensors can be provided outside the image display region so that the light-receiving surfaces are parallel to the image display surface. That is, even in a case where the line sensors are disposed as above, each of the light path changing sections can cause light that has passed through the image display region to be guided to a light-receiving surface of a corresponding one of the line sensors.

According to the arrangement, the line sensors are disposed so that the light-receiving surfaces are parallel to the image display surface. Accordingly, the line sensors and wiring and circuits necessary for the line sensors can be formed on a surface on which other circuits in the image display region are formed, concurrently with the formation of these circuits, for example. Further, detection lines and circuits necessary for processing of a detection signal can be formed corresponding to the respective line sensors in the x-axis and y-axis directions. As a result, the coordinate sensor allows for easy alignment with a simple arrangement. According to the arrangement, the line sensors are disposed so that the light-receiving surfaces are parallel to the image display surface. This allows the coordinate sensor to have a reduced thickness, and allows the line sensors to be provided along a periphery of an image display region (display screen) of a thin substrate. As a result, the coordinate sensor can be used without any restriction. Consequently, according to the arrangement, a thin coordinate sensor which allows for easy alignment with no reduction in aperture ratio and no restriction in operation speed can be realized at low cost.

Also in the above arrangement, the line sensors can be disposed in an originally existing non-image display region outside the image display region of the image display member. This can prevent a region other than the image display region from becoming large, thereby preventing the image display member from unintendedly (unnecessarily) becoming large.

The light path changing sections may be arranged to cause light that travels parallel to the x-axis direction and the y-axis direction along the image display surface to be guided to a light-receiving surface of a corresponding one of said at least two line sensors or may be arranged to cause light that radially travels along the image display surface within a plane parallel to the image display surface to be guided to a light-receiving surface of a corresponding one of said at least two line sensors.

In a case where the light path changing sections guide light that travels parallel to the x-axis direction and y-axis direction along the image display surface, coordinate calculation is simple, and accuracy of coordinate detection and detection resolution do not depend on a touched position. Moreover, it is only necessary that the line sensors be provided along two sides of the image display region.

Meanwhile, in a case where the light path changing sections guide light that radially travels within a plane parallel to the display screen along the image display surface, a configuration of a light source section can be made simple.

Further, the coordinate sensor may be arranged such that said at least two line sensors include line sensors disposed in parallel in the x-axis direction and line sensors disposed in parallel in the y-axis direction, and said at least two line sensors receive light that enters the light path changing sections from above the image display region.

According to the arrangement, a coordinate position of an object to be detected such as a finger can be detected just by bringing the object to be detected close to the image display region.

The coordinate sensor may further include light sources that are provided, outside the image display region, on the image display member, the light sources emitting light that travels over the image display region or may further include a light guide member that is provided, outside the image display region, on the image display member so as to face the light path changing sections across the image display region in plan view; and a light source that emits light into the light guide members.

According to the arrangements, light can be caused to travel over the image display region and to enter the light path changing sections directly or by reflection (diffusion/reflection) by the object to be detected.

According to the arrangements, it is unnecessary to irradiate the image display region with light from behind the image display member. This makes it possible to detect a coordinate indicated by the object to be detected even if the image display member is a reflective liquid crystal display device, an electronic paper, each of which does not transmit light, or a medium (fixed display medium), such as a plastic material or paper (printed material), which hardly transmit light.

Further, according to the arrangements, in a case where the coordinate sensor is mounted in an electronic device such as a display device including a backlight constituted only by visible light sources, the image display region can be irradiated with light for detection of the indicated coordinate without changing a configuration of the backlight.

Especially in the latter case, i.e., in a case where the coordinate sensor includes the light guide member, light can be propagated in the x-axis direction and y-axis direction in the image display region. That is, it is unnecessary to dispose a plurality of light sources in the x-axis direction and y-axis direction of the image display region. This allows a reduction in the number of light sources, as compared to a case where the coordinate sensor does not include the light guide plate. As a result, it is possible to suppress power consumption, as compared to the case where the coordinate sensor does not include the light guide plate.

Further, it is preferable that the light sources are provided so as to face respective corner sections of the image display region.

Also in this case, it is possible to reduce the number of light sources, as compared to a case where a plurality of light sources are disposed in the x-axis direction and y-axis direction of the image display region, thereby allowing a reduction in power consumption.

Further, in a case where an indicated coordinate, on the image display region, that is indicated by an object to be detected is detected by receiving light that travels over the image display region of the image display member as described above, it is preferable that the light path changing sections and said at least two line sensors are provided along sides of the image display region so as to surround the image display region, and the light sources are provided so as to face the respective corner sections of the image display region.

According to the arrangement, it is possible to compare a signal of a line sensor and a signal of another line sensor facing the line sensor. This makes it possible to improve accuracy of coordinate detection and to reduce incorrect detection due to external light (stray light). Further, according to the arrangement, it is possible to reduce mutual interference (interference caused by shadow in illumination light) occurs in a case where plural portions of the image display surface of the image display member are touched at the same time by the object to be detected (multi-touch).

Further, in a case where the coordinate sensor includes a light guide member that is provided, outside the image display region, on the image display member so as to face the light path changing sections across the image display region in plan view; and a light source that emits light into the light guide members as described above, it is more preferable that the light guide member has an extension that protrudes outside the image display member in a planar direction, the light source is provided below the extension of the light guide member, and the coordinate sensor further includes a collimating section that converts the light that enters the light guide member from the light source into light parallel to the image display surface of the image display member.

According to the arrangement, the coordinate sensor includes the collimating section and the light guide member. This allows the light source to be provided below the extension of the light guide member as described above. Normally, lead wires etc. are provided behind the line sensors. According to the arrangement, the lead wires do not protrude in a planar direction. This allows a reduction in size of the coordinate sensor.

Further, the coordinate sensor may further include: a light guide member that is provided on the image display member; and a light source that is disposed so as to face a corner section of the light guide member and that emits light into the light guide member, the light path changing sections being provided, outside the image display region, on the light guide member so as to be located along two sides of the light guide member that sandwich the corner section which faces the light source, the light guide member having end portions each having a two-layer structure outside the image display region, which end portions form two sides that face, in plan view, the two sides along which the light path changing sections are provided, the two-layer structure (i) being constituted by an upper layer and a lower layer each having an end surface having a light reflecting surface and (ii) causing light to be guided from the lower layer to the upper layer and to be outputted from the upper layer, and the light path changing sections each guiding, to a light-receiving surface of a corresponding one of said at least two line sensors, the light that is outputted from the upper layer of the light guide member facing the light path changing section and that travels over the image display region.

Also according to the arrangement, light can be caused to travel over the image display region and to enter the light path changing sections directly or by reflection (diffusion/reflection) by the object to be detected. Further, the coordinate indicated by the object to be detected can be detected even if the image display member is a reflective liquid crystal display device, an electronic paper, each of which does not transmit light, or a medium (fixed display medium), such as a plastic material or paper (printed material), which hardly transmit light.

Further, also according to the arrangement, in a case where the coordinate sensor is mounted in an electronic device such as a display device including a backlight constituted only by visible light sources, the image display region can be irradiated with light for detection of the indicated coordinate without changing a configuration of the backlight.

Further, according to the arrangement, the coordinate sensor includes the light guide member. This allows the light to propagate in the x-axis direction and y-axis direction in the image display region. This allows a reduction in the number of light sources and a reduction in power consumption, as compared to a case where the coordinate sensor does not include the light guide plate.

Further, in this case, it is preferable that the light guide member has an extended side that protrudes outside the image display member in a planar direction, and the light source is provided below the extended side of the light guide member, the coordinate sensor further comprising a collimating section that converts the light that enters the light guide member from the light source into light parallel to the image display surface of the image display member.

According to the arrangement, the coordinate sensor includes the collimating section and the light guide member. This allows the light source to be provided below the extension of the light guide member as described above. Normally, lead wires etc. are provided behind the line sensors as described above. According to the arrangement, the lead wires do not protrude in a planar direction. This allows a reduction in size of the coordinate sensor.

Further, the coordinate sensor may be arranged such that the light path changing sections each have a curved or tilted end surface, and causes the light that travels over the image display region to be reflected by the curved or tilted end surface so that the light is outputted.

According to the arrangement, the light path changing sections each have a curved or tilted end surface. This allows light that enters the light path changing sections to be easily guided to the light-receiving surfaces of the line sensors.

Further, in a case where the light path changing sections each have a curved or tilted end surface, it is more preferable that convex lenses are provided between the light path changing sections and said at least two line sensors.

According to the arrangement, light reflected by the curved or tilted end surface can be efficiently focused on the line sensors.

Further, it is preferable that light output surfaces of the light path changing sections have recessed parts, and convex lenses are provided so as to fill the recessed parts.

According to the arrangement, the convex lenses are formed in the recessed parts. Accordingly, the convex lenses do not protrude outside the light output surfaces of the light path changing sections. Consequently, according to the arrangement, the coordinate sensor can be made thinner as compared to a case where the recessed parts are not formed.

Further, in a case where each of the light path changing sections cause light that travels in the x-axis direction and y-axis direction along the image display surface to be guided to a light-receiving surface of a corresponding one of the line sensors, it is preferable that axisymmetrical convex lenses are provided on light output surface of the light path changing sections.

According to the arrangement, light that travels parallel to the x-axis direction and y-axis direction along the image display surface can be efficiently focused on the line sensors, and light that enters the light path changing sections at an angle larger than a predetermined angle with respect to the x-axis direction and y-axis direction can be prevented from entering the light-receiving sections of the line sensors.

Meanwhile, in a case where each of the light path changing sections causes light that radially travels along the image display surface within a plane parallel to the display screen to be guided to a light-receiving surface of a corresponding one of the line sensors, it is preferable that convex lenses that are cylindrical lenses are provided on light output surfaces of the light path changing sections.

According to the arrangement, a light-receiving angle is restricted as for light which enters the light path changing sections at an angle of elevation with respect to a display screen although a light-receiving angle is not restricted as for light that is parallel to the display screen.

Further, it is preferable that the light source(s) include(s) an infrared light source that emits infrared light.

Infrared light passes through a liquid crystal display element regardless of a display state (visible light transmittance) of the liquid crystal display element. With the arrangement, it is therefore possible to prevent a problem that a sufficient amount of light for coordinate detection cannot be obtained in a case where a display screen is dark. On this account, it is especially preferable that an infrared light source is used as a light source for detection of the indicated coordinate.

An electronic device of the present invention includes the coordinate sensor. A display device of the present invention includes the coordinate sensor, in which the image display member is an electronic display panel.

According to the arrangements, the electronic device and the display device each includes the coordinate sensor. Consequently, thin electronic device and display device each of which allows for easy alignment with no reduction in aperture ratio and no restriction on operation speed can be realized at low cost.

In order to attain the above object, a display device with a built-in coordinate sensor of the present invention which includes an electronic display panel including an array substrate, the display device detecting, based on a difference in amount of light received by light-receiving elements, an indicated coordinate, on an image display region of the electronic display panel, that is indicated by an object to be detected, includes: at least two line sensors including a line sensor having light-receiving elements disposed in an x-axis direction and a line sensor having light-receiving elements disposed in a y-axis direction; and light path changing sections that are paired with the respective line sensors and that are disposed outside the image display region in the x-axis direction and the y-axis direction, the light path changing sections changing a light path of light that enters the light path changing sections, said at least two line sensors being provided, outside the image display region, on a circuit formation surface of the array substrate and having light-receiving surfaces parallel to an image display surface of the electronic display panel, and the light path changing sections each guiding the light that enters the light path changing sections to a light-receiving surface of a corresponding one of said at least two line sensors.

For example, in order to attain the above object, a display device of the present invention with a built-in coordinate sensor which includes an electronic display panel including an array substrate, the display device causing light-receiving elements to receive light that has passed through an image display region of the electronic display panel and detecting, based on a difference in amount of light received by the light-receiving elements, an indicated coordinate, on the image display region, that is indicated by an object to be detected, includes: at least two line sensors including a line sensor having light-receiving elements disposed in an x-axis direction and a line sensor having light-receiving elements disposed in a y-axis direction; and light path changing sections that are paired with the respective line sensors and that are disposed in the x-axis direction and the y-axis direction, the light path changing sections changing a light path of the light that has passed through the image display region, said at least two line sensors being provided, outside the image display region, on a circuit formation surface of the array substrate and having light-receiving surfaces parallel to an image display surface of the electronic display panel, and the light path changing sections each guiding the light that has passed through the image display region to a light-receiving surface of a corresponding one of said at least two line sensors.

An example of such a display device is a liquid crystal display device with a built-in coordinate sensor which includes a liquid crystal panel including an array substrate, a counter substrate, and a liquid crystal layer sandwiched between the array substrate and the counter substrate, the liquid crystal display device detecting, based on a difference in amount of light received by light-receiving elements, an indicated coordinate, on an image display region of the liquid crystal panel, that is indicated by an object to be detected, includes: at least two line sensors including a line sensor having light-receiving elements disposed in an x-axis direction and a line sensor having light-receiving elements disposed in a y-axis direction; and light path changing sections that are paired with the respective line sensors and that are disposed outside the image display region in the x-axis direction and the y-axis direction, the light path changing sections changing a light path of light that enters the light path changing sections, said at least two line sensors being provided, outside the image display region, on a circuit formation surface of the array substrate and having light-receiving surfaces parallel to an image display surface of the liquid crystal panel, and the light path changing sections each guiding the light that enters the light path changing sections to a light-receiving surface of a corresponding one of said at least two line sensors. Another example of such a display device is a liquid crystal display device with a built-in coordinate sensor which includes a liquid crystal panel including an array substrate, a counter substrate, and a liquid crystal layer sandwiched between the array substrate and the counter substrate, the display device causing light-receiving elements to receive light that has passed through an image display region of the liquid crystal panel and detecting, based on a difference in amount of light received by the light-receiving elements, an indicated coordinate, on the image display region, that is indicated by an object to be detected, includes: at least two line sensors including a line sensor having light-receiving elements disposed in an x-axis direction and a line sensor having light-receiving elements disposed in a y-axis direction; and light path changing sections that are paired with the respective line sensors and that are disposed in the x-axis direction and the y-axis direction, the light path changing sections changing a light path of the light that has passed through the image display region, said at least two line sensors being provided, outside the image display region, on a circuit formation surface of the array substrate and having light-receiving surfaces parallel to an image display surface of the liquid crystal panel, and the light path changing sections each guiding the light that has passed through the image display region to a light-receiving surface of a corresponding one of said at least two line sensors.

According to the arrangement, the line sensors which are disposed in the x-axis direction and y-axis direction are provided, outside the image display region, on the image display member as described above. Accordingly, displaying and sensing (detection of the coordinate indicated by the object to be detected) are carried out independently of each other. As such, the display device of the present invention does not cause problems such as a reduction in aperture ratio and restriction on operation speed unlike a conventional coordinate sensor with a two-dimensional sensor array.

Further, since the display device includes the light path changing sections, the line sensors can be provided outside the image display region so that the light-receiving surfaces are parallel to the image display surface, thereby allowing light that has entered the light path changing sections to be guided to the light-receiving surfaces of the corresponding line sensors.

Further, according to the arrangement, the line sensors are disposed, outside the image display region, on the circuit formation surface of the array substrate so that the light-receiving surfaces are parallel to the image display surface. Accordingly, the line sensors and wiring and circuits necessary for the line sensors can be formed on the surface on which other circuits in the image display region of the array substrate are formed, concurrently with the formation of these circuits. Further, detection lines and circuits necessary for processing of a detection signal can be formed corresponding to the respective line sensors in the x-axis and y-axis directions. As a result, the display device allows for easy alignment with a simple arrangement. Further, according to the arrangement, the line sensors can be provided along a periphery of the image display region (display screen) of the counter substrate of the electronic display panel. This allows a reduction in thickness of the display device, and the display device can be used without any restriction. Consequently, according to the arrangement, a thin display device with a built-in coordinate sensor which display device allows for easy alignment with no reduction in aperture ratio and no restriction in operation speed can be realized at low cost.

Further, the display device of the present invention may be arranged such that the electronic display panel includes a counter substrate that is disposed so as to face the array substrate, and the line sensors are provided (i) outside sealing region formed between the array substrate and the counter substrate, (ii) in the sealing regions formed between the array substrate and the counter substrate or (iii) in regions (hereinafter referred to as "inside the sealing regions") between a display region and the sealing regions that are formed between the array substrate and the counter substrate.

In any of the above arrangements, the line sensors can be easily provided, outside the image display region, on the array substrate, and the electronic display panel can be prevented from unnecessarily becoming large.

In a case where the line sensors are provided in the sealing regions as described above, it is possible to save spaces for the line sensors, unlike the case where the line sensors are provided outside or inside the sealing regions. Meanwhile, in a case where the line sensors are provided inside or outside the sealing regions as described above, no stress is applied to the line sensors unlike the case where the line sensors are provided in the sealing regions although there is a disadvantage in terms of the spaces as compared to the case where the line sensors are provided in the sealing regions.

It is preferable that the display device is arranged such that the counter substrate is a light guide member, and causes light that enters the image display region to propagate in the x-axis direction and the y-axis direction in the image display region and to be guided to the light path changing sections.

According to the arrangement, the counter substrate can be used also as a light guide plate for detection of the coordinate indicated by the object to be detected. This makes it possible to realize a display device with a built-in coordinate sensor which requires a small number of components.

Further, the display device may further include a light guide member that is provided on the electronic display panel so as to be located at least in the image display region, the light guide member causing light that enters the image display region to propagate in the x-axis direction and the y-axis direction in the image display region and to be guided to the light path changing sections.

For example, a cover plate provided on the electronic display panel can be used as such a light guide member. In any case, since the display device includes the light guide member, light can be propagated in the x-axis direction and y-axis direction in the image display region, and be guided to the light path changing sections. This allows an improvement in flexibility in disposing light sources for emitting light into the image display region. Further, in a case where the light sources are disposed in a certain manner, the coordinate indicated by the object to be detected can be detected just by bringing the object to be detected close to the light guide member.

Further, it is preferable that the display device further includes light sources that are provided so as to face end surfaces of the light guide member that face the light path changing sections across the image display region in the x-axis direction and the y-axis direction or provided so as to face respective corner sections of the light guide member, the light source emitting light into the image display region.

According to the arrangement, the image display region can be irradiated with light for detection of the indicated coordinate without changing a configuration of the backlight.

Further, the display device may further include a backlight that irradiates the electronic display panel with light, the backlight serving as both of (i) a light source for display and (ii) a light source that emits light into the image display region so that the indicated coordinate indicated by the object is detected.

According to the arrangement, it is possible to increase an irradiation intensity of light for detection of the indicated coordinate which enters the image display region from the backlight, thereby improving detection sensitivity. This arrangement is also suitable for a large-sized image display surface.

In order to attain the above object, a light-receiving unit of the present invention which receives light that has passed through an image display region of an image display member, includes: a line sensor that is disposed, outside the image display region, on the image display member and that has a plurality of light-receiving elements which are disposed in a one-dimensional array and which have respective light-receiving surfaces parallel to an image display surface of the image display member; and a light path changing section that changes a light path of the light that has passed through the image display region of the image display member so that the light is guided to the light-receiving surfaces of the line sensor.

In order to attain the above object, a light-receiving unit of the present invention which receives light that travels over an image display region of an image display member, includes: a light source that emits the light that travels over the image display region; a line sensor that is disposed, outside the image display region, on the image display member and that includes a plurality of light-receiving elements which are disposed in a one-dimensional array and which have respective light-receiving surfaces parallel to an image display surface of the image display member; and a light path changing section that changes a light path of the light that travels over the image display region of the image display member so that the light is guided to the light-receiving surfaces of the line sensor.

According to the arrangements, the light-receiving unit includes the light path changing section. This allows light that has passed through the image display region to be guided to the light-receiving surfaces of the line sensor even in a case where the line sensor is provided outside the image display region so that the light-receiving surfaces are parallel to the image display surface as described above.

Further, according to the arrangements, the line sensor is disposed so that the light-receiving surfaces are parallel to the image display surface. Accordingly, the line sensor and wiring and circuits necessary for the line sensor can be formed on a surface on which other circuits in the image display region are formed, concurrently with the formation of these circuits, for example.

Further, the line sensor is disposed so that the light-receiving surfaces are parallel to the image display surface. This allows the light-receiving unit to have a reduced thickness, and allows the line sensor to be provided so as to face a side surface of a thin substrate. Accordingly, the light-receiving unit can used without any restriction. Consequently, according to the arrangements, it is possible to provide a light-receiving unit that can be suitably applied to the coordinate sensor. Further, the light-receiving unit itself can be used as a coordinate sensor which detects an indicated coordinate in the x-axis direction or an indicated coordinate in the y-axis direction in a case where display (e.g., disposition of selection buttons) of the image display surface of the image display member does not require detection of both of the coordinate in the x-axis direction and the coordinate in the y-axis direction.

As described above, a coordinate sensor, an electronic device including the coordinate sensor, a display device including the coordinate sensor, and a display device with an integrated coordinate sensor of the present invention each include at least two line sensors which are disposed, outside an image display region, on an image display member and which have light-receiving surfaces parallel to an image display surface of the image display member; and light path changing sections which change a light path of light that has entered the light path changing sections, the line sensors and the light path changing sections being disposed in x-axis direction and y-axis direction, and the light path changing sections each guiding the light that has entered the light path changing sections to a light-receiving surface of a corresponding one of the line sensors.

Accordingly, problems such as a reduction in aperture ratio and restriction on operation speed do not arise. Further, each of these devices allows for easy alignment with a simple arrangement. Furthermore, each of these devices can has a reduced thickness, and the line sensors can be provided so as to face side surfaces of a thin substrate. Accordingly, each of these devices can be used without any restriction. Consequently, according to the present invention, a thin coordinate sensor which allows for easy alignment with no reduction in aperture ratio and no restriction on operation speed can be realized at low cost.

Further, as described above, the light-receiving unit of the present invention includes: a line sensor that is disposed, outside the image display region, on the image display member and that has s light-receiving surface parallel to an image display surface of the image display member; and a light path changing section that changes a light path of the light that has passed through the image display region of the image display member so that the light is guided to the light-receiving surface of the line sensor. Alternatively, as described above, the light-receiving unit of the present invention includes: a light source that emits the light that travels over the image display region; a line sensor that is disposed, outside the image display region, on the image display member and that has a light-receiving surface parallel

**EP 2 336 859 A1**

to an image display surface of the image display member; and a light path changing section that changes a light path of the light that travels over the image display region of the image display member so that the light is guided to the light-receiving surface of the line sensor.

With the arrangements, even in a case where the line sensor is provided outside the image display region so that the light-receiving surface is parallel to the image display surface as described above, light that passes through or travels over the image display region can be focused on the light-receiving surface of the line sensor. Further, since the line sensor is disposed so that the light-receiving surface is parallel to the image display surface, the line sensor and wiring and circuits necessary for the line sensor can be formed on a surface on which other circuits in the image display region are formed, concurrently with the formation of these circuits, for example. Further, since the line sensor is provided so that the light-receiving surface is parallel to the image display surface, the light-receiving unit can be reduced in thickness, and the line sensor can be provided so as to face a side surface of a thin substrate. Accordingly, the light-receiving unit can be used without any restriction. Consequently, according to the arrangements, it is possible to provide a light-receiving unit that can be suitably applied to the coordinate sensor. Further, the light-receiving unit itself can be used as a coordinate sensor which detects an indicated coordinate in an x-axis direction or an indicated coordinate in a y-axis direction in a case where it is unnecessary to detect both of the coordinate in the x-axis direction and the coordinate in the y-axis direction.

Brief Description of Drawings

Fig. 1

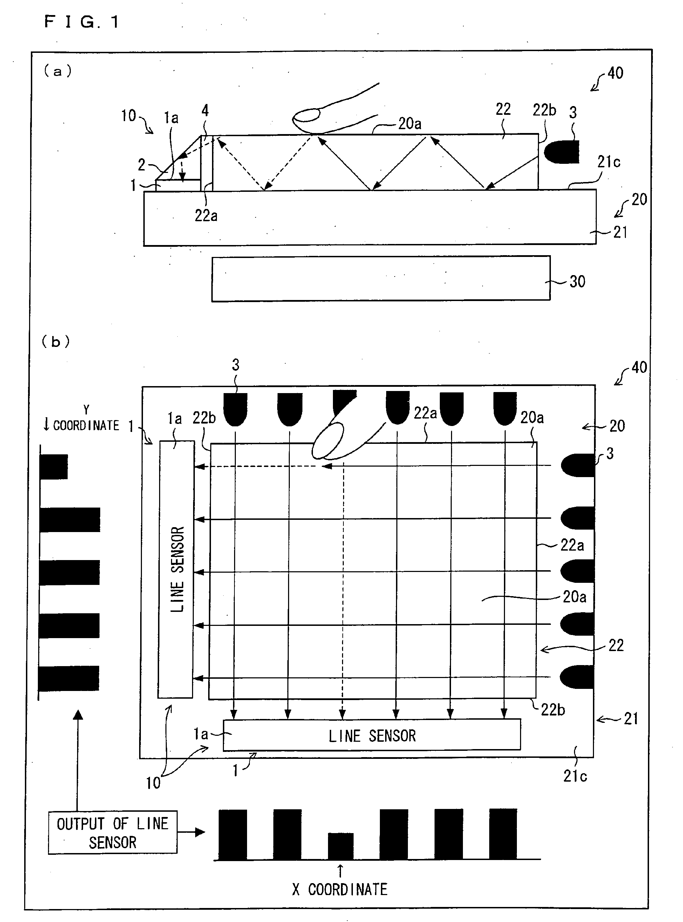

(a) of Fig. 1 is a cross-sectional view schematically illustrating an outline configuration of a substantial part of a liquid crystal display device of Embodiment 1 of the present invention, and (b) of Fig. 1 is a plan view schematically illustrating, along with outputs of line sensors, (i) the outline configuration of the substantial part of the liquid crystal display device shown in (a) of Fig. 1 and (ii) how a coordinate is detected in the liquid crystal display device.

Fig. 2

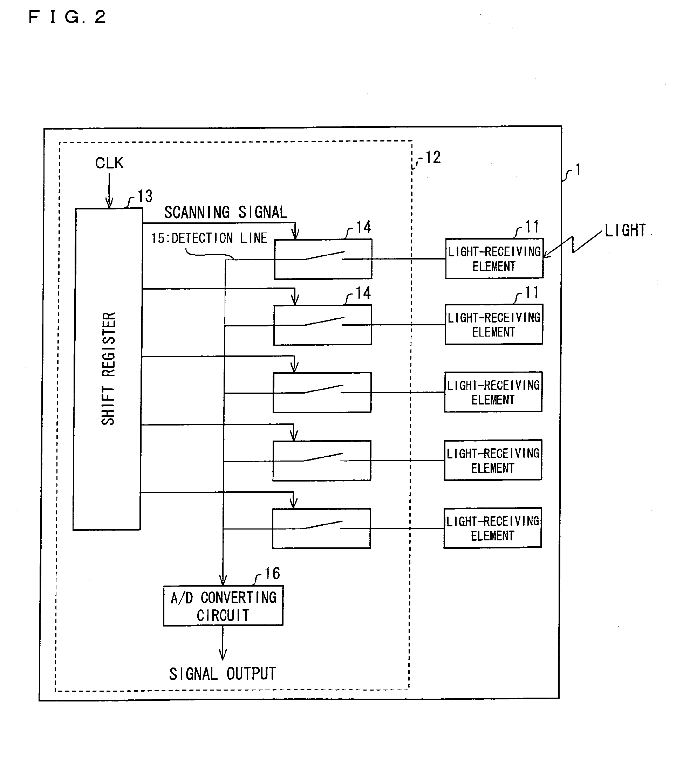

Fig. 2 is a block diagram illustrating an outline configuration of each of the line sensors shown in (a) and (b) of Fig. 1.
Fig. 3

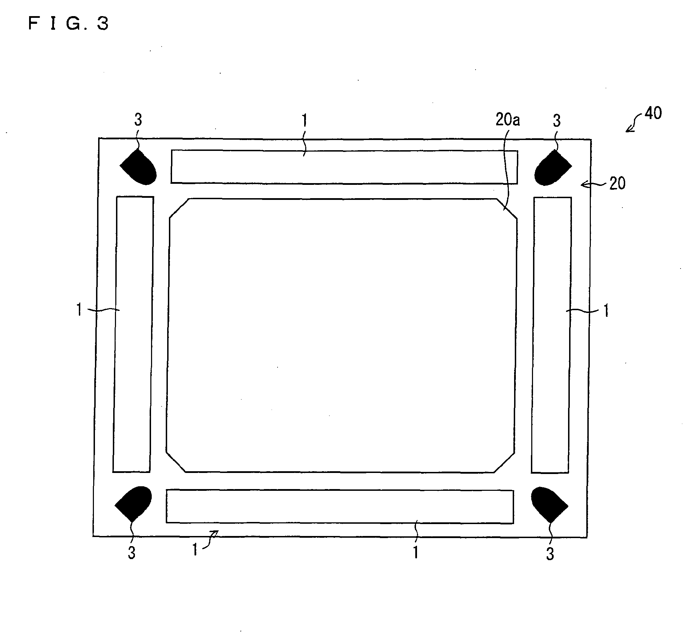

Fig. 3 is a cross-sectional view illustrating a modification of the liquid crystal display device shown in Fig. 1.
Fig. 4

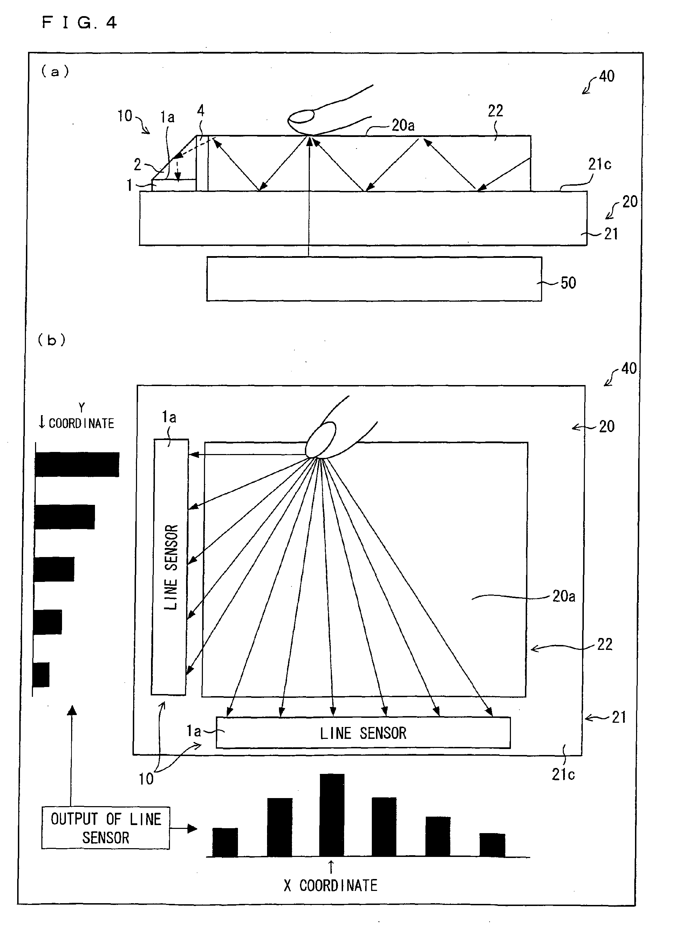

(a) of Fig. 4 is a cross-sectional view schematically illustrating an outline configuration of a substantial part of a liquid crystal display device of Embodiment 2 of the present invention, and (b) of Fig. 4 is a plan view schematically illustrating, along with outputs of line sensors, (i) the outline configuration of the substantial part of the liquid crystal display device shown in (a) of Fig. 4 and (ii) how a coordinate is detected in the liquid crystal display device.

Fig. 5

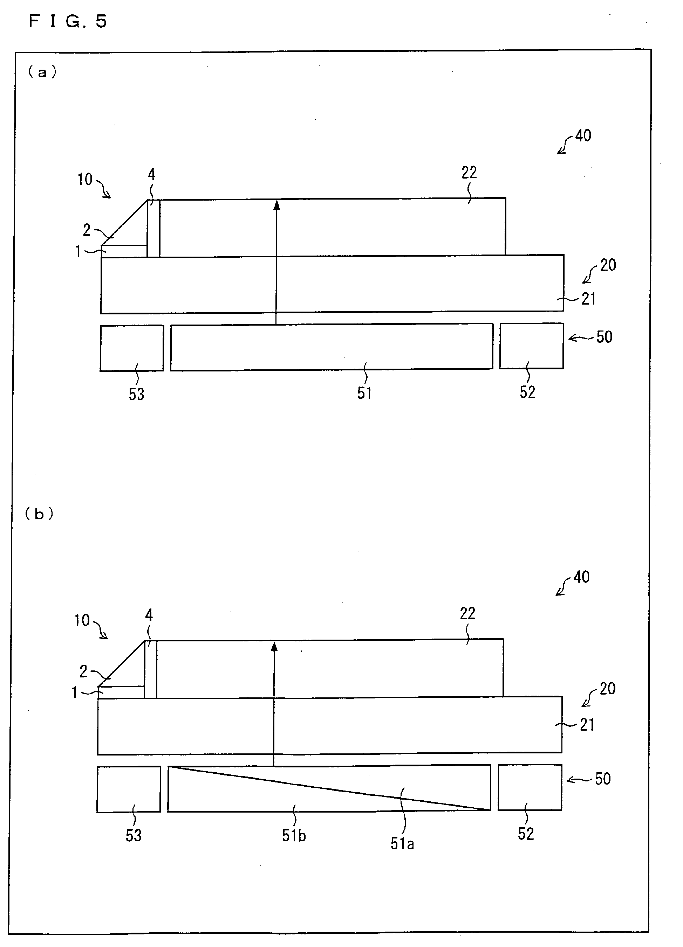

(a) and (b) of Fig. 5 are cross-sectional views each illustrating an example of a backlight that emits infrared light.

Fig. 6

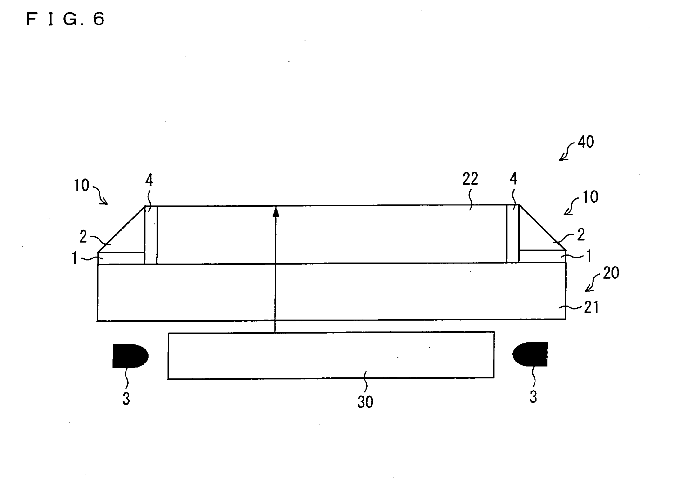

Fig. 6 is a cross-sectional view illustrating a modification of the liquid crystal display device of Embodiment 2 of the present invention.
Fig. 7

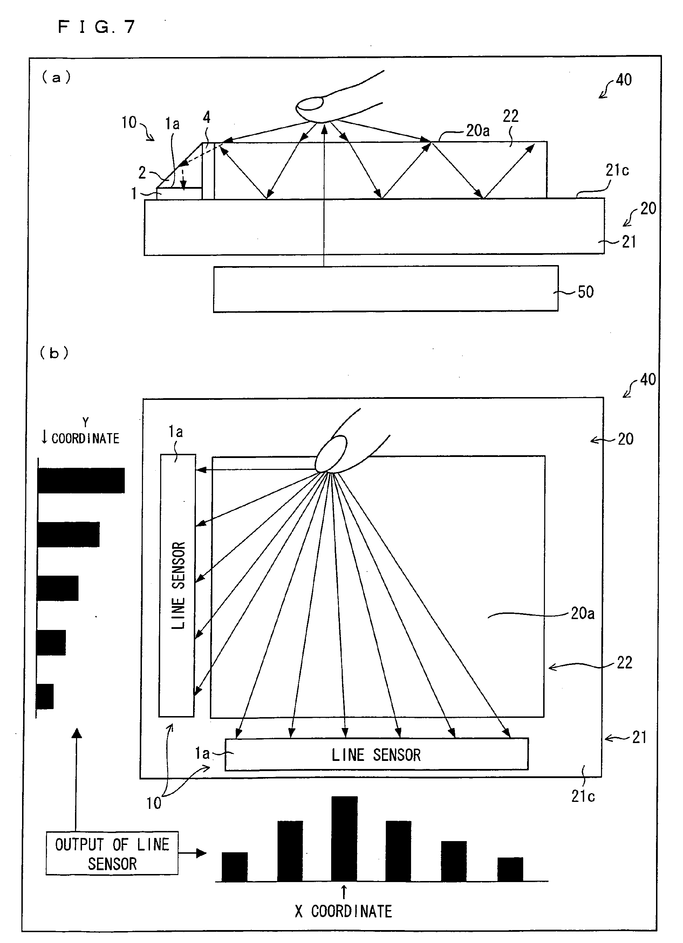

(a) of Fig. 7 is a cross-sectional view schematically illustrating (i) an outline configuration of a substantial part of a liquid crystal display device of Embodiment 2 of the present invention and how a coordinate is detected in a non-contact mode, and (b) of Fig. 7 is a plan view schematically illustrating (i) the outline configuration of the substantial part of the liquid crystal display device shown in (a) of Fig. 7 and (ii) how a coordinate is detected in the non-contact mode.

Fig. 8

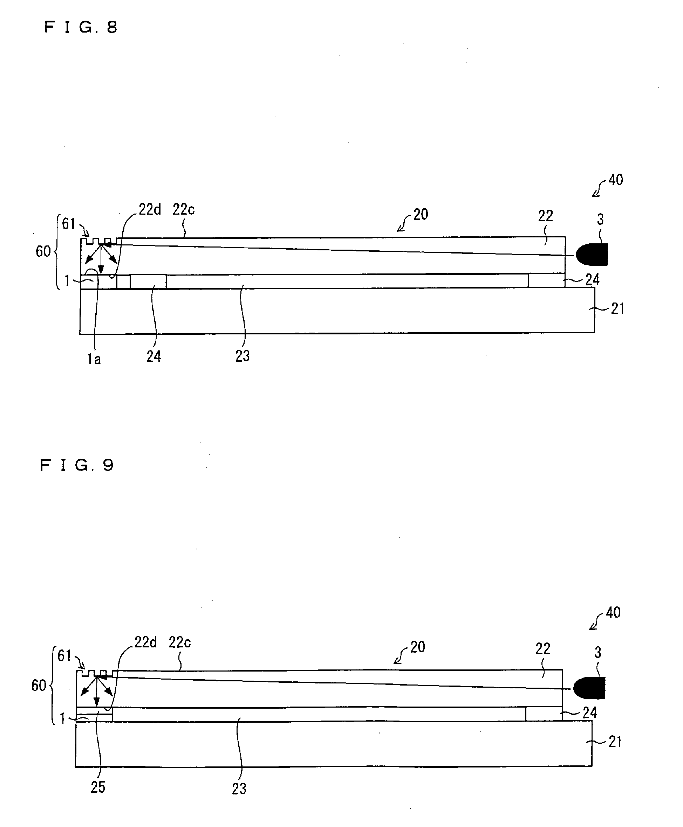

Fig. 8 is a cross-sectional view schematically illustrating an outline configuration of a substantial part of a liquid crystal display device of Embodiment 3 of the present invention.
Fig. 9
Fig. 9 is a cross-sectional view schematically illustrating an outline configuration of a substantial part of a liquid crystal display device of Embodiment 4 of the present invention.
Fig. 10

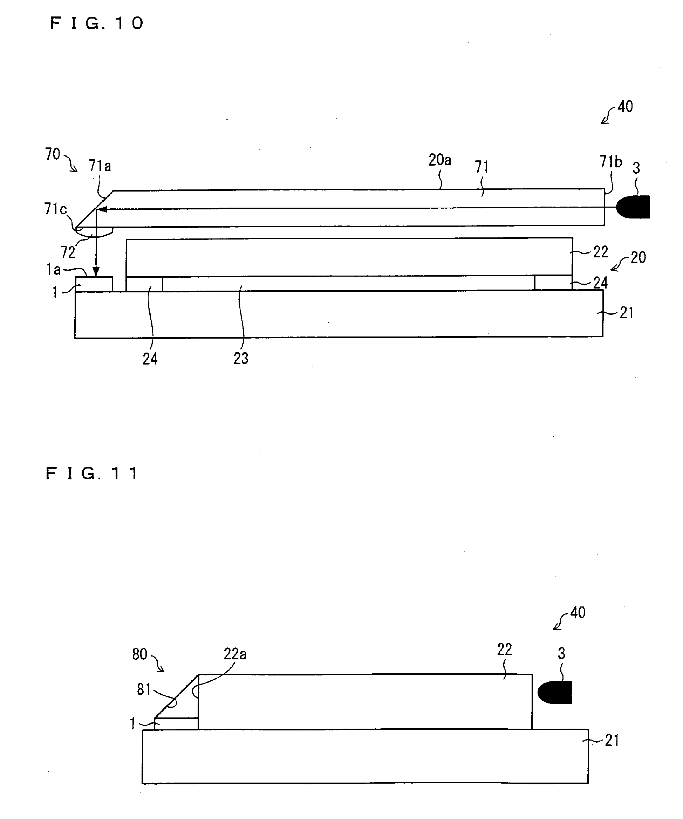

Fig. 10 is a cross-sectional view schematically illustrating an outline configuration of a substantial part of a liquid crystal display device of Embodiment 5 of the present invention.
Fig. 11
Fig. 11 is a cross-sectional view illustrating a modification of a liquid crystal display device including 45° mirror as light path changing means.
Fig. 12

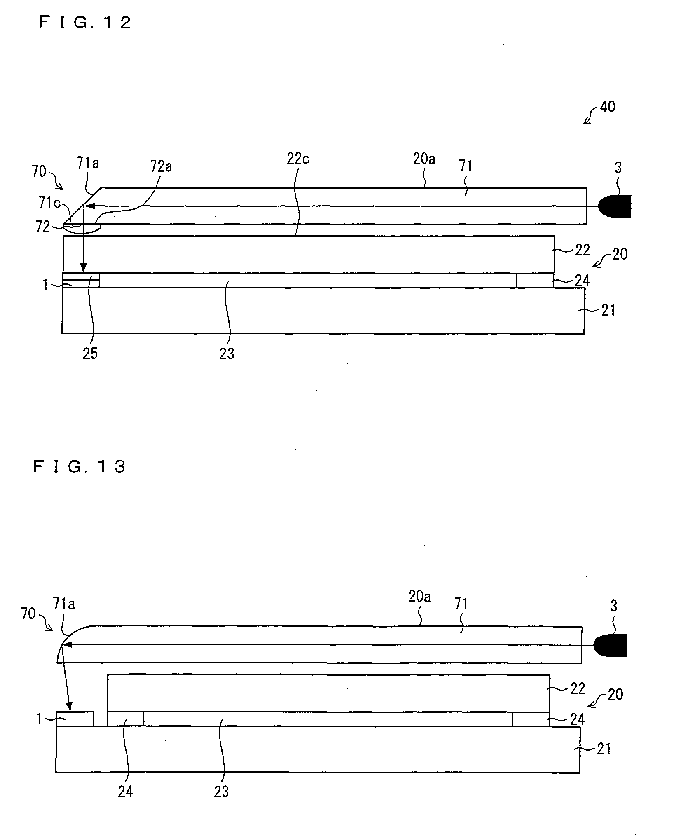

Fig. 12 is a cross-sectional view schematically illustrating an outline configuration of a substantial part of a liquid crystal display device of Embodiment 6 of the present invention.
Fig. 13
Fig. 13 is a cross-sectional view schematically illustrating an outline configuration of a substantial part of a liquid crystal display device of Embodiment 7 of the present invention.
Fig. 14

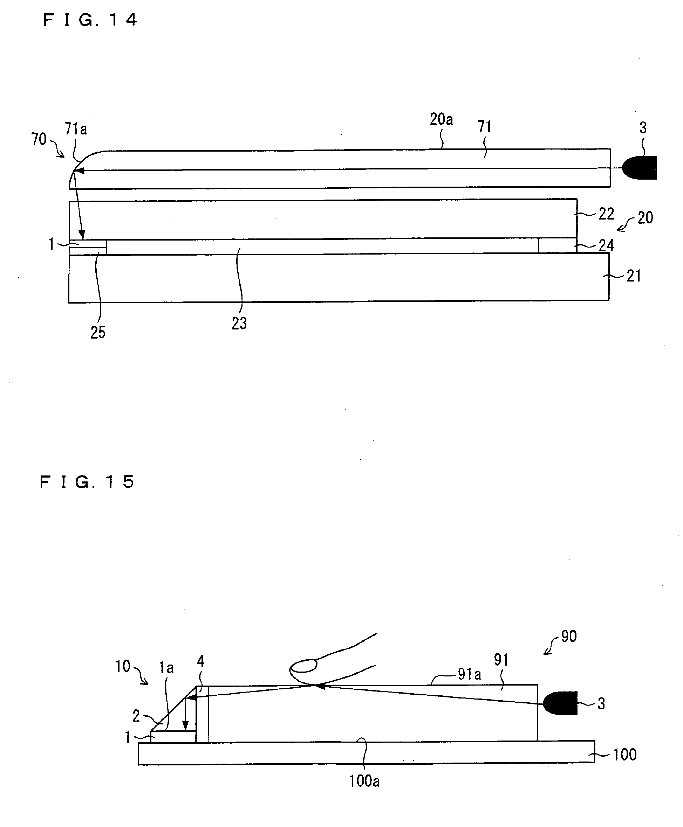

Fig. 14 is a cross-sectional view schematically illustrating an outline configuration of a substantial part of a liquid crystal display device of Embodiment 7 of the present invention.
Fig. 15
Fig. 15 is a cross-sectional view schematically illustrating an outline configuration of a substantial part of a coordinate sensor of Embodiment 8 of the present invention.
Fig. 16

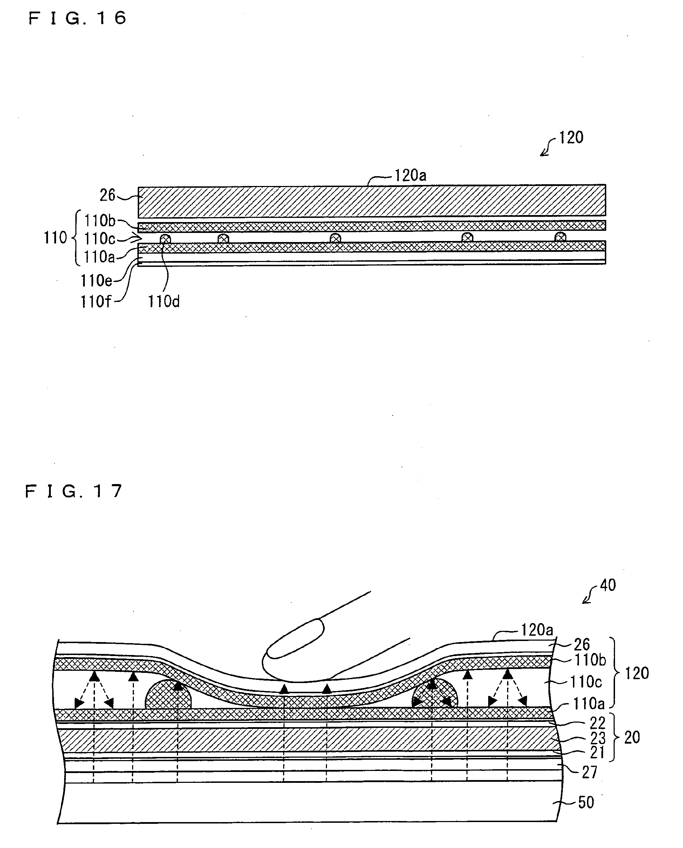

Fig. 16 is a cross-sectional view illustrating an outline configuration of a coordinate input section of Embodiment 9 including a reflectance changing section.
Fig. 17
Fig. 17 is a view illustrating an outline configuration of a substantial part of a liquid crystal display device including the coordinate input section shown in Fig. 16.
Fig. 18

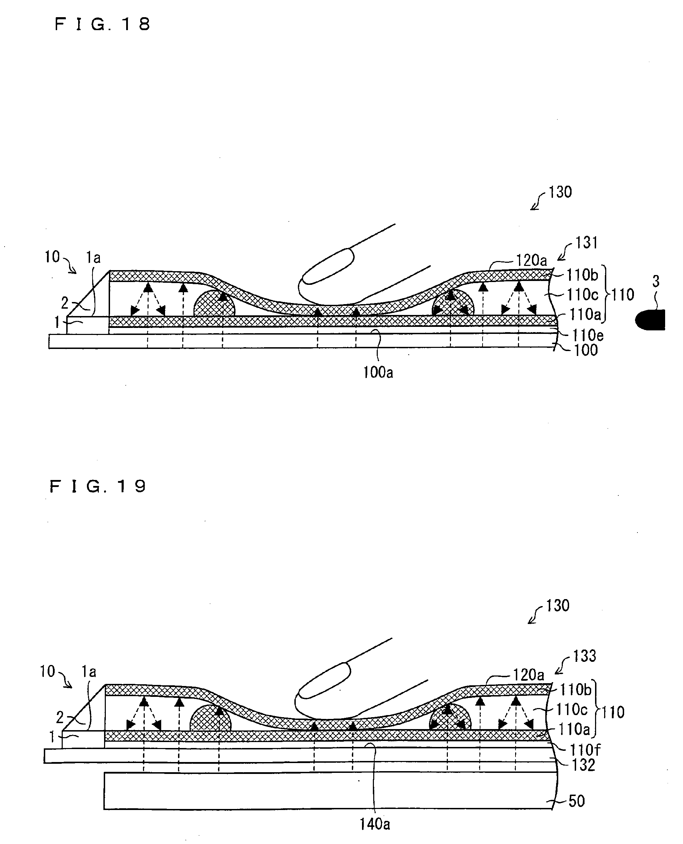

Fig. 18 is a cross-sectional view schematically illustrating an outline configuration of a substantial part of a coordinate sensor of Embodiment 9 of the present invention.
Fig. 19
Fig. 19 is a cross-sectional view illustrating a modification of a coordinate input section including a reflectance changing section.
Fig. 20

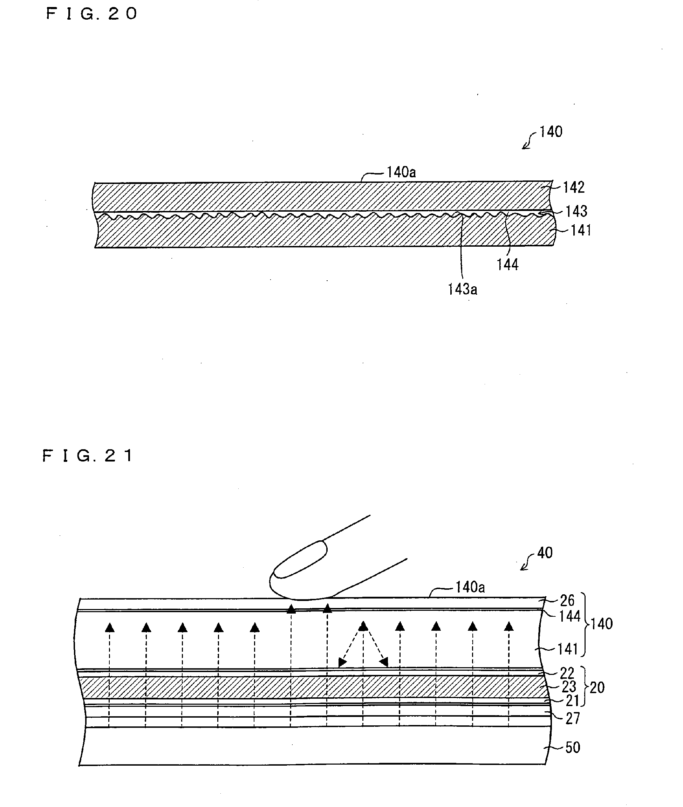

Fig. 20 is a cross-sectional view schematically illustrating an outline configuration of a substantial part of a coordinate sensor of Embodiment 10 of the present invention.
Fig. 21
Fig. 21 is a view illustrating an outline configuration of a substantial part of a liquid crystal display device including the coordinate input section shown in Fig. 20.
Fig. 22

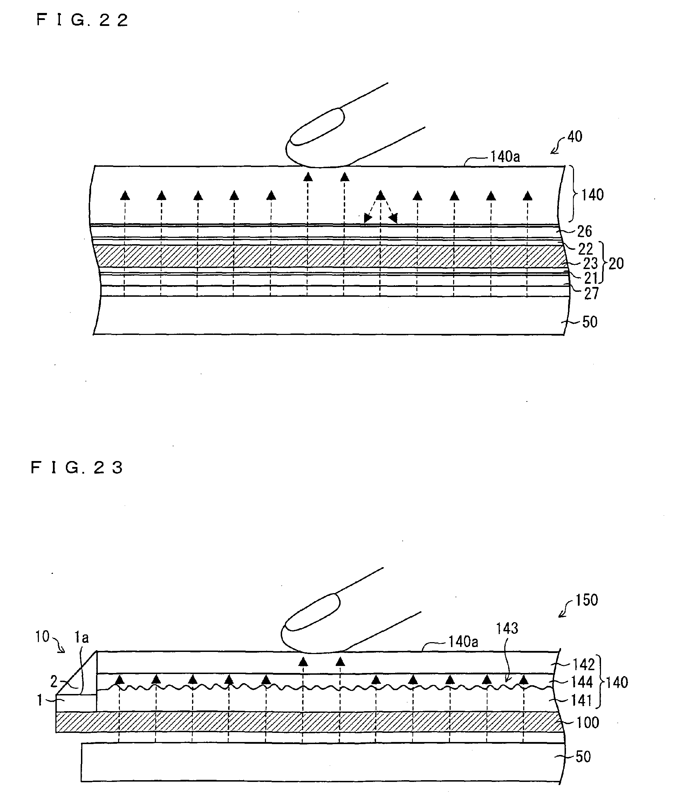

Fig. 22 is a cross-sectional view schematically illustrating an outline configuration of a substantial part of a liquid crystal display device of Embodiment 10 of the present invention.
Fig. 23
Fig. 23 is a cross-sectional view schematically illustrating an outline configuration of a substantial part of a coordinate sensor of Embodiment 10 of the present invention.
Fig. 24
Fig. 24 is a cross-sectional view illustrating an outline configuration of a substantial part of a liquid crystal display device disclosed in Patent Literature 1.
Fig. 25
Fig. 25 is a view illustrating an outline configuration of a substantial part of a liquid crystal display device disclosed in Patent Literature 2.
Fig. 26
Fig. 26 is a perspective view illustrating an outline configuration of a coordinate sensor disclosed in Patent Literature 3.
Fig. 27

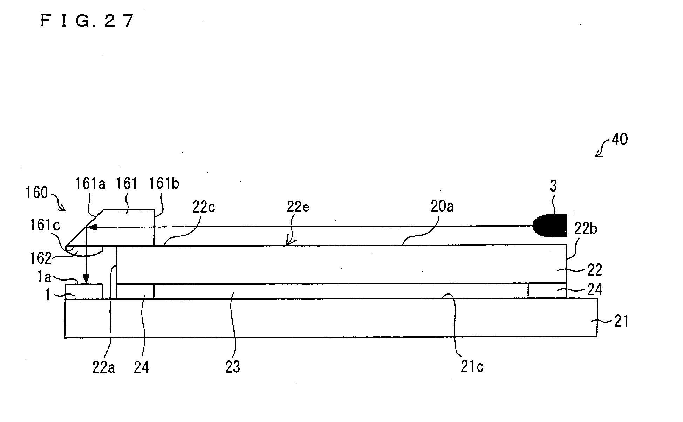

Fig. 27 is a cross-sectional view schematically illustrating an outline configuration of a substantial part of a liquid crystal display device of Embodiment 11 of the present invention.
Fig. 28

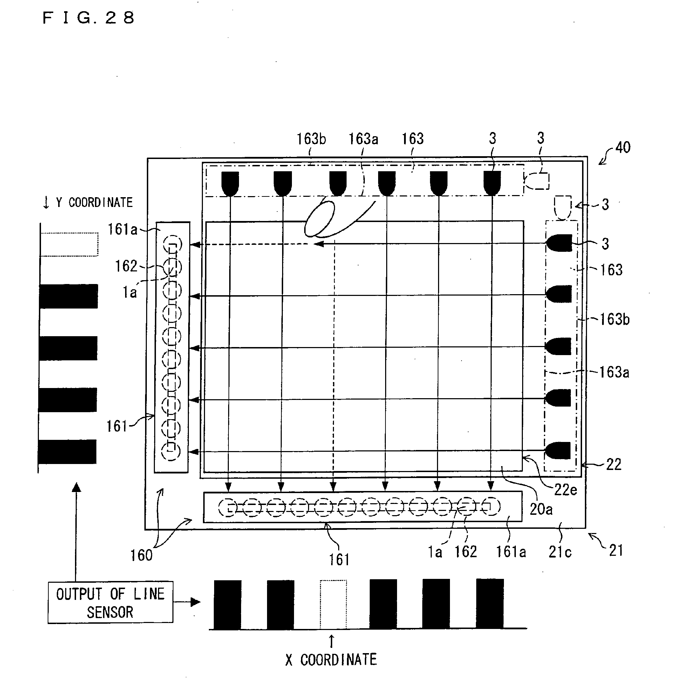

Fig. 28 is a plan view schematically illustrating, along with outputs of line sensors, (i) an outline configuration of a substantial part of a liquid crystal display device of Embodiment 11 of the present invention and (ii) how a coordinate is detected in the liquid crystal display device.

Fig. 29

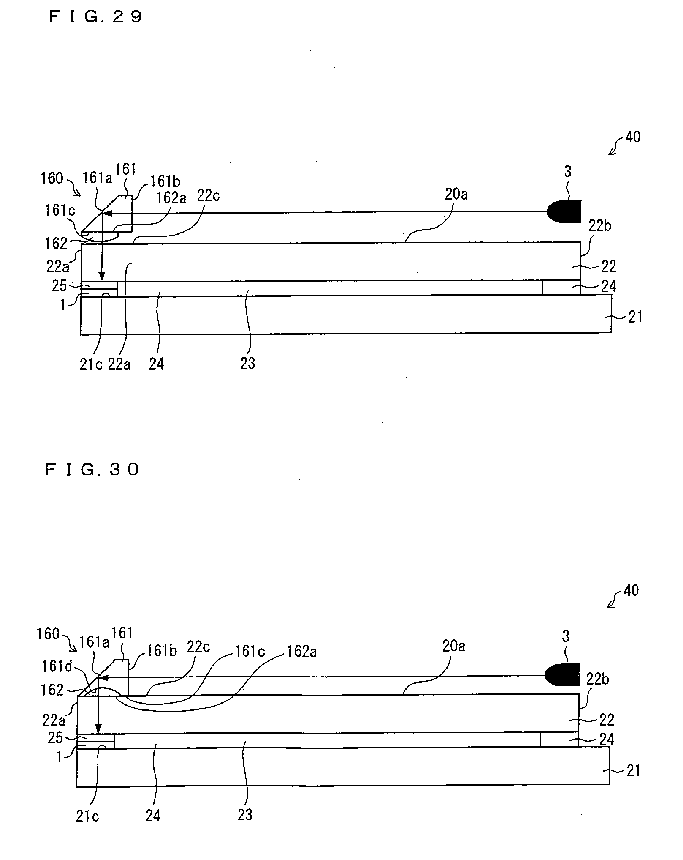

Fig. 29 is a cross-sectional view schematically illustrating an outline configuration of a substantial part of a liquid crystal display device of Embodiment 12 of the present invention.

Fig. 30

Fig. 30 is a cross-sectional view schematically illustrating an outline configuration of a substantial part of a liquid crystal display device of Embodiment 13 of the present invention.

Fig. 31

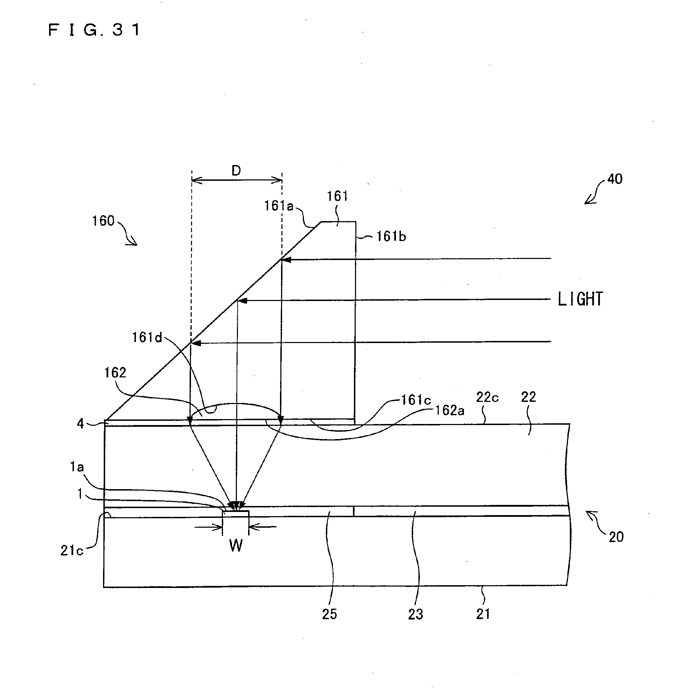

Fig. 31 is a cross-sectional view illustrating a substantial part of a coordinate sensor shown in Fig. 30 and light parallel to an optical axis of a lens shown in Fig. 30.

Fig. 32

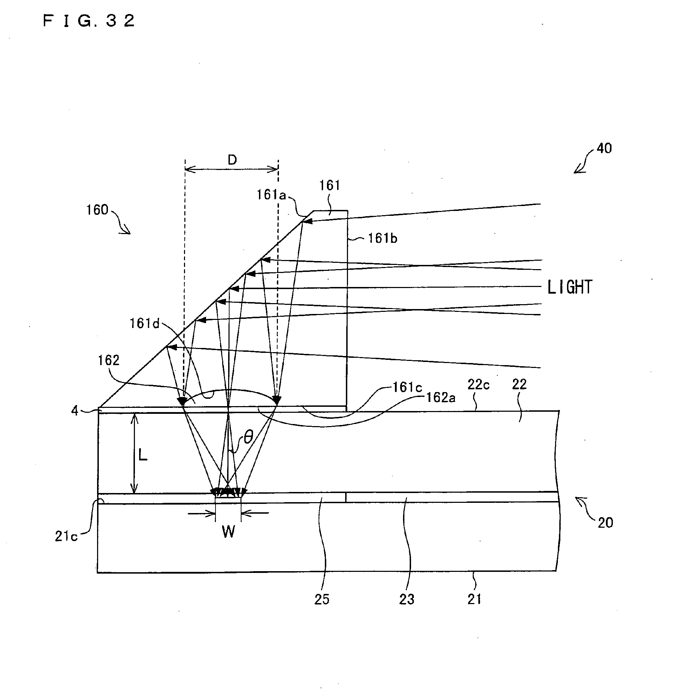

Fig. 32 is a cross-sectional view illustrating the substantial part of the coordinate sensor shown in Fig. 30 and an acceptance angle of a line sensor.

Fig. 33

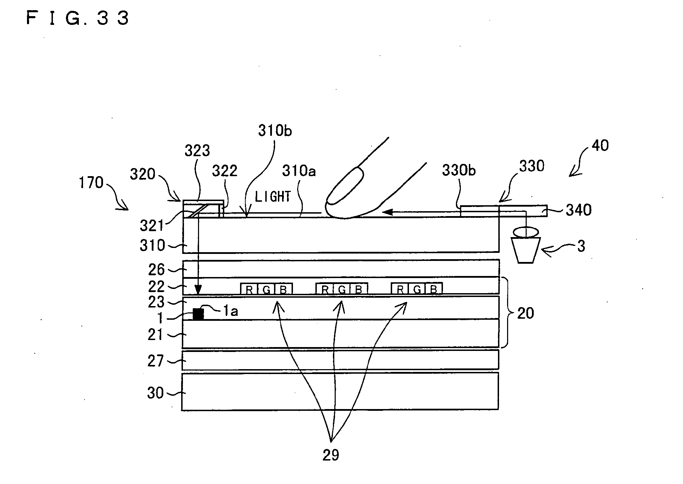

Fig. 33 is a cross-sectional view schematically illustrating an outline configuration of a substantial part of a liquid crystal display device of Embodiment 14 of the present invention.

Fig. 34

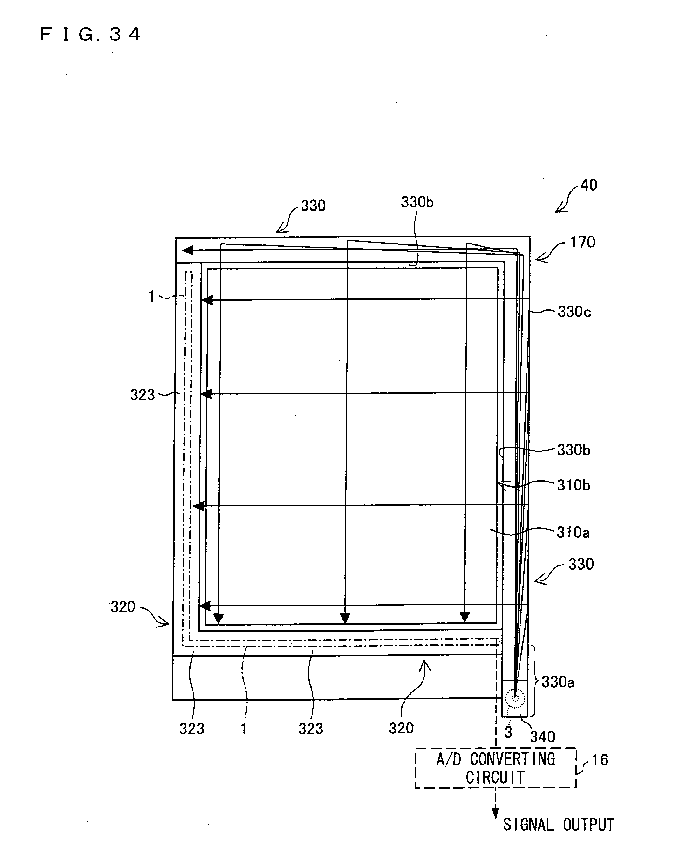

Fig. 34 is a plan view schematically illustrating the outline configuration of the substantial part of the liquid crystal display device of Embodiment 14 of the present invention.

Fig. 35

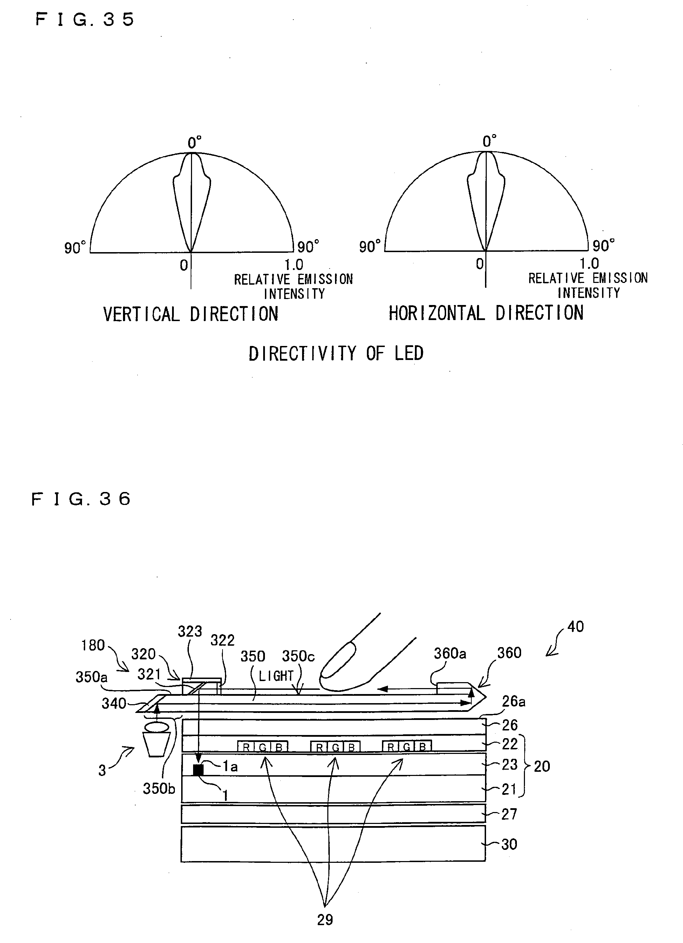

Fig. 35 is a view showing directivity, at a room temperature, of an infrared LED used in Embodiment 14 of the present invention.

Fig. 36

Fig. 36 is a cross-sectional view schematically illustrating an outline configuration of a substantial part of a liquid crystal display device of Embodiment 15 of the present invention.

Fig. 37

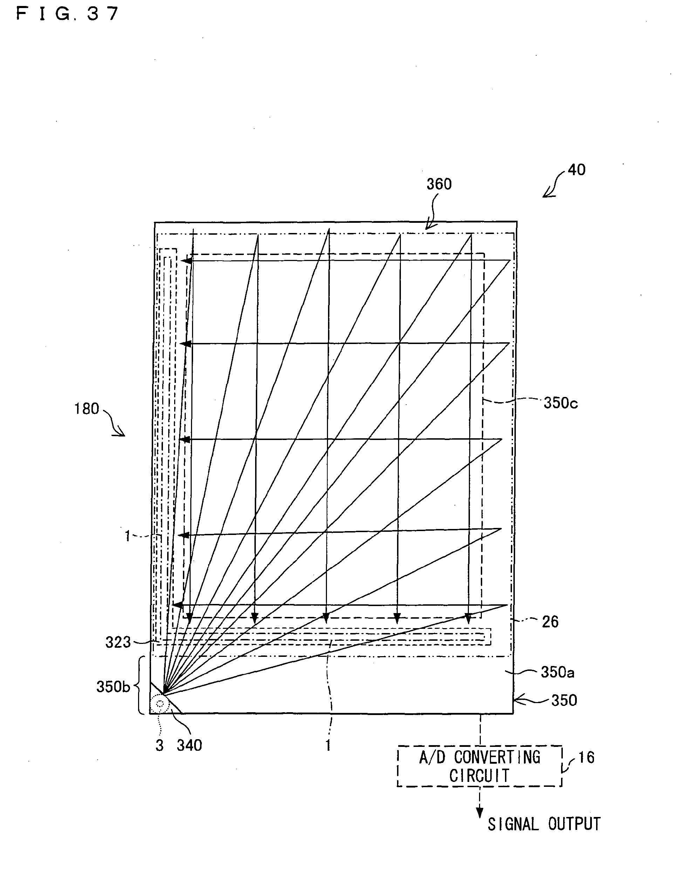

Fig. 37 is a plan view schematically illustrating the outline configuration of the substantial part of the liquid crystal display device of Embodiment 15 of the present invention.

Fig. 38

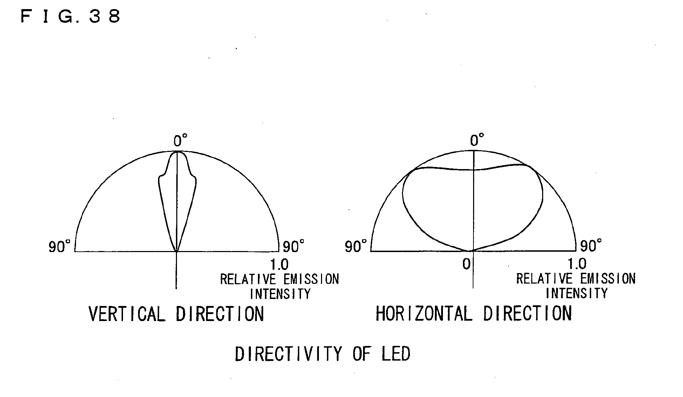

Fig. 38 is a view showing directivity, at a room temperature, of an infrared LED used in Embodiment 15 of the present invention.

Fig. 39

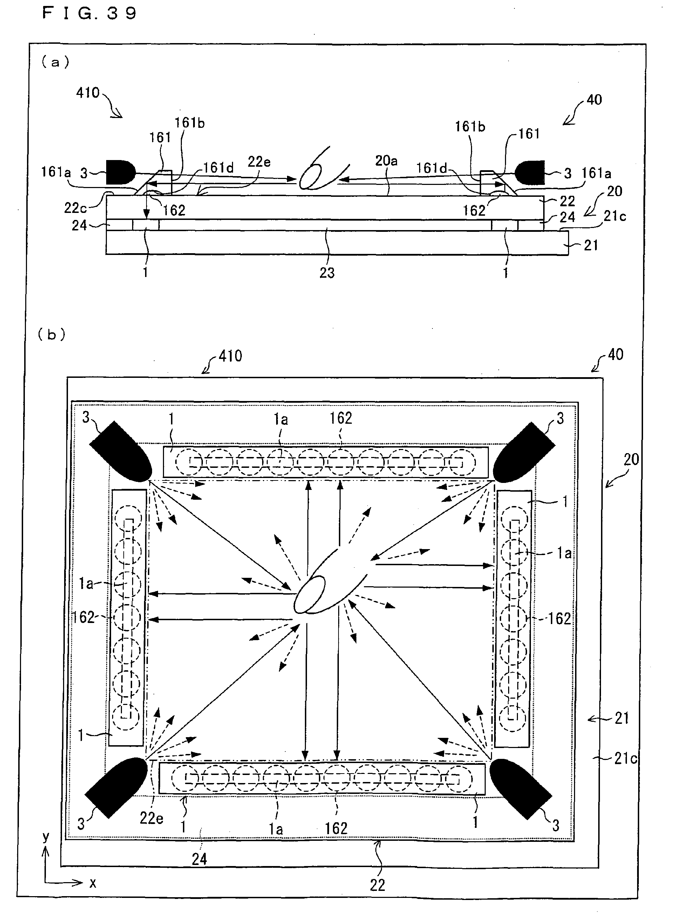

(a) of Fig. 39 is a cross-sectional view schematically illustrating an outline configuration of a substantial part of a liquid crystal display device of Embodiment 16 of the present invention, and (b) of Fig. 39 is a plan view schematically illustrating (i) the outline configuration of the substantial part of the liquid crystal display device shown in (a) of Fig. 39 and (ii) how a coordinate is detected in the liquid crystal display device.

Fig. 40

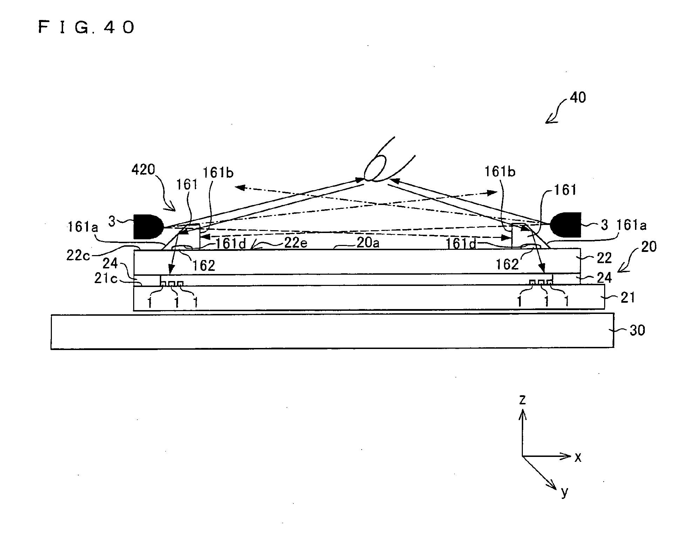

Fig. 40 is a cross-sectional view schematically illustrating an outline configuration of a substantial part of a liquid crystal display device of Embodiment 17 of the present invention.

Fig. 41

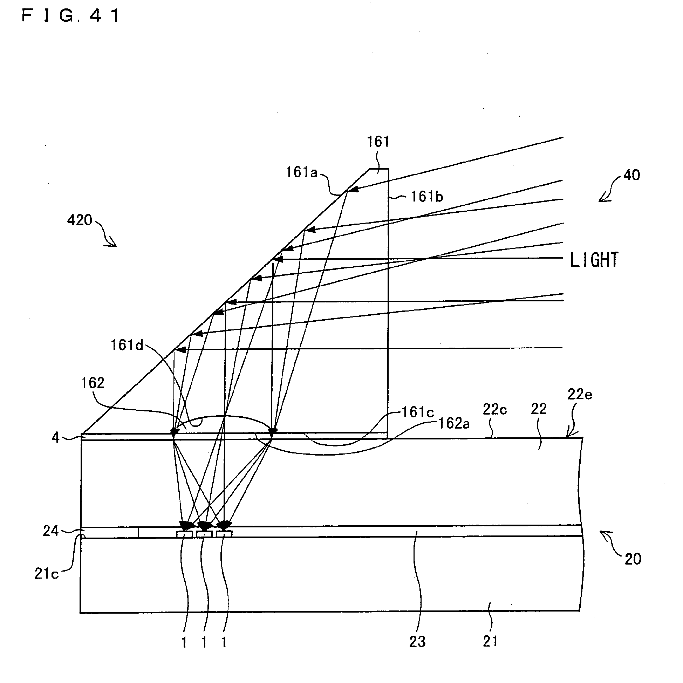

Fig. 41 is a cross-sectional view illustrating (i) the substantial part of the liquid crystal display device shown in Fig. 40 and (ii) a light path of light guided to line sensors.

Fig. 42

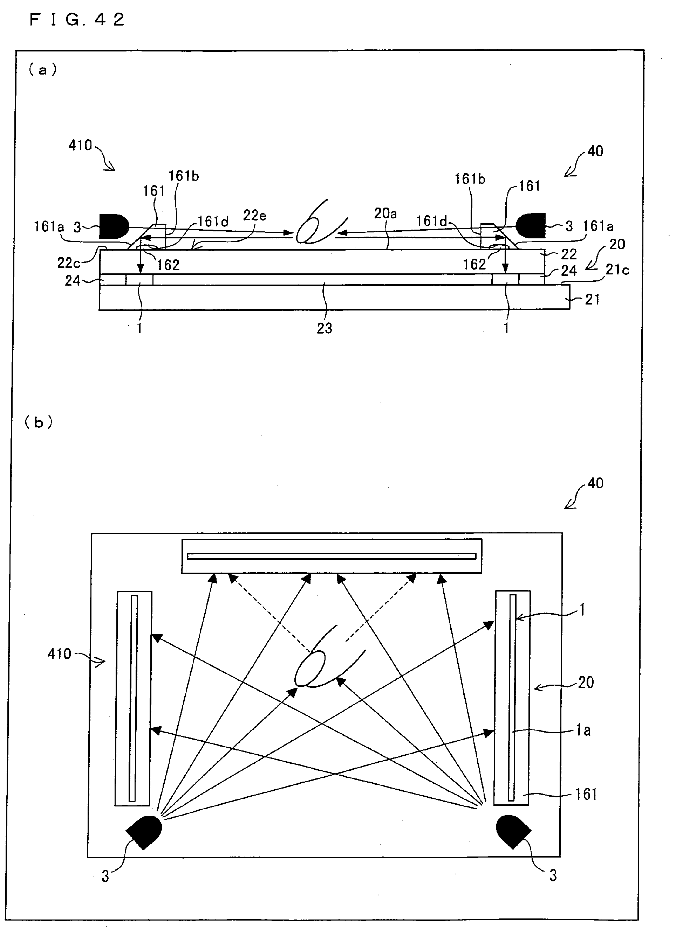

(a) of Fig. 42 is a cross-sectional view schematically illustrating an outline configuration of a substantial part of a liquid crystal display device of Embodiment 18 of the present invention, and (b) of Fig. 42 is a plan view schematically illustrating (i) the outline configuration of the substantial part of the liquid crystal display device shown in (a) of Fig. 42 and (ii) how a coordinate is detected in the liquid crystal display device.

Fig. 43

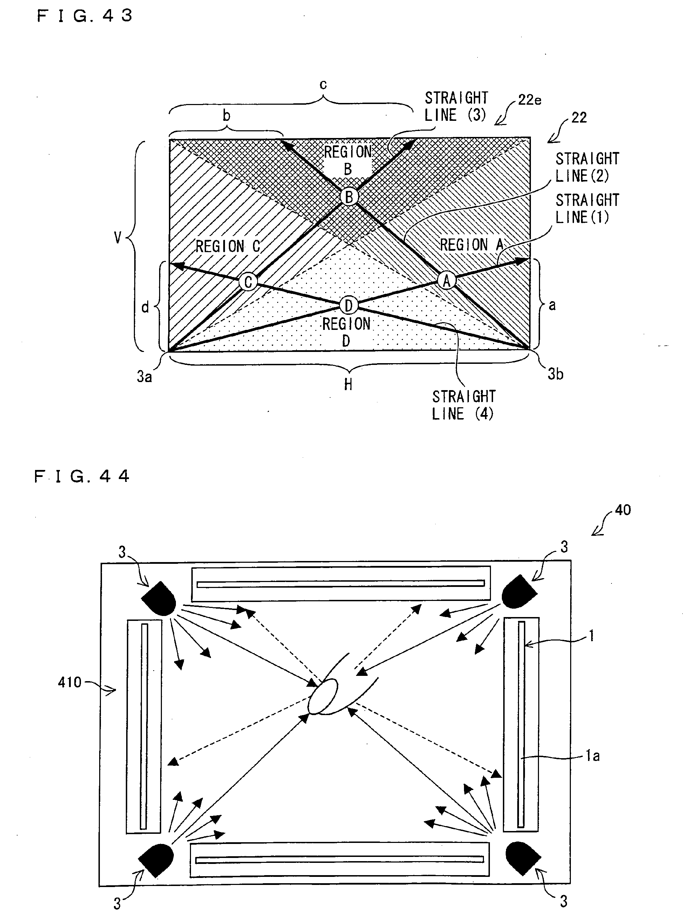

Fig. 43 is a view explaining how a (x, y) coordinate of an object to be detected is obtained by triangulation.

Fig. 44

Fig. 44 is a plan view schematically illustrating an outline configuration of a substantial part of another example of the liquid crystal display device of Embodiment 18 of the present invention.

# EP 2 336 859 A1

Description of Embodiments

Embodiments of the present invention are described below.

[Embodiment 1]

An embodiment of the present invention is described below with reference to (a) and (b) of Fig. 1 through Fig. 3.
The present embodiment deals with, as an example of an electronic device including a coordinate sensor, a liquid crystal display device with a built-in coordinate sensor (touch panel). The liquid crystal display device has, as a coordinate input function, a coordinate sensor function (touch panel function in the present embodiment).

(a) of Fig. 1 is a cross-sectional view schematically illustrating an outline configuration of a substantial part of the liquid crystal display device of the present embodiment.
(b) of Fig. 1 is a plan view schematically illustrating, along with outputs of one-dimensional sensor arrays (hereinafter referred to as "line sensor"), (i) the outline configuration of the substantial part of the liquid crystal display device of the present embodiment and (ii) how a coordinate is detected in the liquid crystal display device.

As illustrated in (a) of Fig. 1, the liquid crystal display device 40 of the present embodiment includes a liquid crystal panel 20 (electronic display panel), a backlight 30 (illumination device, light source for display), line sensors 1 (optical sensors), right angle prisms 2 (light path changing means, light path changing sections), and infrared LEDs 3 (infrared light emitting diodes, infrared light sources).
In the liquid crystal display device 40 shown in (a) and (b) of Fig. 1, a coordinate sensor 10 is constituted by at least two line sensors 1 which are disposed in x-axis and y-axis directions and the right angle prisms 2 disposed on the respective line sensors 1. The infrared LEDs 3 are used as light sources for the coordinate sensor (light sources for detection of an indicated coordinate).
The liquid crystal panel 20 includes a pair of substrates disposed so as to face each other, i.e., an array substrate 21 (substrate for displaying and sensing) and a counter substrate 22 (substrate serving as a counter substrate and a touch panel, light guide member) which overlaps a screen part (image display region; hereinafter referred to simply as "screen" or "display region") of the array substrate 21. The pair of substrates sandwich a liquid crystal layer (display medium) (not shown). Note that, in the following description, the counter substrate 22 is a substrate (upper substrate) on a display surface side (observer's side), and the array substrate 21 is a substrate (lower substrate) on a rear surface side.
The line sensors 1 and the right angle prisms 2 are provided, outside the screen (outside the display region), on the array substrate 21. Specifically, the line sensors 1 and the right angle prisms 2 are provided on a part of a top surface 21c (i.e., surface facing the counter substrate 22) of the array substrate 21 which part does not overlap the counter substrate 22. The array substrate 21 serves as an optical sensor substrate provided with the line sensors 1.
The liquid crystal panel 20 has a similar arrangement to a conventionally known liquid crystal panel provided with no touch panel except for that the line sensors 1 and the right angle prisms 2 are provided, outside the screen, on the array substrate 21 as described above. On this account, a detailed description of the liquid crystal panel 20 is omitted in the following description.
As the array substrate 21, a TFT substrate is suitably used for example. That is, the array substrate 21 is arranged such that a TFT serving as a switching element for driving pixels, a pixel electrode, an alignment film, and the like are provided on an insulating substrate, each of which is not illustrated in the drawings. Meanwhile, as the counter substrate, a color filter substrate is suitably used for example. The counter substrate 22 is arranged such that a color filter layer, a counter electrode, an alignment film, and the like are provided on an insulating substrate as necessary, each of which is not illustrated in the drawings. As the insulating substrates used in the array substrate 21 and the counter substrate 22, transparent substrates (light transmitting resin) such as glass are suitably used for example.
However, the present embodiment is not limited to this. The array substrate 21 is not limited to a TFT substrate. Examples of the array substrate 21 include every kind of active matrix substrate on which a plurality of pixels are disposed in a matrix.
Further, a display mode of the liquid crystal panel 20 is not limited to a specific one, and therefore can be any display mode such as a TN (Twisted Nematic) mode, an IPS (In-Plain Switching) mode or VA (Vertical Alignment) mode.
As necessary, a polarization plate (front side polarization plate) (not shown) may be provided on a surface of the array substrate 21 which surface is opposite to a surface facing the counter substrate 22, and a polarization plate (backside polarization plate) (not shown) may be provided on a surface of the counter substrate 22 which surface is opposite to a surface facing the array substrate 21. Further, as necessary, a phase plate (not shown) may be provided at least (i) between the polarization plate and the array substrate 21 and (ii) between the polarization plate and the counter substrate 22. In this case, the front side polarization plate may be used as a touch panel (light guide plate).

Alternatively, another light guide plate may be provided on the front side polarization plate. That is, in either case, a surface of an uppermost layer (i.e., a layer closest to the viewer's side) serves as a coordinate input surface 20a (coordinate detection surface) of a touch panel.

Each of the polarization plates may be a polarization plate similar to a conventionally known polarization plate. Each of the polarization plates is mainly made of PVA (Poly Vinyl Alcohol) on which iodine (I) compound molecules or pigments are adsorbed and aligned. A surface of each the polarization plates is protected by a plurality of backing layers including a TAC (Tri Acetyl Cellulose) layer and a PET (Poly Ethylene Terephthalate) layer so that each of the polarization plates is reinforced. The plurality of layers are bonded to each other with the use of PVA adhesives. As necessary, a phase film etc. is stacked on the plurality of layers to improve surface hardness and liquid crystal display performance and to reduce surface reflection. Examples of a material of the phase film etc. include a transparent resin (light-transmitting resin) such as an acrylic resin such as PMMA (Polymethylmethacrylate), a PC (Polycarbonate) resin, a cyclic polyolefin resin (e.g., "ZEONEX", "ZEONOR", "ARTON", each of which is a product name), a polyester resin (PET; Polyethylene Terephtalate), and a fluorine resin.

Further, the backlight 30 for illuminating the liquid crystal panel 20 is provided behind the liquid crystal panel 20 (i.e., behind the array substrate 21). The backlight 30 is provided corresponding to the screen of the array substrate 21.

Meanwhile, the infrared LEDs 3 are provided, outside the screen, on the top surface 21 c of the array substrate 21 in addition to the line sensors 1 and the right angle prisms 2.

As illustrated in (b) of Fig. 1, the line sensors 1 are equivalent to a vertical row of sensors and a horizontal row of sensors of the coordinate sensor used as a touch panel of the liquid crystal display device 40.

As illustrated in (b) of Fig. 1, at least two line sensors (two line sensors in the example shown in (b) of Fig. 1) are provided, on the array substrate 21, along respective sides of the counter substrate 22 so that a (x, y) coordinate (indicated coordinate, inputted coordinate) of a part, of the coordinate input surface 20a, touched by an object (infrared ray reflecting object, target to be detected) such as a finger is detected.

As illustrated in (a) and (b) of Fig. 1, the infrared LEDs 3 are provided so as to face end surfaces 22b of the counter substrate 22 which end surfaces 22b are opposite to end surfaces 22a (edge section) facing the line sensors 1.

As illustrated in (a) of Fig. 1, the line sensors 1 are provided on the array substrate 21 so that light-receiving surfaces 1a of the line sensors 1 are parallel to the surface (the coordinate input surface 20a, image display surface) of the counter substrate 22 (face upward in the present embodiment).

As illustrated in (a) of Fig. 1, the right angle prisms 2 are provided on the light receiving surfaces 1a of the line sensors 1, and are bonded to the end surfaces 22a (end surfaces of the counter substrate 22 which end surfaces are opposite to the end surfaces 22b facing the infrared LEDs 3) of the counter substrate 22 preferably via an optical coupling material 4.

The optical coupling material 4 is preferably a resin having a refractive index equal to that of the counter substrate 22 (e.g., glass substrate used as the counter substrate 22).

Examples of the optical coupling material 4 include a transparent resin (transparent adhesive) such as an ultraviolet cure resin.

Normally, end surfaces of a glass substrate or the like used as the counter substrate 22 are not flat since minute concavities and convexities are produced on the end surfaces by a normal glass cutting method. On this account, light is refracted/scattered by the end surfaces 22a of the counter substrate 22. In a case where the concavities and convexities of the end surfaces 22a are filled with the optical coupling material 4, refraction/ scattering of light can be prevented, thereby allowing light outputted from the counter substrate 22 to be efficiently guided to the line sensors 1 via the right angle prisms 2. Thus, sensitivity of the line sensors 1 can be improved in a case where the counter substrate 22 and the right angle prisms 2 are optically coupled with each other with the use of the optical coupling material 4.

The following describes a configuration of each of the line sensors 1. Fig. 2 is a block diagram illustrating an outline configuration of one of the line sensors 1.

As illustrated in Fig. 2, each of the line sensors 1 includes light-receiving elements 11 (light-receiving sections) disposed in a single direction (in one-dimensional array) and a driving control circuit 12. The driving control circuit 12 serves as a scanning signal circuit and an optical signal read-out circuit.

Each of the light-receiving elements 11 is constituted by an optical sensor such as a photodiode or a phototransistor, and detects an amount of received light by extracting electric current or electric charge corresponding to an intensity of the received light. As illustrated in (b) of Fig. 1, each of the line sensors 1 outputs, as a light detection signal, the amount of the light received by element surfaces (the light-receiving surfaces 1a) of the light-receiving elements 11.

Each of the light-receiving elements 11 is not limited to a specific one, provided that it can detect light emitted by light sources for detection of an indicated coordinate (the infrared LEDs 3 in the present embodiment). Examples of the light-receiving elements 11 include an optical sensor made of a-Si (amorphous silicon), p-Si (polysilicon, polycrystalline silicon) or CG silicon (Continuous Grain Silicon).

The line sensor 1 can be provided, outside the screen (i.e., an empty space of the liquid crystal screen), on the array substrate 21 so as to be integral with the array substrate 21 and so that the light-receiving surfaces 1a face upward as described above.

The light-receiving elements 11 can be formed on a surface of the array substrate 21 on which surface circuits such as the TFT are provided, concurrently with formation of the circuits such as the TFT (e.g., concurrently with formation of some of constituents of the TFT) by using a conventionally known semiconductor technique.

As illustrated in Fig. 2, the driving control circuit 12 includes a shift register 13, switching elements 14, a detection line 15, and an A/D (analog-digital) converting circuit 16. Note that the shift register 13 corresponds to a gate driver of the liquid crystal panel 20 (TFT-LCD).

As illustrated in Fig. 2, the light-receiving elements 11 accumulate electric charge when light is supplied from an outside. In response to CLK (clock pulse) that is externally supplied to the shift register 13, the shift register 13 generates a signal for sequentially selecting the switching elements 14.

In response to a scanning signal generated by the shift register 13, the switching elements 14 supply the electric charge accumulated by the light-receiving elements 11 to the detection line 15. A signal supplied through the detection line 15 is A/D converted by the A/D converting circuit 16 as necessary, and is then outputted.

The A/D converting circuit 16 can be formed on the array substrate 21 concurrently with a process for forming a display element driving circuit.

Alternatively, the A/D converting circuit 16 may be made of Si-LSI and be provided on the array substrate 21 by a COG (Chip On Glass) technique or may be provided on FPC (Flexible Printed Circuits) which connect the array substrate 21 and a main body (housing) of the liquid crystal display device 40.

Next, the following describes how a position of an inputted coordinate (indicated coordinate) is detected in the liquid crystal display device 40.

As illustrated in (a) and (b) of Fig. 1, infrared light emitted from the infrared LEDs 3 enters into the counter substrate 22 from the end surfaces 22b of the counter substrate 22, and then propagates within the counter substrate 22 while being repeatedly reflected by upper and lower surfaces (substrate surfaces) of the counter substrate 22. The infrared light which has propagated within the counter substrate is emitted from the end surfaces 22a of the counter substrate 22, is totally reflected by the right angle prisms 2 so as to be delivered to (enters into) the light-receiving surfaces 1a of the corresponding line sensors 1.

Here, when an object such as a finger touches the coordinate input surface 20a of the liquid crystal panel 20 serving as a touch panel, infrared light falling on a touched part attenuates. This causes attenuation in intensity of infrared light propagating, within the counter substrate 22, on a line extended from the touched part in an x-axis direction and on a line extended from the touched part in a y-axis direction.

Accordingly, as illustrated in (b) of Fig. 1, an output (light detection signal) corresponding to the line extended from the touched part in the x-axis direction is weaker than a signal on a line extended from an untouched part in the x-axis direction, and an output (light detection signal) corresponding to the line extended from the touched part in the y-axis direction is weaker than a signal on a line extended from an untouched part in the y-axis direction.

Consequently, a (x, y) coordinate of the touched part can be obtained by detecting a peak (minus peak) of a light intensity distribution in outputs of the line sensors 1.

The coordinate information thus obtained is supplied to a liquid crystal driving circuit etc. via a control section of the liquid crystal display device 40 by an interface circuit etc. (not shown). Note that each of the line sensors 1, the liquid crystal driving circuit, the control section etc. can have a conventionally known arrangement.

According to the present embodiment, the right angle prisms 2 are disposed on light paths of light emitted from the infrared LEDs 3. This allows light that enters the counter substrate 22 from the infrared LEDs, propagates within the counter substrate 22, and is then outputted from the counter substrate 22 to be reflected by the right angle prisms 2 so that the light is guided to the light-receiving surfaces 1a of the line sensors 1.

According to the arrangement, light that propagates within the counter substrate 22 and is then outputted from the counter substrate 22 is thus moved (reflected) downward by the right angle prisms 2 so as to be detected by the line sensors 1 provided below the right angle prisms 2.

Consequently, according to the present embodiment, the line sensors 1 can be provided, outside the image display region, on the array substrate 21 so that the light-receiving surfaces 1a are parallel to the substrate surface (image display surface) as described above.

This allows the liquid crystal display device 40 to have a reduced thickness, and allows the line sensors 1 to be provided so as to face side surfaces of a thin substrate as described above. As a result, the liquid crystal display device 40 can be used without any restriction. Further, the line sensors 1 are provided, outside the image display region, on the array substrate 21. This causes no reduction in aperture ratio and no restriction on operating speed.

Moreover, since the line sensors 1 are provided so that the light-receiving surfaces 1a are parallel to the substrate surface as described above, the line sensors 1, and wiring and circuits necessary for the line sensors 1 can be formed on the array substrate 21, concurrently with formation of these circuits. As illustrated in Fig. 2, the detection line 15 and the circuit necessary for processing of a detection signal can be formed for each line sensor provided in the x-axis direction or y-axis direction. This enables easy alignment with a simple configuration. Consequently, according to the present embodiment, a thin coordinate sensor 10 can be realized at low cost, and a structure of the touch panel of an optical sensor type can be greatly simplified as compared to a conventional one.

In the example shown in (a) and (b) of Fig. 1, two line sensors 1 are provided along respective sides (a side extending in an x-axis direction and a side extending in a y-axis direction) of the counter substrate 22. However, the present embodiment is not limited to this.

Fig. 3 is a cross-sectional view illustrating a modification of the liquid crystal display device 40 of the present embodiment.

As described above, it is only necessary that the line sensors 1 be provided so as to face at least two sides (at least a side extending in an x-axis direction and a side extending in a y-axis direction) of the counter substrate 22. That is, the line sensors 1 and the right angle prisms 2 may be provided along three sides of the counter substrate 22 or may be provided along four sides (all the sides) of the counter substrate 22 as illustrated in Fig. 3.

Further, in the example shown in (a) and (b) of Fig. 1, the infrared LEDs 3 are disposed so as to face the end surfaces 22b of the counter substrate 22 which are opposite to the end surfaces 22a facing the line sensors 1. However, the present embodiment is not limited to this.

The infrared LED 3 may be provided so as to face the end surfaces 22b of the counter substrate 22 as described above or may be provided so as to face at least one corner section (corner; more precisely a position facing the corner section) of the counter substrate 22. For example, in a case where the line sensor 1 are provided along the respective four sides of the counter substrate 22, the infrared LEDs 3 are provided so as to face two to four corners, as illustrated in Fig. 3. In this case, the corners of the counter substrate 22 may be cut off from the counter substrate 22 along lines tilted at 45° or lines vertical to straight lines joining opposite corners of the counter substrate 22. This allows infrared light emitted from the infrared LEDs 3 to easily enter the counter substrate 22.

Further, the present embodiment has dealt with an example in which the infrared LEDs are used as light sources for detection of an indicated coordinate as described above. However, the present embodiment is not limited to this.

The light for detection of an indicated coordinate is not limited to infrared light, and therefore may be visible light or ultraviolet light. This applies to all of the embodiments described below except for a case where an infrared light source is added as a light source for display of a backlight. Furthermore, the light source for detection of an indicated coordinate need not be necessarily provided. Instead, ambient natural light may be used as the light for detection of an indicated coordinate. That is, the light source for detection of an indicated coordinate is not an indispensable constituent in the present embodiment and the later-described embodiments, even if there is no such description.

However, since infrared light passes through a liquid crystal display element regardless of a display state (visible light transmittance) of the liquid crystal display element, presence of infrared light sources can prevent a problem that a sufficient amount of light for coordinate detection cannot be obtained in a case where a display screen is dark. Accordingly, it is especially preferable that infrared light sources are used as the light sources for detection of an indicated coordinate.

Even in a case where visible light or ultraviolet light is used, a coordinate position (inputted coordinate) of an object to be detected can be obtained based on a similar principle to the case where infrared light is used for coordinate detection. Further, line sensors similar to the line sensor 1 exemplified as above can be used.

According to the present embodiment, the infrared LEDs 3 are provided in addition to the backlight 30 as described above. This allows the light for detection of an indicated coordinate to enter into the image display region without any modification to a configuration of the backlight 30.

In a case where a lens or a material such as plastic molded into a bullet shape (half-spheroid shape) is provided around each of the infrared LEDs 3 as illustrated in (a) and (b) of Fig. 1, light can be efficiently focused on (efficiently enter) the counter substrate 22.

Further, the present embodiment has dealt with an example in which a finger touches the coordinate input surface 20a and a coordinate position of a part touched by the finger is detected as an indicated coordinate. However, the present embodiment is not limited to this. For example, a coordinate of a part touched by an object such as a touch pen may be detected as an indicated coordinate. Alternatively, a coordinate of a part on which light emitted from an optical pointing device such as a light pen falls may be detected as an indicated coordinate.

[Embodiment 2]

Another embodiment of the present invention is described below with reference to (a) and (b) of Fig. 4 through (a) and (b) of Fig. 7 and Fig. 25. The present embodiment discusses differences from the Embodiment 1, and constituents which have identical functions to those of the Embodiment 1 are given identical reference numerals, and are not explained repeatedly.

The Embodiment 1 has dealt with an example in which the infrared LEDs 3 for emitting light for detection of an coordinate position into the counter substrate 22 are provided in addition to the backlight 30. Meanwhile, the present embodiment deals with a case where the counter substrate 22 is irradiated with light for detection of a coordinate position from behind the liquid crystal panel 20.

(a) of Fig. 4 is a cross-sectional view schematically illustrating an outline configuration of a substantial part of a liquid crystal display device of the present embodiment. (b) of Fig. 4 is a plan view schematically illustrating, along with outputs of line sensors, (i) the outline configuration of the substantial part of the liquid crystal display device of the present embodiment and (ii) how a coordinate is detected in the liquid crystal display device.

As illustrated in (a) and (b) of Fig. 4, the liquid crystal display device 40 of the present embodiment includes, instead of the backlight 30 and the infrared LEDs 3, a backlight 50 for emitting, as illumination light, light containing an infrared component.

The backlight 50 serves as both of (i) an illumination device for illuminating a liquid crystal panel 20 and (ii) a light source for a coordinate sensor (light source for detection of an indicated coordinate).

The following describes how an inputted coordinate (indicated coordinate) is detected in the liquid crystal display device 40.

As illustrated in (a) and (b) of Fig. 4, when an object to be detected such as a finger touches a coordinate input surface 20a of the liquid crystal panel 20, light (infrared light) which has been emitted from the backlight 50 and has passed through the liquid crystal panel 20 is scattered (diffused) by the object to be detected (e.g., finger), and propagates within a counter substrate 22 while being repeatedly reflected by upper and lower surfaces (substrate surfaces) of the counter substrate 22 as in the Embodiment 1. Then, light outputted from end surfaces of the counter substrate 22 is totally reflected by right angle prisms 2, and is then delivered to (enters into) light-receiving surfaces 1a of line sensors 1 provided on an edge portion of the counter substrate 22.

According to the arrangement, an amount of light received by a light-receiving element 11 (see Fig. 2) of each of the line sensors 1 varies depending on a distance between a touched position and the line sensor 1, as shown in (b) of Fig. 4. Note that an output (light detection signal) corresponding to a line extended from the touched part in an x-axis direction is stronger than a signal on a line extended from an untouched part in the x-axis direction, and an output (light detection signal) corresponding to a line extended from the touched part in a y-axis direction is stronger than a signal on a line extended from an untouched part in the y-axis direction, as illustrated in (b) of Fig. 4.

Accordingly, a (x, y) coordinate of the touched part can be obtained by detecting a peak (plus peak) of a light intensity distribution in the outputs of the line sensors 1.

As described above, according to the present embodiment, a (x, y) coordinate of a touched part can be obtained by detecting scattering (diffusion) of infrared light caused by contact of an object to be detected such as a finger.

As the backlight 50, a backlight including LEDs for emitting light containing an infrared component may be used. Alternatively, a light source for emitting infrared light may be provided separately from a visible light source for display. Such an infrared light source for detection of a coordinate position may be provided in the backlight or may be provided outside the backlight.

The backlight 50 may be, for example, a backlight which includes: a light source section 52 including visible light sources, a light source section 53 including infrared light sources (invisible light sources), and a light guide plate 51 sandwiched between the light source section 52 and the light source section 53, as illustrated in (a) of Fig. 5.

As an alternative of the backlight 50 shown in (a) of Fig. 5, a backlight 50 shown in (b) of Fig. 5 may be used which includes: (i) a light guide 51a, (ii) a light guide 51b, (iii) a light source section 52 including visible light sources, and (iv) a light source section 53 including infrared light sources (invisible light sources). The light guide 51a is used for the light source section 52, and the light guide 51b is used for the light source section 53. The light guide 51 a and the light guide 51b are stacked on each other. The light source section 52 is provided so as to face an end surface of the light guide 51a, and the light source section 53 is provided so as to face an end surface of the light guide 51b.

Alternatively, a backlight similar to the backlight 210 shown in Fig. 25 may be used which includes: (i) a light guide plate 214, and (ii) the light source section 213 which is provided so as to face an end surface of the light guide plate 214 and which includes visible light sources 211 which are a plurality of white LEDs and infrared light sources 212 (invisible light sources) which are a plurality of near-infrared LEDs.

The present embodiment has dealt with an example in which the liquid crystal display device 40 includes the backlight 50 for irradiating, from behind the liquid crystal panel 20, the liquid crystal panel 20 with light containing, as illumination light, an infrared component as described above. However, the present embodiment is not limited to this.

For example, as illustrated in Fig. 6, light sources (e.g., infrared LEDs 3) for detection of an indicated coordinate position may be provided behind the liquid crystal panel 20 separately from a backlight 30 for display so that the liquid crystal panel 20 is irradiated with light for detection of an indicated coordinate from behind the liquid crystal panel 20. Also in this case, the infrared LEDs 3 may be disposed along edge sections of the backlight 30 or may be disposed on corner sections of the backlight 30.

Also in the present embodiment, the light for detection of an indicated coordinate is not limited to infrared light, and therefore may be visible light or ultraviolet light. Accordingly, the backlight 30 that is a visible light source may serve as both of (i) an illumination device for display and (ii) a light source for detection of an indicated coordinate. However, in a case where a backlight is used as a light source for detection of an indicated coordinate, it is especially preferable that the backlight 50 for emitting, as illumination light, light containing an infrared component be used, as described above. This is because infrared light does not affect contrast of display.

Further, also in the present embodiment, it is only necessary that the line sensors 1 be provided so as to face at least two sides (at least a side extending in an x-axis direction and a side extending in a y-axis direction) of the counter substrate 22. As necessary, additional line sensors 1 and right angle prisms 2 may be provided on edge sections of the counter substrate 22 that are opposite to edge sections facing the line sensors 1, as illustrated in Fig. 6. That is, also in the present embodiment, the line sensors 1 and the right angle prisms 2 may be provided along three sides of the counter substrate 22 or may be provided along four sides (all the sides) of the counter substrate 22.

The Embodiment 1 and the above description have dealt with an example in which the counter substrate 22 also serves as a touch panel. However, the present embodiment is not limited to this.

In a case where light sources for detection of an indicated coordinate are provided behind the liquid crystal panel 20 as described above, a coordinate indicated by an object to be detected such as a finger can be detected just by bringing the object to be detected such as a finger close to a surface of the counter substrate 22, i.e., the coordinate input surface 22a.

The following describes how the non-contact detection of an inputted coordinate (indicated coordinate) is performed.

(a) and (b) of Fig. 7 are views each schematically illustrating (i) the outline configuration of the substantial part of the liquid crystal display device 40 of the present embodiment and (ii) how non-contact detection of a coordinate is performed. (a) of Fig. 7 is a cross-sectional view illustrating the liquid crystal display device 40, and (b) of Fig. 7 is a plan view illustrating the liquid crystal display device 40. Note that the liquid crystal display device 40 shown in (a) and (b) of Fig. 7 has the same configuration as the liquid crystal display device 40 shown in (a) and (b) of Fig. 4.

In the example shown in (a) and (b) of Fig. 7, an object to be detected such as a finger is brought close to the coordinate input surface 20a so that light which has transmitted the liquid crystal panel 20 is reflected by the object to be detected such as a finger located in the air and then enters the liquid crystal panel 20 again. Thus, a coordinate is indicated (inputted).

In this case, as illustrated in (a) of Fig. 7, light (infrared light) emitted from the backlight 50 transmits the liquid crystal panel 20, is reflected by an object to be detected (e.g., finger) located in the air, and then enters the counter substrate 22. Then, a part of the light propagates within the counter substrate 22 while being repeatedly reflected by upper and lower surfaces (substrate surfaces) of the counter substrate 22. Light that has propagated within the counter substrate 22 and has been outputted from the counter substrate 22 is totally reflected by the right angle prisms 2 so as to be delivered to (enter into) light-receiving surfaces 1a of the line sensors 1 disposed so as to face edge sections of the counter substrate 22, as in the case where the contact mode (touch panel) is used. Further, a part of the light reflected by the object to be detected transmits the counter substrate 22 and directly reaches the coordinate sensor 10. That is, the part of the light reflected by the object to be detected is delivered to the line sensors 1 via the right angle prisms 2.

Also in this example, an amount of light received by a light-receiving element 11 (see Fig. 2) of each of the line sensors 1 varies depending on a distance between the line sensor 1 and a position where light which has transmitted the liquid crystal panel 20 is reflected by an object to be detected (e.g., finger) located in the air (see (b) of Fig. 7). In this case, as a distance between a coordinate and the object to be detected becomes smaller, an output corresponding to the coordinate becomes larger.

Accordingly, a (x, y) coordinate of a position indicated by an object to be detected such as a position of a finger tip can be obtained by detecting a peak (plus peak) of a light intensity distribution in the outputs of the line sensors 1.

In a coordinate sensor using a backlight as described above and an electronic device, such as a liquid crystal display device, using the coordinate sensor, sensitivity can be improved by increasing an intensity of infrared light of the backlight. As such, the coordinate sensor and the electronic device using the coordinate sensor are also suitable for a large-sized screen.

The present embodiment has dealt with en example in which a liquid crystal display device is used as a display device as described above. However, the present embodiment is not limited to this. In a case where a liquid crystal display device is used as a display device as described above, a backlight serves as a light source (light emitting section) for detection of an indicated coordinate. Meanwhile, in a case where an EL (electroluminescence) display device is used as a display device, an EL layer serves as a light source (light emitting section) for a coordinate sensor.

[Embodiment 3]

Another embodiment of the present invention is described below with reference to Fig. 8. Note that the present embodiment discusses differences from the Embodiments 1 and 2. Note also that constituents that have similar functions to those of the Embodiments 1 and 2 are given identical reference numerals, and are not explained repeatedly.

Each of the Embodiments 1 and 2 has dealt with an example in which a coordinate sensor 10 (line sensors 1 and right angle prisms 2) is provided so as to face an end surface (edge section) of a counter substrate 22. Meanwhile, the present embodiment deals with a case where a coordinate sensor is provided so as to overlap a counter substrate 22.

Fig. 8 is a cross-sectional view schematically illustrating an outline configuration of a substantial part of a liquid crystal display device 40 of the present embodiment.

As illustrated in Fig. 8, a coordinate sensor 60 of the present embodiment includes, as light path changing means (light path changing sections), diffraction gratings 61 provided on the counter substrate 22, instead of right angle prisms 2 (instead of right angle prisms 2 and optical coupling materials 4).

That is, the coordinate sensor 60 of the present embodiment is constituted by at least two line sensors 1 which are disposed in x-axis and y-axis directions and the diffraction gratings 61 which are provided on the counter substrate 22 so as to overlap the line sensors 1 in plan view (i.e. when the liquid crystal panel 20 is viewed from above).

The present embodiment deals with an example in which infrared LEDs 3 are used as light sources for detection of an indicated coordinate as in the Embodiment 1. However, the present embodiment is not limited to this. Another arrangement is also possible in which light sources for detection of an indicated coordinate are provided behind the liquid crystal panel 20 as in the Embodiment 2.

In the present embodiment, the coordinate sensor 60 (the line sensors 1 and the diffraction gratings 61) is provided outside a screen (outside a display region) of the array substrate 21 and the counter substrate 22. In the present embodiment, however, the line sensors 1 and the diffraction gratings 61 are provided inside the edge sections of the counter substrate 22. That is, the line sensors 1 and the diffraction gratings are provided so as to overlap the counter substrate 22.

Specifically, in the present embodiment, each of the line sensors 1 is disposed in a region that is located (i) between the array substrate 21 and the counter substrate 22 and (ii) outside a sealing material 24 (sealing region) for sealing a liquid crystal layer 23.

Also in the present embodiment, the line sensors 1 can be formed on a surface of the array substrate 21 on which surface a circuit such as a TFT is formed, concurrently with formation of the circuit such as a TFT by using a publicly known semiconductor technique.

In the present embodiment, as the diffraction gratings 61, minute grooves that are regularly disposed are formed, by a known microfabrication technique, on parts of a top surface 22c of the counter substrate 22 which parts overlap the line sensors 1. Thus, reflection characteristics of the parts are changed.

According to the present embodiment, the diffraction gratings 61 are formed on a light path of light emitted from the infrared LEDs 3 as described above. Thus, light which enters the counter substrate 22 from the infrared LEDs 3, propagates within the counter substrate 22, and then is outputted from the counter substrate 22 can be diffracted downward by the diffraction gratings 61 so as to be detected by the line sensors 1 disposed below the diffraction gratings 61.

Also in the present embodiment, the line sensors 1 can be provided outside the screen (i.e., in an empty space outside the liquid crystal screen) of the array substrate 21 so as to be integral with the array substrate 21 and so that light-receiving surfaces 1a of the line sensors 1 face upward, as described above. This allows easy alignment and reduction in cost, thickness, and size of the liquid crystal display device 40.

The present embodiment has dealt with an example in which the diffraction gratings 61 are used. However, the present embodiment is not limited to this.

The other examples of a method for guiding light propagating within the counter substrate 22 to the line sensors 1 include (i) a method of roughening, by etching or sandblasting, parts of the top surface 22c or a bottom surface 22d of the counter substrate 22 which parts overlap the line sensors 1 and (ii) a method of forming a layer made of a white material, such as white plastic, or white paint which have been conventionally used as diffuse reflection materials.

[Embodiment 4]

Another embodiment of the present invention is described below with reference to Fig. 9. Note that the present embodiment discusses differences from the Embodiments 1 through 3. Note also that constituents that have similar functions to those of the Embodiments 1 through 3 are given identical reference numerals, and are not explained repeatedly.

Fig. 9 is a cross-sectional view schematically illustrating an outline configuration of a substantial part of a liquid crystal display device 40 of the present embodiment.

The Embodiment 3 has dealt with a case where the line sensors 1 are provided outside sealing regions formed between the array substrate 21 and the counter substrate 22. Meanwhile, the present embodiment deals with a case where the line sensors 1 are formed in the sealing regions.

The liquid crystal display device 40 shown in Fig. 9 has the same configuration as the liquid crystal display device 40 shown in Fig. 8 except for that (i) line sensors 1 are formed in sealing regions and (ii) a counter substrate 22 is bonded on the line sensors 1 via a sealing material 25 that is made of a transparent sealing resin.

However, in the present embodiment, the sealing material 25, which is formed in the sealing region (sealing region on a left side of Fig. 9) in which the line sensor 1 is formed, has a different thickness from a sealing material 24, which is formed in a sealing region (sealing region on a right side of Fig. 9) in which no line sensor 1 is formed, as illustrated in Fig. 9. Thus, a thickness of a liquid crystal panel 20 (cell thickness) is made uniform. Note that a material of which the sealing material 24 is made may be the same as that of the sealing material 25 or may be different from that of the sealing material 25.

As is clear from the above description, a coordinate sensor 60 of the present embodiment is constituted by at least two line sensors 1 which are disposed in x-axis and y-axis directions and diffraction gratings 61 which are provided on the counter substrate 22 so as to overlap the line sensors 1 in plan view (i.e. when the liquid crystal panel 20 is viewed from above), as with the coordinate sensor 60 shown in the Embodiment 3.

According to the present embodiment, the diffraction gratings 61 are formed on a light path of light emitted from the infrared LEDs 3 as described above. Thus, light which enters the counter substrate 22 from the infrared LEDs 3, propagates within the counter substrate 22, and is then outputted from the counter substrate 22 can be diffracted downward by the diffraction gratings 61 so as to be detected by the line sensors 1 disposed below the diffraction gratings 61 via the sealing material 25 made of a transparent sealing resin.

Also in the present embodiment, the line sensors 1 can be formed on a surface of the array substrate 21 on which surface a circuit such as a TFT is formed, concurrently with formation of the circuit such as a TFT by using a publicly known semiconductor technique.

Also in the present embodiment, the line sensors 1 can be provided, outside the screen (i.e., in an empty space outside the liquid crystal screen), on the array substrate 21 so as to be integral with the array substrate 21 and so that light-receiving surfaces 1a of the line sensors 1 face upward, as described above. This allows easy alignment. Further, according to the present embodiment, the line sensors 1 are provided in the sealing regions as described above. This allows a further reduction in cost and size of the liquid crystal display device 40, as compared with the Embodiment 3.

Note that, also in the present embodiment, light sources for detection of an indicated coordinate may be provided behind the liquid crystal panel 20 as in the Embodiments 2 and 3.

Further, the diffraction gratings 61 are minute grooves that are regularly formed, by a known microfabrication technique, on parts of a top surface 22c or a bottom surface 22d of the counter substrate 22 which parts overlap the line sensors 1, as in the Embodiment 3.

The other examples of a method for guiding light propagating within the counter substrate 22 to the line sensors 1 include (i) a method of roughening the parts of the top surface 22c or the bottom surface 22d of the counter substrate 22 which parts overlap the line sensors 1 and (ii) a method of forming, on the parts, a layer made of a white material or white paint.

[Embodiment 5]

Another embodiment of the present invention is described below with reference to Figs. 10 and 11. Note that the present embodiment discusses differences from the Embodiments 1 through 4. Note also that constituents that have similar functions to those of the Embodiments 1 through 4 are given identical reference numerals, and are not explained repeatedly.

Fig. 10 is a cross-sectional view schematically illustrating an outline configuration of a substantial part of a liquid crystal display device 40 of the present embodiment.

As illustrated in Fig. 10, the liquid crystal display device 40 of the present embodiment includes: a liquid crystal panel 20, a backlight (backlight 30 (see Fig. 1)) (not shown), line sensors 1, a light guide plate 71 which also serves as a cover plate, and infrared LEDs 3.

The light guide plate 71 is not limited to a specific one, provided that it allows transmission of light ((i) light for display (e.g., visible light) that is emitted from a light source for display and (ii) light for detection of an indicated coordinate (e.g., infrared light) that is emitted from a light source for detection of an indicated coordinate). Accordingly, as the light guide plate 71, any one of light guide plates made of various transparent materials that are conventionally used as cover plates (protection plates) or light guide plates can be used.

A transparent material of which the light guide plate 71 is made is not limited to a specific one. Examples of the transparent material include a transparent resin such as an acrylic resin (e.g., PMMA), a polycarbonate resin, a cyclic polyolefin resin, a polyester resin (PET) or a fluorine resin, glass, diamond, and quartz.

That is, the present embodiment deals with an arrangement in which the light guide plate 71, which also serves as a cover plate, is provided, as a touch panel (light guide plate), above the counter substrate 22, instead of the arrangement in which the counter substrate 22 serves as a touch panel. Accordingly, in the present embodiment, a surface (top surface) of the light guide plate 71 is used as a coordinate input surface 20a (coordinate detection surface) of the touch panel. In the present embodiment, the infrared LEDs 3 do not face end surfaces of the counter substrate 22, but face end surfaces of the light guide plate 71.

Further, end surfaces 71a of the light guide plate 71 which are opposite to the end surfaces 71b facing the infrared LEDs 3 are molded or polished into 45° mirrors. As necessary, lenses 72 (convex lenses) are provided on regions of a bottom surface (rear surface) 71 c of the light guide plate 71 which regions face the line sensors 1. The lenses 72 are bonded to the bottom surface 71 c of the light guide plate 71, for example, with the use of an optical coupling material or the like. The lenses 72 are not limited in particular, provided that the lenses 72 are convex lenses. Therefore, various kinds of conventionally known lenses can be used as the lenses 72.

As described above, the liquid crystal display device 40 of the present embodiment has a similar configuration to the liquid crystal display device 40 shown in Fig. 1 except for that (i) the light guide plate 71 having, as light path changing means (light path changing sections), the 45° mirrors (the end surfaces 71a serving as the 45° mirrors) is provided instead of the right angle prisms 2 and the optical coupling material 4, (ii) the light guide plate 71 serves as a touch panel, and (iii) the infrared LEDs 3 are provided so as to face the end surfaces 71b of the light guide plate 71.

According to the configuration of the liquid crystal display device 40 shown in Fig. 10, the 45° mirrors are provided on light paths of light emitted from the infrared LEDs 3 as described above. Thus, light which enters the light guide plate 71 from the infrared LEDs 3, propagates within the light guide plate 71, and is outputted from the light guide plate 71 can be reflected downward by the 45° mirrors so as to be detected by the line sensors 1 disposed below the 45° mirrors. Here, in a case where the lenses 72 are provided between the 45° mirrors and the line sensors 1 as shown in Fig. 10, the light reflected by the 45° mirrors can be efficiently focused on the line sensors 1.

Also in the present embodiment, the line sensors 1 can be provided, outside the screen (i.e., in an empty space outside the liquid crystal screen), on the array substrate 21 so as to be integral with the array substrate 21 and so that light-receiving surfaces 1a of the line sensors 1 face upward, as described above. This allows easy alignment and reduction in cost, thickness, and size of the liquid crystal display device 40.

Needless to say, also in the present embodiment, the line sensors 1 can be formed on a surface of the array substrate 21 on which surface a circuit such as a TFT is formed, concurrently with formation of the circuit such as a TFT by using a publicly known semiconductor technique.

Also in the present embodiment, light sources for detection of an indicated coordinate may be provided behind the liquid crystal panel 20, as in the Embodiments 2 through 4. In a case where the light sources for detection of an indicated coordinate are provided behind the liquid crystal panel 20, a coordinate can be inputted just by bringing an object to be detected such as a finger close to the coordinate input surface 20a, i.e., without contact with the coordinate input surface 20a, as in the Embodiment 2. It is therefore possible that the light guide plate 71 has only a function as a light guide plate. The surface of the light guide plate 71 need not necessarily be used as a touch panel.

The present embodiment has dealt with an example in which the end surfaces 71a of the light guide plate 71 are 45° mirrors as described above. However, the present embodiment is not limited to this.

Fig. 11 illustrates another example of the liquid crystal display device 40 which includes a coordinate sensor having 45° mirrors that serve as light path changing means.

The liquid crystal display device 40 shown in Fig. 11 has a similar configuration to the liquid crystal display device 40 shown in Fig. 1 except for that (i) the right angle prisms 2 and the optical coupling material 4 that are used in the Embodiment 1 are not provided, and instead (ii) end surfaces 22a of a counter substrate 22 are 45° mirrors.

That is, a structure of the liquid crystal display device 40 shown in Fig. 11 is similar to a structure in which the right angle prisms 2 in the liquid crystal display device 40 shown in Fig. 1 are hollowed out.

According to the configuration of the liquid crystal display device 40 shown in Fig. 11, the 45° mirrors 81 (light path changing means, light path changing sections) are provided on light paths of light emitted from the infrared LEDs 3 as described above. Thus, light which enters the counter substrate 22 from the infrared LEDs 3, propagates within the counter substrate 22, and is outputted from the end surfaces 22a of the counter substrate 22 into the air, i.e., into an outside of the counter substrate 22 can be reflected downward by the 45° mirrors 81 so as to be detected by the line sensors 1 disposed below the 45° mirrors 81.

As described above, a coordinate sensor 70 (see Fig. 10) and a coordinate sensor 80 (see Fig. 11) that are used in the respective liquid crystal display devices 40 of the present embodiment each include at least two line sensors 1 which are disposed in x-axis and y-axis directions, and 45° mirrors which are disposed above the line sensors 1 so as to overlap the line sensors 1 in plan view. Further, the coordinate sensor 70 may further include the lenses 72 (convex lenses) disposed between the line sensors 1 and the 45° mirrors. Also in the present embodiment, the lenses 72 may be bonded to the bottom surface 71c (rear surface) of the light guide plate 71, for example, with the use of an optical coupling material.

As described above, the light guide plate 71 is used as a touch panel or a light guide plate for non-contact coordinate inputting. Accordingly, the light guide plate 71 and the line sensors 1 need not necessarily be provided so as to be integral with the liquid crystal display device. It is also possible that the light guide plate 71 and the line sensors 1 are provided, as a contact mode or non-contact mode coordinate sensor, separately from the liquid crystal panel 20.

That is, a coordinate sensor of the present embodiment may be configured to include: (i) a light guide plate (e.g., the light guide plate 71) having at least two 45° mirrors formed on respective sides (a side extending in an x-axis direction and a side extending in a y-axis direction) of the light guide plate, (ii) line sensors 1 disposed so as to face the 45° mirrors, and (iii) light sources (e.g., the infrared LEDs 3 or the backlight used in the Embodiment 2) for illuminating the light guide plate (coordinate input surface of the light guide plate). Such a coordinate sensor can be used not only as a coordinate sensor for a liquid crystal display device, but also as a coordinate sensor for various kinds of electronic devices or for fixed display media such as paper (printed material).

The present embodiment has dealt with an example in which 45° mirrors are used as the light path changing means as described above. However, the present embodiment is not limited to this. Various kinds of conventionally known reflectors etc. can be used as the light path changing means (light path changing sections).

[Embodiment 6]

Another embodiment of the present invention is described below with reference to Fig. 12. Note that the present embodiment discusses differences from the Embodiments 1 through 5. Note also that constituents that have similar functions to those of the Embodiments 1 through 5 are given identical reference numerals, and are not explained repeatedly.

Fig. 12 is a cross-sectional view schematically illustrating an outline configuration of a substantial part of a liquid crystal display device 40 of the present embodiment.

The Embodiment 5 has dealt with a case where the line sensors 1 are provided outside the sealing regions formed between the array substrate 21 and the counter substrate 22. Meanwhile, the present embodiment deals with a case where the line sensors 1 are formed in the sealing regions as in the Embodiment 4.

That is, the liquid crystal display device 40 shown in Fig. 12 has the same configuration as the liquid crystal display device 40 shown in Fig. 10 except for that (i) line sensors 1 are formed in sealing regions, (ii) a counter substrate 22 is bonded to the line sensors 1 via a sealing material 25 made of a transparent sealing resin, and (iii) a light guide plate 71 is disposed above the counter substrate 22 so that 45° mirrors (end surfaces 71 a serving as the 45° mirrors) are located above the line sensors 1.

Also in the present embodiment, the sealing material 25, which is formed in the sealing region (sealing region on a left side of Fig. 12) in which the line sensor 1 is formed, has a different thickness from a sealing material 24, which is formed in a sealing region (sealing region on a right side of Fig. 12) in which no line sensor 1 is formed, as illustrated in Fig. 12. Thus, a thickness of a liquid crystal panel 20 (cell thickness) is made uniform.

According to the present embodiment, the 45° mirrors are formed on light paths of light emitted from infrared LEDs 3 as described above. Thus, light which enters the light guide plate 71 from the infrared LEDs 3, propagates within the light guide plate 71, and is outputted from the light guide plate 71 can be reflected downward by the 45° mirrors so as to be detected by the line sensors 1 disposed below the 45° mirrors via the sealing material 25 made of a transparent sealing resin.

Also in the present embodiment, in a case where lenses 72 are provided between the 45° mirrors and the line sensors 1 as illustrated in Fig. 12, the light reflected by the 45° mirrors can be efficiently focused on the line sensors 1.

Also in the present embodiment, the line sensors 1 can be provided, outside the screen (i.e., in an empty space outside the liquid crystal screen), on the array substrate 21 so as to be integral with the array substrate 21 and so that light-receiving surfaces 1a of the line sensors 1 face upward, as described above. This allows for easy alignment. Further, according to the present embodiment, the line sensors 1 are provided in the sealing regions as described above. This allows a further reduction in cost and size as compared with the Embodiment 5.

Needless to say, also in the present embodiment, the line sensors 1 can be formed on a surface of the array substrate 21 on which surface a circuit such as a TFT is formed, concurrently with formation of the circuit such as a TFT by using a publicly known semiconductor technique.

Also in the present embodiment, light sources for detection of an indicated coordinate may be provided behind the liquid crystal panel 20, as in the Embodiments 2 through 5.

The present embodiment has dealt with an example in which the end surfaces 71a of the light guide plate 71 are 45° mirrors serving as light path changing means (light path changing sections) as in the Embodiment 5. However, the light path changing means is not limited to this configuration.

In the liquid crystal display device 40 shown in Fig. 12, the line sensors 1 and the end surfaces 71a serving as the 45° mirrors are formed so as to overlap the counter substrate 22. Accordingly, the light path changing means and the coordinate sensor may be configured such that (i) a plate-like light guide plate having a uniform thickness is used as the light guide plate 71 and (ii) the 45° mirrors 81 shown in Fig. 11 is provided along end surfaces of the light guide plate 71.

Also in the present embodiment, the light path changing means (light path changing sections) are not limited to 45° mirrors. Various kinds of conventionally known reflectors etc. can be used as the light path changing means (light path changing sections).

The present embodiment has dealt with an example in which the lenses 72 are bonded to a bottom surface 71c of the light guide plate 71 with the use of an optical coupling material or the like so as to be integral with the light guide plate 71, as in the coordinate sensor 70 of the Embodiment 5 (see Fig. 10). However, the present embodiment is not limited to this.

In a case where the lenses 72 are provided between the light guide plate 71 serving as the light path changing means and the line sensors 1 provided in the sealing regions formed between the array substrate 21 and the counter substrate 22, the lenses 72 may be just placed on a top surface 22c of the counter substrate 22 or may be provided on the top surface 22c of the counter substrate 22 so as to be integral with the counter substrate 22. In this case, the lenses 72 may be disposed so that flat surfaces 72a of the lenses 72 to which flat surfaces 72 the light guide plate 71 is bonded (see Fig. 12) are in contact with or bonded to the counter substrate 22.

[Embodiment 7]

Another embodiment of the present invention is described below with reference to Figs. 13 and 14. Note that the present embodiment discusses differences from the Embodiments 1 through 6. Note also that constituents that have similar functions to those of the Embodiments 1 through 6 are given identical reference numerals, and are not explained repeatedly.

Figs. 13 and 14 are cross-sectional views each schematically illustrating an outline configuration of a substantial part of a liquid crystal display device 40 of the present embodiment.

Each of the Embodiments 5 and 6 has discussed an arrangement in which the end surfaces 71a of the light guide plate 71 also serving as a cover plate which end surfaces 71a are opposite to the end surfaces 71b facing the infrared LEDs 3 are molded or polished into 45° mirrors. Meanwhile, the present embodiment deals with an example in which end surfaces 71a of a light guide plate 71 are molded or polished into not 45° mirrors but concave mirrors.

The liquid crystal display devices 40 respectively shown in Figs. 13 and 14 each have the same configuration as the liquid crystal display device 40 shown in Fig. 10 or 12 except for that the end surfaces 71a of the light guide plate 71 are molded or polished into concave mirrors as described above.

That is, in the liquid crystal display devices 40 respectively shown in Figs. 13 and 14, a (x, y) coordinate can be detected by a similar principle to that in Fig. 10 or 12 except for that light is reflected downward not by 45° mirrors but by the concave mirrors.

As described above, a coordinate sensor 70 used in the liquid crystal display devices 40 of the present embodiment include: at least two line sensors 1 which are disposed in x-axis and y-axis directions, and concave mirrors (mirrors each having a reflecting surface that bulges inward and an outer surface that bulges outward) which are disposed above the line sensors 1 so as to respectively overlap the line sensors 1 in plan view.

Further, the coordinate sensor 70 of the present embodiment may be configured to include (i) a light guide plate (e.g., the light guide plate 71) having at least two concave mirrors formed on respective sides (a side extending in an x-axis direction and a side extending in a y-axis direction) of the light guide plate, (ii) line sensors 1 which are disposed so as to respectively face the concave mirrors, and (iii) light sources (e.g., the infrared LEDs 3 or the backlight used in the Embodiment 2) for illuminating the light guide plate (coordinate input surface of the light guide plate). The coordinate sensor 70 also can be used not only as a coordinate sensor for a liquid crystal display device, but also as a coordinate sensor for various kinds of electronic devices or for fixed display media such as paper (printed material).

Also in the present embodiment, the light path changing means (light path changing sections) are not limited to concave mirrors. Various kinds of conventionally known reflectors etc. can be used as the light path changing means (light path changing sections).

According to the present embodiment, similar effects to the Embodiments 5 and 6 can be obtained.

[Embodiment 8]

Another embodiment of the present invention is described below with reference to Fig. 15. Note that the present embodiment discusses differences from the Embodiments 1 through 7. Note also that constituents that have similar functions to those of the Embodiment 1 are given identical reference numerals, and are not explained repeatedly.

The Embodiment 1 has dealt with an example in which a coordinate sensor is provided so as to be integral with a liquid crystal display device. However, as described above, a coordinate sensor of the present invention need not necessarily be provided so as to be integral with a liquid crystal display device. It is possible that the coordinate sensor be provided, as a contact-mode or non-contact mode coordinate sensor, separately from the liquid crystal display device.

The present embodiment therefore deals with an example in which a coordinate sensor is provided separately from a liquid crystal display panel and a liquid crystal display device.

Fig. 15 is a cross-sectional view schematically illustrating an outline configuration of a substantial part of a coordinate sensor of the present embodiment.

The coordinate sensor 90 shown in Fig. 15 includes: (i) a transparent substrate 91 (template), such as a glass substrate, used as a coordinate input section (light guide plate), (ii) right angle prisms 2 and line sensors 1 which are bonded, preferably with the use of an optical coupling material 4, to at least two sides (at least a side extending in an x-axis direction and a side extending in a y-axis direction) of the transparent substrate 91, and (iv) infrared LEDs 3 which irradiate the transparent substrate 91 with light.

As illustrated in Fig. 15, constituents of the coordinate sensor 90 other than the transparent substrate 91 and the infrared LEDs 3 have the same configurations as those of the coordinate sensor 10 of the Embodiment 1. That is, the coordinate sensor 10 of the present embodiment has the same configuration as the coordinate sensor 10 of the Embodiment 1 except for that the line sensors 1 are not provided on the array substrate 21. The coordinate sensor 10 of the present embodiment can be independently used as a coordinate sensor.

For convenience of description, a coordinate sensor including a coordinate input section (light guide member) is hereinafter referred to as "coordinate input device" as necessary, and a coordinate sensor including no coordinate input section (light guide member) is hereinafter referred to as "coordinate detection device" as necessary.

The line sensors 1 are provided along end surfaces (edge sections) of the transparent substrate 91 so as to be parallel to (face upward) a surface 91a of the transparent substrate 91 (light guide member) which surface 91a serves as a coordinate input surface (image display surface) of the coordinate sensor 90, as in the Embodiment 1.

Accordingly, in a case where the coordinate sensor 90 is disposed on an image display surface 100a of an image display member 100 that is provided separately from the coordinate sensor 90, a coordinate (position indicated by an object to be detected such as a finger) inputted on the image display surface 100a via the transparent substrate 91 can be detected and inputted.

Note that the image display member 100 may be a display panel (electronic display panel) of a display device such as a liquid crystal display device or an EL display device (organic EL display device) or may be a fixed display medium such as paper (printed material).

It is unnecessary to irradiate an image display region of the image display member 100 with light from behind the image display member 100 especially in a case where (i) the coordinate sensor 90 includes light sources for an indicated coordinate for irradiating the image display region with light and (ii) the light sources are provided so as to face the light path changing means (light path changing sections, the right angle prisms 2 in the present embodiment) across the image display region in x-axis and y-axis directions or provided so as to face corner sections of the image display region. Accordingly, in this case, a coordinate indicated by an object to be detected can be detected even in a case where the image display member 100 is a reflective liquid crystal display device, an electronic paper, each of which does not transmit light, or a medium (fixed display medium), such as a plastic material or paper (printed material), which hardly transmits light.

The present embodiment has dealt with an example in which the coordinate sensor 90 includes the infrared LEDs 3 as the light sources for detection of an indicated coordinate as described above. However, the present embodiment is not limited to this.

For example, in a case where the image display member 100 transmits light, a backlight may be used as the light sources for detection of an indicated coordinate as in the Embodiment 2. That is, a light source for detection of an indicated coordinate may be provided behind the image display member 100.

Needless to say, visible light sources or ultraviolet light sources may be used as the light sources for detection of an indicated coordinate instead of infrared light sources.

Further, the present embodiment has dealt with an example in which the right angle prisms 2 are used as light path changing means as described above. However, the present embodiment is not limited to this. Each of the various kinds of light path changing means described in the Embodiments 1 through 7 can be used as the light path changing means of the present embodiment.

Further, the present embodiment has dealt with an example in which a glass substrate is used as the transparent substrate 91. However, the present embodiment is not limited to this. The transparent substrate 71 is not limited to a specific one, provided that it is a hard substrate which transmits light (light for detection of an indicated coordinate (e.g., infrared light)).

Examples of the transparent substrate 91 include a substrate (light guide plate, light guide member) made of a material similar to the transparent materials exemplified as a material of the light guide plate 71.

Also in the following embodiments, a light guide member is made of a material that transmits light for display (e.g., visible light) emitted from a light source for display or light for detection of an indicated coordinate (e.g., infrared light) emitted from a light source for detection of an indicated coordinate although specific examples of such a material will not be presented. Such a material is not limited to a specific one, and therefore can be a material similar to the transparent materials exemplified as the material of the light guide plate 71.

Further, a glass document or a plastic substrate on which a specific image is formed in advance can be used as a coordinate input section (a light guide member or an image display member) instead of the transparent substrate 91.

The present embodiment has mainly dealt with a case where the coordinate sensor includes a light guide member as described above. However, the present embodiment is not limited to this. The coordinate sensor need not necessarily include a light guide member. For example, in the example shown in Fig. 15, it is also possible that (i) the infrared LEDs emit light so that the light enters the right angle prisms 2 facing the infrared LEDs 3, and (ii) when an object to be detected such as a finger blocks light path of the light, a distribution (minus peak) of received light amounts is detected so that a coordinate indicated by the object to be detected is obtained. In this case, the line sensors 1 may be provided not on the top surface of the image display member 100 as shown in Fig. 15, but be provided so as to face end surfaces of the image display member 100.

However, in a case where the coordinate sensor includes a light guide member as described above, light that enters the image display region can be propagated in x-axis and y-axis directions so as to be guided to the right angle prisms 2. Accordingly, in a case where the coordinate sensor includes a light guide member as described above, there is no need to dispose a plurality of light sources in x-axis and y-axis directions of the image display region. This offers greater flexibility in disposing light sources for irradiating the image display region with light. Further, in a case where the coordinate sensor includes a light guide member and where a backlight is used as a light source, an indicated coordinate can be detected only by bringing an object to be detected close to the light guide member as described in the Embodiment 2.

Further, a light-receiving unit constituted by a line sensor 1 and a right angle prism 2 disposed in an x-axis direction or a y-axis direction can be used as a coordinate sensor in a case where there is no need to detect both of a coordinate in the x-axis direction and a coordinate in the y-axis direction. Note that whether both of the coordinate in the x-axis direction and the coordinate in the y-axis direction need to be detected or not depends on display (e.g., disposition of selection buttons) of the image display surface 100a of the image display member 100.

In the light-receiving unit, the line sensor 1 is disposed so that a light-receiving surface 1a of the line sensor 1 is parallel to the image display surface 100a. Accordingly, the line sensor 1 and wiring and circuits necessary for the line sensor 1 can be formed on a surface on which other circuits in the image display region are formed, concurrently with formation of these circuits, for example. Further, since the line sensor 1 is disposed so that the light-receiving surface 1a of the line sensor 1 is parallel to the image display surface 100a, it is possible to reduce a thickness of the light-receiving unit. Accordingly, the light-receiving unit can be suitably used as a light-receiving unit in the coordinate sensor 10 and the coordinate sensor 90.

[Embodiment 9]

Another embodiment of the present invention is described below with reference to Figs. 16 through 19. Note that the present embodiment discusses differences from the Embodiments 1 through 8. Note also that constituents that have similar functions to those of the Embodiments 1 through 8 are given identical reference numerals, and are not explained repeatedly.

The present embodiment deals with an example of a configuration of a coordinate input section in which a coordinate is inputted by contact.

In the present embodiment, the coordinate input section serves not only as a light guide section (touch panel) but also as reflectance changing means (reflectance changing member) for changing reflectance.

The present embodiment deals with, as an example of an electronic device including a coordinate sensor, a liquid crystal display device with a built-in touch panel. However, the present embodiment is not limited to this. Further, in the present embodiment, the backlight 50 of the Embodiment 2 is used as a light source for detection of an indicated coordinate. However, the present embodiment is not limited to this.

Fig. 16 is a cross-sectional view illustrating an outline configuration of a coordinate input section including a reflectance changing section. Fig. 17 is a view illustrating an outline configuration of a substantial part of a liquid crystal display device including the coordinate input section shown in Fig. 16.

As illustrated in Fig. 16, the coordinate input section 120 (light guide member, reflectance changing member) used in the present embodiment includes: a front-side polarization plate 26, a reflectance changing section 110, a support film 110e (support), an adhesion layer 110f that are stacked in this order from a coordinate input surface 120a side.

The reflectance changing section 110 includes: two elastic films 110a and 110b, each of which has a plate shape, and an air layer 110c sandwiched between the two elastic films 110a and 110b. The air layer 110c exists only while no pressure is being applied to the coordinate input surface 120a.

Further, the reflectance changing section 110 has projections (distance maintaining sections) 110d for creating the air layer 110c which projections 110d are provided on the elastic film 110a that is lower one of the two elastic films 110a and 110b. This makes it possible to surely create the air layer 110c between the two elastic films 110a and 110b while no pressure is being applied to the coordinate input surface 120a. The present embodiment deals with an example in which the projections 110d are provided on the elastic film 110a that is lower one of the two elastic films 110a and 110b. However, the present embodiment is not limited to this arrangement. The projections 110d may be provided on the elastic film 110b that is upper one of the two elastic films 110a and 110b or may be provided on each of the two elastic films 110a and 1 10b.

As described above, the reflectance changing section 110 includes the support film 110e that is provided on a surface of the elastic film 110a which surface faces a liquid crystal panel 20. The support film 110e is made of a transparent film or the like having smaller elasticity than the elastic films 110a and 110b, and supports the elastic films 110a and 110b. Presence of the support film 110e allows the reflectance changing section 110 to have more stable form as compared to a case where the reflectance changing section 110 is constituted only by the elastic films 110a and 110b which are flexible and whose forms are not stable. This allows easy handling of the coordinate input section 120. As a result, misalignment hardly occurs in a case where the coordinate input section 120 is disposed on the liquid crystal panel 20.

The adhesion layer 110f is provided on a surface of the support film 110e which surface faces the liquid crystal panel 20. The coordinate input section 120 is bonded to the liquid crystal panel 20 by the adhesion layer 110f.

A material of which the elastic films 110a and 110b are made is not limited to a specific one, provided that the material has elasticity. However, it is preferable that silicon rubber or the like is used as the material. It is preferable that the elastic films 110a and 110b each have transmittance of 90% or larger. Further, it is preferable that the elastic films 110a and 110b each have a refractive index in a range from 1.4 to 1.6. The elastic films 110a and 110b may be made of the same material or may be made of different materials.

In a case where the elastic films 110a and 110b have the same refractive index, light entirely passes through the reflectance changing section 110 while the elastic films 110a and 110b are being in contact with each other. On this account, it is preferable that the elastic films 110a and 110b have the same refractive index. This makes it possible to more surely determine whether or not an object such as a finger or an input pen has touched the coordinate input surface 120a.

In the present embodiment, the reflectance changing section 110 is provided between the liquid crystal panel 20 and the front-side polarization plate 26 as illustrated in Fig. 17. Note that a rear-side polarization plate 27 is provided on a rear surface of the liquid crystal panel 20. As illustrated in Fig. 17, the air layer 110c disappears in a part where a pressure is applied to the coordinate input surface 120a by an object such as a finger, since the elastic film 110b is pressed towards the elastic film 110a so that surfaces of the elastic films 110a and 110b make contact with each other. Accordingly, reflectance of light emitted from the backlight 50 declines when an object such as a finger touches the coordinate input surface 120a so that a pressure is applied on the coordinate input surface 120a.

That is, as illustrated in Fig. 17, light that enters the reflectance changing section 110 from the backlight 50 is diffused and reflected within the elastic films 110a and 110b. Then, a part of the light propagates within the reflectance changing section 110 while being repeatedly reflected by an upper surface of the elastic film 110a and a lower surface of the elastic film 110b. Thus, infrared light which has propagated within the reflectance changing section 110 and has been outputted from end surfaces (not shown) of the reflectance changing section 110 can be reflected downward by light path changing means (reflectors, light path changing sections) shown in the Embodiments 1 through 8 so as to be detected by line sensors 1 (not shown) disposed below the light path changing means (e.g., disposed outside a display region on an array substrate 21).

Here, in a case where the coordinate input surface 120a of the coordinate input section 120 is touched by an object to be detected such as a finger, reflectance of the infrared light declines in a touched part as described above. As a result, an intensity of the infrared light propagating within the counter substrate 22 attenuates on a line extended from the touched part in an x-axis direction and on a line extended from the touched part in a y-axis direction.

It is thus possible to obtain a (x, y) coordinate of the touched part by detecting a light intensity distribution in outputs of the line sensors 1.

Also in a case where, instead of the backlight 50, infrared LEDs 3 are disposed so as to face end surfaces of the coordinate input section 120 (reflectance changing section 110) and to irradiate the end surfaces of the reflectance changing section 110 with infrared light, a (x, y) coordinate of a touched part can be detected by detecting an intensity distribution of infrared light that has propagated within the reflectance changing section 110 and that has been outputted from end surfaces of the reflectance changing section 110 that are opposite to the end surfaces facing the infrared LEDs 3.

Also in the present embodiment, a coordinate sensor including the coordinate input section having the reflectance changing section 110 can be provided separately from a liquid crystal panel and a liquid crystal display device. The coordinate input section having the reflectance changing section 110 can be suitably used also as a coordinate input section (light guide plate) of such a coordinate sensor.

Fig. 18 is a cross-sectional view schematically illustrating an outline configuration of a substantial part of a coordinate sensor of the present embodiment.

The coordinate sensor 130 (coordinate input device) shown in Fig. 18 includes, as a coordinate input section (light guide plate), a coordinate input section 131 (light guide member, reflectance changing member) having the reflectance changing section 110, instead of the transparent substrate 91 of the coordinate sensor 90 of the Embodiment 8.

Also in the present embodiment, the coordinate sensor 10 (coordinate detection device) has the same configuration as the coordinate sensor 10 of the Embodiment 1 except for that line sensors 1 are not provided on an array substrate 21 as illustrated in Fig. 18. The coordinate sensor 130 can be independently used as a coordinate sensor.

The coordinate input section 131 includes a support film 110e provided on a bottom surface of the reflectance changing section 110. Note, however, that the coordinate input section 131 need not necessarily include the support film 110e. However, in a case where the support film 110e is provided on the bottom surface of the reflectance changing section 110 as described above, the reflectance changing section 110 can have a stable form. This allows easy handling of the coordinate sensor 130. Moreover, misalignment hardly occurs in a case where the coordinate sensor 130 is disposed on an image display surface 100a of an image display member 100 as illustrated in Fig. 18.

In a case where the coordinate sensor 130 is disposed on the image display surface 100a of the image display member 100 that is provided separately from the coordinate sensor 130 as illustrated in Fig. 18, a coordinate (coordinate indicated by an object to be detected, such as a finger, that serves as coordinate indicating means) inputted on the image display surface 100a via the coordinate input section 131 can be detected and inputted.

Note that the image display member 100 may be a display panel (electronic display panel) of a display device such as a liquid crystal display device or an organic EL panel or may be a fixed display medium such as paper (printed material).

In the coordinate sensor 130 shown in Fig. 18, infrared LEDs 3 serving as light sources for detection of an indicated coordinate are disposed so as to face the elastic film 110a. However, the present embodiment is not limited to this. For example, a backlight 50 may be used as a light source for detection of an indicated coordinate as illustrated in Fig. 19.

Instead of the coordinate input section 131, a coordinate input section 133 (light guide member, reflectance changing member) may be used which includes: the reflectance changing section 110; a substrate 132, such as a glass document or a plastic substrate, on which a specific image is formed in advance; and an adhesion layer 110f that bonds the reflectance changing section 110 and the substrate 132, as illustrated in Fig. 19.

In this case, a coordinate sensor 130 shown in Fig. 19 can be independently used as an electronic device using the coordinate sensor 10.

[Embodiment 10]

Another embodiment of the present invention is described below with reference to Figs. 20 through 23. Note that the present embodiment discusses differences from the Embodiments 1 through 9. Note also that constituents that have similar functions to those of the Embodiment 1 are given identical reference numerals, and are not explained repeatedly.

Fig. 20 is a cross-sectional view illustrating an outline configuration of a coordinate input section of the present embodiment. Fig. 21 is a cross-sectional view illustrating an outline configuration of a substantial part of a liquid crystal display device including the coordinate input section shown in Fig. 20.

The coordinate input section 140 (light guide member, reflectance changing member, reflectance changing section) shown in Fig. 20 includes: an elastic film 141; and a plate-like transparent substrate 142 that is stacked on the elastic film 141, the elastic film 141 having a plurality of ridges and grooves 143 (distance maintaining sections) on a surface thereof that makes contact with (faces) the transparent substrate 142. Since the ridges and grooves 143 are formed on the surface of the elastic film 141 which surface makes contact with the transparent substrate 142, an air layer 144 is created between the elastic film 141 and the transparent substrate 142. The air layer 144 exists only while no pressure is being applied to a coordinate input surface 140a.

In a case where the coordinate input section 140 is used as a coordinate input section (touch panel) of a liquid crystal display device 40 with a built-in touch panel as illustrated in Fig. 21, a front-side polarization plate 26 can be used as the transparent substrate 142 as illustrated in Fig. 21.

In the coordinate input section 140, it is preferable that an average spacing between any adjacent ones of the ridges and grooves 143 shown in Fig. 20 falls in a range from 3 $\mu$m to 2 mm. Further, it is preferable that an average roughness of a central line falls in a range from 5 $\mu$m to 50 $\mu$m. The term "average roughness of a central line" refers to an average value of depths of the ridges and grooves, and is an indicator indicative of how strongly the elastic film 141 and the transparent substrate 142 (the front-side polarization plate 26) stick to each other. Specifically, as the average roughness (the depths of the ridges and grooves) becomes smaller, a pathway of an air becomes narrower, and therefore the elastic film 141 and the transparent substrate 142 more strongly adhere to each other.

The elastic film 141 can be made of a material similar to the material of which the elastic films 110a and 110b used in the Embodiment 9 are made.

As illustrated in Fig. 21, light that is emitted from the backlight 50, passes through the liquid crystal panel 20, and then enters the coordinate input section 140 once enters the air layer 144 formed between the elastic film 141 and the front-side polarization plate 26. A part of the light that travels within the air layer 144 is reflected by a border between the air layer 144 and the front-side polarization plate 26, and the other part of the light passes through the border.

Meanwhile, light that is reflected by surfaces of ridges 143a (see Fig. 20) of the ridges and grooves 143 of the elastic film 141 propagates within the coordinate input section 140 while being repeatedly reflected by the surfaces of the ridges 143a, and a part of the light is outputted from an end surface of the coordinate input section 140, as in the liquid crystal display device 40 shown in Fig. 17 in the Embodiment 9.

Here, in a case where the coordinate input surface 140a of the coordinate input section 140 configured as above is touched by an object to be detected such as a finger so that a pressure is applied to the coordinate input section 140, the ridges 143a of the elastic film 141 are compressed so as to make contact with a surface of the front-side polarization plate 26. As a result, the air layer 144 disappears in a part where the ridges 143a are in contact with the front-side polarization plate 26. Accordingly, no light is reflected by the border between the air layer 144 and the front-side polarization plate 26. That is, light entirely passes through the border and enters the front-side polarization plate 26. Further, a part of light falling on the surfaces of the ridges 143a also passes through the border and enters the front-side polarization plate 26 in the part where the ridges 143a are in contact with the front-side polarization plate 26.

In this manner, when an object to be detected such as a finger touches the coordinate input surface 140a so that a pressure is applied to the coordinate input surface 140a, reflectance of light emitted from the backlight 50 declines in a touched part.

Accordingly,, also in the liquid crystal display device 40 shown in Fig. 21, infrared light that has propagated within the coordinate input section 140 and that has been outputted from end surfaces (not shown) of the coordinate input section 140 can be reflected downward by light path changing means (reflectors, light path changing sections) shown in the Embodiments 1 through 8 so as to be detected by line sensors 1 (not shown) disposed below the light path changing means (e.g., disposed outside a display region on an array substrate 21). A (x, y) coordinate of the touched part can be detected by detecting a peak (minus peak) of an intensity distribution of the infrared light thus detected by the line sensors 1.

Also in a case where, instead of the backlight 50, infrared LEDs 3 are disposed so as to face end surfaces of the coordinate input section 140 (reflectance changing section) and to irradiate the end surfaces of the reflectance changing section 140 with infrared light, a (x, y) coordinate of a touched part can be detected by detecting a peak (minus peak) of an intensity distribution of infrared light that has propagated within the reflectance changing section 110 and that has been outputted from end surfaces of the coordinate input section 140 that are opposite to the end surfaces facing the infrared LEDs 3.

The present embodiment has mainly dealt with an example in which the coordinate input section 140 is configured such that a plurality of ridges and grooves are formed on the surface of the elastic film 141 which surface makes contact with the front-side polarization plate 26. However, the present embodiment is not limited to this. Specifically, the present embodiment encompasses a case where a plurality of ridges and grooves are formed on a surface of the elastic film 141 which surface is opposite to the surface that makes contact with the front-side polarization plate 26. According to the arrangement, a reflectance changing section whose reflectance is reduced by application of a pressure can be realized.

Further, the present embodiment has mainly dealt with an example in which the coordinate input section 140 (reflectance changing section) is configured such that the elastic film 141 and the front-side polarization plate 26 are stacked. However, the present embodiment is not limited to this. For example, another arrangement is also possible in which (i) the coordinate input section 140 includes two elastic films 110a and 110b as shown in the Embodiment 9, and (ii) a surface of at least one of the elastic film 110a (lower elastic film) and the elastic film 110b (upper elastic film) has ridges and grooves (e.g., the ridges and grooves 143).

Further, the present embodiment has dealt with an example in which ridges and grooves (e.g., the ridges and grooves 143) are formed, as distance maintaining members, on the top surface or the rear surface of the elastic film 141 as described above. However, the present embodiment is not limited to this. For example, projections similar to the projections 110d of the Embodiment 9 may be formed, as the distance maintaining members, on the top surface or the rear surface of the elastic film 141. Alternatively, one of the above-mentioned distance maintaining members may be formed on at least one of the top surface and the rear surface of the elastic film 141.

Further, the distance maintaining members may be formed on at least one of a surface of the elastic film 141 and a surface of the transparent substrate 142 which surfaces face each other. The elastic film 141 and the transparent substrate 142 may be stacked in any order.

Fig. 22 is a cross-sectional view illustrating another example of the liquid crystal display device 40 of the present embodiment.

As illustrated in Fig. 22, the liquid crystal display device 40 of the present embodiment is configured such that a coordinate input section 140 (reflectance changing section) having the structure shown in Fig. 20 is formed on a top surface of the front-side polarization plate 26. That is, the coordinate input section 140 has a structure such that a plate-like transparent substrate 142 is stacked on an elastic film 141 as shown in Fig. 20 although the structure of the coordinate input section 140 is not specifically shown in Fig. 22. Examples of a material of which the transparent substrate 142 is made include a transparent resin such as an acrylic resin (e.g., PMMA (Polymethylmethacrylate)), a polycarbonate resin, a cyclic polyolefin resin (e.g., "ZEONEX", "ZEONOR", "ARTON", each of which is a product name), a polyester resin (PET; Polyethylene Terephtalate) or a fluorine resin; glass, diamond, and quartz. The other configuration of the liquid crystal display device 40 shown in Fig. 22 is the same as that of the liquid crystal display device 40 shown in Fig. 21, and therefore are not explained repeatedly.

According to the present embodiment, the coordinate input section 140 has the above configuration and has a reflectance changing function as described above. In any of the liquid crystal display devices 40, it is therefore possible to accurately determine whether an object to be detected such as a finger has touched the coordinate input surface 140a.

Also in the present embodiment, a coordinate sensor including the coordinate input section 140 having the configuration shown in Fig. 20 can be provided separately from a liquid crystal panel and a liquid crystal display device as illustrated in Fig. 23.

Fig. 23 is a cross-sectional view schematically illustrating an outline configuration of a substantial part of a coordinate sensor of the present embodiment.

A coordinate sensor 150 shown in Fig. 23 includes, as a coordinate input section (light guide plate), the coordinate input section 140 having the structure shown in Fig. 20, instead of the transparent substrate 91 of the coordinate sensor 90 of the Embodiment 8.

The coordinate sensor 10 shown in Fig. 23 also has the same configuration as the coordinate sensor 10 of the Embodiment 1 except for that line sensors 1 are not provided on an array substrate 21 as in the coordinate sensor 10 of the Embodiment 8. The coordinate sensor 10 can be independently used as a coordinate sensor.

Accordingly, needless to say, the modifications described in the Embodiments 8 and 9 can be made also to the coordinate sensor 150 of the present embodiment.

[Embodiment 11]

Another embodiment of the present invention is described below with reference to Figs. 27, 28 and 2. Note that the present embodiment discusses differences from the Embodiments 1 through 10. Note also that constituents that have similar functions to those of the Embodiments 1 through 10 are given identical reference numerals, and are not explained repeatedly.

The Embodiments 1 through 10 have mainly dealt with an example in which (i) a light guide member is provided at least in a display region, (ii) the light guide member causes light that enters the display region to propagate in x-axis and y-axis directions of the display region and to be guided to line sensors 1 via light path changing sections, and (iii) a coordinate indicated by an object to be detected such as a finger is detected by utilizing attenuation in infrared light intensity, scattering (diffusion) or reflection of infrared light etc. caused by the object to be detected.

The present embodiment deals with an example in which a coordinate indicated by an object to be detected is detected by causing the object to be detected to block light that is emitted from a light source for detection of an indicated coordinate, travels over a display region of an image display member, and then enters a light path changing section, as shown in the Embodiment 8.

Fig. 27 is a cross-sectional view schematically illustrating an outline configuration of a substantial part of a liquid crystal display device of the present embodiment. Fig. 28 is a plan view schematically illustrating, along outputs of line sensors, (i) the outline configuration of the substantial part of the liquid crystal display device of the present embodiment and (ii) how a coordinate is detected in the liquid crystal display device.

As described in the Embodiment 8, a coordinate sensor need not necessarily include a light guide member. The coordinate sensor 70 shown in Fig. 10 includes the light guide plate 71 having 45° mirrors (the end surfaces 71a serving as 45° mirrors) as light path changing means (light path changing sections), whereas a coordinate sensor 160 of the present embodiment includes, as light path changing means (light path changing sections), prisms 161 (optical members, right angle prisms) each of which has a slant surface (end surface 161a serving as a 45° mirror) molded or polished into a 45° mirror and each of which is provided on an end portion (outside of a display region) of a top surface 22c of a counter substrate 22 (see Fig. 27).

In the present embodiment, infrared LEDs 3 (light sources for detection of an indicated coordinate) are provided on the counter substrate 22 so as to face the prisms 161 and to be located on end portions (edges) (outside of the display region) of the counter substrate 22 that are opposite to the end portions on which the prisms 161 are provided (see the solid lines in Fig. 28). For convenience of illustration, Fig. 28 shows only the end surfaces 161a serving as 45° mirrors instead of showing the entire prisms 161.

More specifically, the prisms 161 and the infrared LEDs 3 are provided on the top surface 22c of the counter substrate 22 so as to face sealing materials 24 (sealing regions) provided between an array substrate 21 and the counter substrate 22, as illustrated in Fig. 27.

In the present embodiment, infrared light emitted from the infrared LEDs 3 propagates along a surface (coordinate input surface 20a) of the counter substrate 22 so as to traverse a coordinate input region 22e (display region, coordinate input section) of the counter substrate 22.

Note that the prisms 161 may be prism mirrors in which reflective members made of a reflective material such as aluminum are provided on the end surfaces 161a.

As illustrated in Fig. 28, the prisms 161 are provided outside the display region, on the counter substrate 22 so as to extend along the coordinate input region 22e (display region) in x-axis and y-axis directions, respectively. For convenience of illustration, Fig. 28 shows only the end surfaces 161a (light-reflecting surfaces, mirror portions) of the prisms 161.

Also in the present embodiment, line sensors 1 are provided, outside the display region, on the array substrate 21 so that light-receiving surfaces 1a of the line sensors 1 are located on light paths of light reflected by the prisms 161 serving as light path changing means, as illustrated in Fig. 28. For example, the line sensors 1 are provided so as to overlap the end surfaces 161a serving as 45° mirrors in plan view and so that the light-receiving surfaces 1a face upward. Specifically, the line sensors 1 are provided on the array substrate 21 so as to be located outside the sealing materials 24 (sealing regions), as illustrated in Fig. 27.

As necessary, lenses 162 (convex lenses) similar to the lenses 72 shown in Fig. 10 are provided on bottom surfaces 161c (rear surfaces) of the prisms 161 so as to face the line sensors 1, as illustrated in Fig. 27. The lenses 162 are bonded to the bottom surfaces 161c of the prisms 161 with the use of an optical coupling material or the like for example.

That is, the liquid crystal display device 40 of the present embodiment has the same configuration as the liquid crystal display device 40 shown in Fig. 10 except for that (i) the coordinate sensor 160 does not include, in a display region of a liquid crystal panel 20, a light guide member which causes light that enters the display region to propagate in x-axis and y-axis directions of the display region and to be guided to the 45° mirrors (the end surfaces 161a serving as 45° mirrors), (ii) the display region of the top surface 22c of the counter substrate 22 is used as the coordinate input surface 20a (coordinate detection surface), and (iii) the infrared LEDs 3 and the prisms 161 having the end surfaces 161a serving as 45° mirrors are provided, outside the display region, on the top surface 22c of the counter substrate 22 so that the infrared LEDs 3 face the prisms 161.

Also in the present embodiment, the 45° mirrors are provided on light paths of light emitted from the infrared LEDs 3 as described above. This allows light which is emitted from the infrared LEDs 3, passes over the display region of the counter substrate 22, and enters the prisms 161 to be reflected downward by the 45° mirrors so as to be detected by the line sensors 1 disposed below the 45° mirrors. Here, in a case where the lenses 162 are provided between the 45° mirrors and the line sensors 1 as illustrated in Fig. 27, the light reflected by the 45° mirrors can be efficiently focused on the line sensors 1.

Also in the present embodiment, the lenses 162 are not limited in particular, provided that they are convex lenses. Accordingly, various conventionally known lenses can be used as the lenses 162. However, in a case where light which travels along a screen in x-axis and y-axis directions is detected by the line sensors 1 as illustrated in Fig. 28, it is preferable that axisymmetrical convex lenses are used as the lenses 162.

This allows the light which travels along the screen in x-axis and y-axis directions to be efficiently focused on the line sensors 1. Note that the axisymmetrical convex lenses are not limited in particular, and therefore may be spherical lenses or may be aspherical lenses.

Also in the present embodiment, each of the line sensors 1 includes: a plurality of light-receiving elements 11 (light-receiving sections), a scanning signal circuit, and a driving control circuit 12 serving as an optical signal read-out circuit, as illustrated in Fig. 2. In Fig. 28, the light-receiving surfaces 1a of the line sensors 1 are indicated by a single continuous rectangle. However, in fact, each of the line sensors 1 has a plurality of light-receiving elements 11 as illustrated in Fig. 2, and the plurality of light-receiving elements 11 correspond one-to-one with the lenses 162. Each of the light-receiving elements 11 of the line sensors 1 is disposed in a region directly below a center of a corresponding lens 162 or in the vicinity of the region. That is, each of the light-receiving elements 11 of the line sensors 1 is disposed so that it can receive light outputted from a corresponding lens 162. That is, isolated regions smaller than areas of the lenses 162 (e.g., rectangular regions overlapping the respective lenses 162) correspond to the light-receiving surfaces 1a of the line sensors 1 (see Fig. 28).

Next, the following deals with how an inputted coordinate (indicated coordinate) is detected in the liquid crystal display device 40 of the present embodiment.

In the present embodiment, when an object to be detected such as a finger touches the coordinate input region 22e of the liquid crystal display device 40, light which is emitted from the infrared LEDs 3, passes over the display region of the liquid crystal display device 40, and enters the prisms 161 is partially blocked by the object to be detected. A coordinate position of the object to be detected is detected by utilizing this. In this case, the phrase "over the display region of the liquid crystal display device 40" refers to "over a display region of an uppermost layer (coordinate input surface) of the liquid crystal display device 40" (i.e., over the coordinate input region 22e (coordinate input section) on which a coordinate to be detected is inputted or indicated). Note that the term "display region" refers to the display region of the coordinate input surface on which a coordinate to be detected is inputted or indicated, unless otherwise specified.

As illustrated in Fig. 28, when an object to be detected such as a finger touches the coordinate input surface 20a (i.e., the coordinate input region 22e of the top surface 22c of the counter substrate 22) of the liquid crystal panel 20 which coordinate input surface 20a serves as a coordinate input surface of the liquid crystal display device 40 of the present embodiment, light which is emitted from the infrared LEDs 3, passes over the display region of the counter substrate 22, and enters the prisms 161 is partially blocked by the object to be detected (specifically, out of light beams traveling over the display region along the surface of the counter substrate 22, a light beam that traverses a coordinate on which the object to be detected is present is blocked), and only light that is not blocked by the object to be detected is reflected by the end surfaces 161 a serving as 45° mirrors so as to be delivered to (enter) the light-receiving surfaces 1a of the line sensors 1.

As a result, the line sensors 1 produce no output (no light detection signal) on lines extended from the touched part in x-axis and y-axis directions (see Fig. 28). Alternatively, outputs (light detection signals) of the line sensors 1 are weaker on the lines extended from the touched part in the x-axis and y-axis directions than on lines extended from an untouched part in the x-axis and y-axis directions.

Accordingly, a (x, y) coordinate of the touched part can be detected by detecting a distribution (minus peak) of received light amounts sensed by the line sensors 1.

In the example shown in Fig. 28, an object to be detected such as a finger touches the coordinate input surface 20a of the liquid crystal panel 20 so that light that traverses a coordinate of a touched part on the counter substrate 22 is completely blocked by the object to be detected. However, the present embodiment is not limited to this.

For example, it is also possible that an object to be detected such as a finger is brought close to the coordinate input surface 20a so as to be located on a light path of light passing over the coordinate input surface 20a (light for detection of an indicated coordinate) and so that only a part of light that traverses a coordinate on which the object to be detected is present is blocked by the object to be detected. Also in this case, the coordinate on which the object to be detected is present can be detected as an indicated coordinate by detecting a distribution (minus peak) of received light amounts sensed by the line sensors 1.

As described above, the coordinate sensor 160 of the present embodiment includes: at least two line sensors 1 that are disposed in x-axis and y-axis directions, the prisms 161 that are disposed, outside the display region, on the top surface 22c of the counter substrate 22 so as to respectively overlap the line sensors 1 in plan view (i.e., when the liquid crystal panel 20 is viewed from above), and light sources for detection of an indicated coordinate (e.g., the infrared LEDs 3) which emit light that passes through (i.e., traverses) the display region and which enters the prisms 161. The coordinate sensor 160 also can be used not only as a coordinate sensor for a liquid crystal display device, but also as a coordinate sensor for various electronic devices or for fixed display media such as paper (printed material).

Also in the present embodiment, shapes of the end surfaces 161a of the prisms 161 are not limited to 45° mirrors. Each of the end surfaces 161a of the prisms 161 can have any shape (e.g., concave mirror as shown in Fig. 13), provided that light emitted from the infrared LEDs 3 can be reflected so as to be guided to the light-receiving surfaces 1a of the line sensors 1. Accordingly, various conventionally known reflectors etc. can be used as the light path changing means. Further, the coordinate sensor 160 may include, instead of the prisms 161, a light guide plate (optical member) or the like which includes: a reflector such as a 45° mirror, an infrared light transmitting filter provided on a light incident surface of the light guide plate, and a light blocking layer provided on a top surface of the light guide plate.

The present embodiment has dealt with a case in which the coordinate sensor 160 does not include a light guide member as described above, as an example in which a coordinate indicated by an object to be detected is detected by causing the object to be detected to block light that is emitted from light sources for detection of an indicated coordinate into light path changing means.

However, the present embodiment is not limited to this. In order to detect a coordinate indicated by an object to be detected by blocking of light, it is only necessary that light to be guided to light path changing means travel over a display region. That is, it is only necessary that (i) the light path changing means be located higher than a coordinate input surface and (ii) light to be guided to the light path changing means travel over the coordinate input surface.

Accordingly, instead of the arrangement in which the infrared LEDs 3 are provided on the end portions (outside the display region) of the top surface 22c of the counter substrate 22 so as to face the light path changing means (e.g., the prisms 161) (not shown) (see the solid lines in Fig. 28), another arrangement can be adopted in which (i) linear light guide plates 163 (light guide members) which respectively extend in x-axis and y-axis directions are provided on the end portions (outside the display region) of the top surface 22c of the counter substrate 22 so as to respectively face the light path changing means (e.g., the prisms 161) (not shown) (see the dashed-dotted lines in Fig. 28) and (ii) infrared LEDs 3 are provided on a corner section of the top surface 22c of the counter substrate 22 so as to respectively face ends of the linear light guide plates 163.

According to the arrangement, light which enters the linear light guide plates 163 from the infrared LEDs 3 disposed so as to respectively face the ends of the linear light guide plates 163 is outputted from end surfaces 163a of the linear light guide plates 163 which end surfaces 163a respectively face the light path changing means (e.g., the prisms 161) (not shown) that are disposed so as to overlap the line sensors 1. Thus, a coordinate indicated by an object to be detected can be detected in a similar principle to the case where the coordinate sensor shown in Fig. 27 is used.

In order that light propagating within the linear light guide plates 163 can be efficiently outputted from the end surfaces 163a, it is desirable that (i) end surfaces 163b etc. of the linear light guide plates 163 which end surfaces 163b are opposite to the end surfaces 163a (light output surfaces, light-emitting surfaces) respectively facing the light path changing means (e.g., the prisms 161) be subjected to a finishing process such as prism processing, texturing, printing processing or mirror finishing or (ii) each of the linear light guide plates 163 include reflectors, such as mirrors, that face the prisms 161. That is, it is preferable that, for example, light diffusing members or light reflecting members be provided on the end surfaces 163b etc. which are opposite to the end surfaces 163a serving as light output surfaces.

As described above, in a case where the coordinate sensor 160 includes no light guide member, a plurality of infrared LEDs 3 serving as light sources for detection of an indicated coordinate need to be disposed, outside the display region, along the display region so as to face the prisms 161 (see the solid lines in Fig. 28) in order to cause light emitted from the light sources for detection of an indicated coordinate to travel over the display region and to enter the prisms 161. However, in a case where the coordinate sensor 160 includes the linear light guide plates 163 (light guide members) disposed, outside the display region, on the top surface 22c (the coordinate input surface 20a) of the counter substrate 22 as described above, it is possible to reduce the number of infrared LEDs 3, thereby making it possible to reduce power consumption.

In the example shown in Fig. 28, two line sensors 1 are provided along respective two sides (a side extending in an x-axis direction and a side extending in a y-axis direction) of the counter substrate 22. However, in a case where light guide members are provided outside the display region (see the dashed-dotted lines in Fig. 28), it is only necessary that at least two line sensors 1 and at least two prisms 161 be provided along at least two sides (at least a side extending in an x-axis direction and a side extending in a y-axis direction) of the counter substrate 22. That is, it is also possible that three line sensors 1 and three prisms 161 are provided along three sides of the counter substrate 22 or that four line sensors 1 and four prisms 161 are provided along four side (all the sides) of the counter substrate 22.

[Embodiment 12]

Another embodiment of the present invention is described below with reference to Figs. 28 and 29. Note that the present embodiment discusses differences from the Embodiments 1 through 11 (especially differences from the Embodiment 11). Note also that constituents that have similar functions to those of the Embodiments 1 through 11 are given identical reference numerals, and are not explained repeatedly.

Fig. 29 is a cross-sectional view schematically illustrating an outline configuration of a substantial part of a liquid crystal display device 40 of the present embodiment.

In the Embodiment 11, the line sensors 1 are provided outside sealing regions formed between the array substrate 21 and the counter substrate 22. Meanwhile, in the present embodiment, line sensors 1 are provided in sealing regions as in the Embodiment 6.

That is, a coordinate sensor 160 and the liquid crystal display device 40 shown in Fig. 29 respectively have the same configurations as the coordinate sensor 160 and the liquid crystal display device 40 shown in Fig. 28 except for that (i) the line sensors 1 are disposed in the sealing regions, (ii) a counter substrate 22 is bonded to the line sensors 1 via a sealing material 25 made of a transparent sealing resin, (iii) prisms 161 in which distances between end surfaces 161a serving as 45° mirrors and light incident surfaces 161b are smaller than those in the Embodiment 11 are provided on the counter substrate 22 so that the 45° mirrors (the end surfaces 161a serving as 45° mirrors) are located above the line sensors 1.

That is, in the present embodiment, since the line sensors 1 are disposed in the sealing regions, the prisms 161 in which the distances between the end surfaces 161a serving as 45° mirrors and the light incident surfaces 161b are smaller than those in the prisms 161 of the Embodiment 11 (see Fig. 27) need to be used in order that the end surfaces 161a serving as 45° mirrors are disposed above the line sensors 1. Note that the prisms 161 used in the present embodiment have the same configuration as the prisms 161 used in the Embodiment 11 except for that the distances between the end surfaces 161a serving as 45° mirrors and the light incident surfaces 161b are smaller.

Also in the present embodiment, the coordinate sensor 160 can be used not only as a coordinate sensor for a liquid crystal display device, but also as a coordinate sensor for various electronic devices or for fixed display media such as paper (printed material).

Also in the present embodiment, as illustrated in Fig. 29, the sealing material 25, which is formed in the sealing region (sealing region on a left side of Fig. 29) in which the line sensor 1 is formed, has a different thickness from a sealing material 24, which is formed in a sealing region (sealing region on a right side of Fig. 29) in which no line sensor 1 is formed, as in the Embodiment 6. Thus, a thickness of a liquid crystal panel 20 (cell thickness) is made uniform.

According to the present embodiment, the 45° mirrors are provided on light paths of light emitted from infrared LEDs 3 as described above. Thus, light which enters the prisms 161 from the infrared LEDs 3 can be reflected downward by the 45° mirrors so as to pass through the sealing material 25 made of a transparent sealing resin and to be detected by the line sensors 1 disposed below the 45° mirrors.

Also in the present embodiment, in a case where lenses 162 are provided between the 45° mirrors and the line sensors 1 as illustrated in Fig. 29, the light reflected by the 45° mirrors can be efficiently focused on the line sensors 1.

Also in the present embodiment, the line sensors 1 can be provided, outside a display region, on the array substrate 21 so as to be integral with the array substrate 21 and so that light-receiving surfaces 1a of the line sensors 1 face upward, as described above. This allows for easy alignment. Further, according to the present embodiment, the line sensors 1 are provided in the sealing regions as described above. This allows a further reduction in cost and size as compared with the Embodiment 11.

Also in the present embodiment, shapes of the end surfaces 161a of the prisms 161 are not limited to 45° mirrors. Each of the end surfaces 161a of the prisms 161 can have any shape (e.g., concave mirror as shown in Fig. 13), provided that light emitted from the infrared LEDs 3 can be reflected so as to be guided to the light-receiving surfaces 1a of the line sensors 1. Accordingly, various conventionally known reflectors etc. can be used as the light path changing means. Further, the coordinate sensor 160 may include, instead of the prisms 161, a light guide plate (optical member) or the like which includes: a reflector such as a 45° mirror, an infrared light transmitting filter provided on a light incident surface of the light guide plate, and a light blocking layer provided on a top surface of the light guide plate.

Also in the present embodiment, in a case where the lenses 162 are provided between the prisms 161 serving as the light path changing means and the line sensors 1 provided in the sealing regions formed between the array substrate 21 and the counter substrate 22 as described above, the lenses 162 may be just placed on the counter substrate 22 or may be formed so as to be integral with the counter substrate 22, as in the Embodiment 11. In this case, the lenses 162 may be disposed so that flat surfaces 162a of the lenses 162 to which flat surfaces 162a the prisms 161 are bonded (see Fig. 29) are in contact with or bonded to the counter substrate 22.

The present embodiment has dealt with an example in which the coordinate sensor 160 includes no light guide member as in the Embodiment 11. However, the present embodiment is not limited to this. Another arrangement is also possible in which (i) linear light guide plates 163 (light guide members) which respectively extend in x-axis and y-axis directions are provided on end portions (outside the display region) of the top surface 22c of the counter substrate 22 so as to respectively face the prisms 161 (see the dashed-dotted lines in Fig. 28) and (ii) infrared LEDs 3 are provided on a corner section of the top surface 22c of the counter substrate 22 so as to respectively face ends of the linear light guide plates 163.

Also in the present embodiment, in a case where light guide members are provided outside the display region (see the dashed-dotted lines in Fig. 28), it is only necessary that at least two line sensors 1 and at least two prisms 161 be provided along at least two sides (at least a side extending in an x-axis direction and a side extending in a y-axis direction) of the counter substrate 22. That is, it is also possible that three line sensors 1 and three prisms 161 are provided along three sides of the counter substrate 22 or that four line sensors 1 and four prisms 161 are provided along four sides (all the sides) of the counter substrate 22.

[Embodiment 13]

Another embodiment of the present invention is described below with reference to Figs. 30 through 32. Note that the present embodiment discusses differences from the Embodiments 1 through 12 (especially differences from the Embodiment 12). Note also that constituents that have similar functions to those of the Embodiments 1 through 12 are given identical reference numerals, and are not explained repeatedly.

The Embodiment 12 has dealt with an example in which, in a case where the lenses 162 which are convex lenses are provided between the prisms 161 serving as light path changing means and the line sensors 1 provided between the array substrate 21 and the counter substrate 22, the lenses 162 are disposed between bottom surfaces 161c of the prisms 161 and the top surface 22c of the counter substrate 22.

The present embodiment deals with a case where prisms 161 incorporating lenses 162 (convex lenses) are provided so that the lenses 162 are located between 45° mirrors and line sensors 1 disposed in sealing regions formed between the array substrate 21 and the counter substrate 22.

Fig. 30 is a cross-sectional view schematically illustrating an outline configuration of a substantial part of a liquid crystal display device 40 of the present embodiment.

A coordinate sensor 160 in the liquid crystal display device shown in Fig. 30 has the same configuration as the coordinate sensor 160 shown in Fig. 29 except for that (i) the lenses 162 are provided in the prisms 161 and (ii) bottom surfaces 161c of the prisms 161 and flat surfaces 162a of the lenses 162 are bonded (optically coupled) to a top surface 22c of the counter substrate 22 with the use of an optical coupling material 4 having a refractive index equal to that of the counter substrate 22.

The bottom surfaces 161c (light output surfaces) of the prisms 161 of the present embodiment have recessed parts 161d. The recessed parts 161d are filled with a resin having refractive index higher than that of the prisms 161. Thus, the lenses 162 (convex lenses) are formed.

The resin having high refractive index can be an ultraviolet cure resin. In a case where the lenses 162 are made of the same resin as that of the optical coupling material 4, the lenses 162 can be formed concurrently with the optical coupling material 4 that serves as an adhesion layer.

In the Embodiment 12, since the lenses 162 are disposed so as to protrude into spaces between the prisms 161 and the counter substrate 22 as described above (see Fig. 29), a gap is created between the prisms 161 and the counter substrate 22 by the lenses 162. Meanwhile, in the present embodiment, the bottom surfaces 161c of the prisms 161 have the recessed parts 161d, and the lenses 162 are formed in the recessed parts 161d. This allows the prisms 161 and the counter substrate 22 to be in contact with each other. As a result, a thickness of the liquid crystal display device 40 can be made smaller than that in the Embodiment 12.

Needless to say, also in the above embodiments, it is possible that (i) light output surfaces of light path changing means (light path changing sections) have recessed parts, and (ii) convex lenses are provided so as to fill the recessed parts, instead of using the lenses 72 (see Figs. 10 and 12 for example).

Fig. 31 is a cross-sectional view illustrating a substantial part of the coordinate sensor 160 and light that is parallel to optical axes of the lenses 162. Fig. 32 is a cross-sectional view illustrating the substantial part of the coordinate sensor 160 and a light-receiving angle of the line sensors 1.

As illustrated in Fig. 31, light that is parallel to the optical axes of the lenses 162 (components that are substantially parallel to x-axis and y-axis directions; hereinafter referred to as "parallel light") enters the line sensors 1 after being focused by the lenses 162. As described in the Embodiment 11, light-receiving elements 11 of the line sensors 1 correspond one-to-one with the lenses 162. A width W of each of the light-receiving surfaces 1a of the line sensors 1 (i.e., a width of a light-receiving surface of each of the light-receiving elements 11) is smaller than a width D (diameter) of each of the lenses 162. Since the lenses 162 are provided between the prisms 161 and the line sensors 1 (more specifically, the lenses 162 are provided on light paths of light that enters the line sensors 1 from the end surfaces 161a that serve as mirrors), light focusing power improves in accordance with a ratio between the width D of the lenses 162 and the width W of the line sensors 1.

Further, a light-receiving angle θ (half light-receiving angle) of the line sensors 1 can be expressed as follows:

$$\theta \text{ (half light-receiving angle)} = \text{atan} \ (W/2L)$$

where L is an illumination length of the lenses 162 and W is a width of each of the light-receiving surfaces 1a of the line sensors 1 as described above (see Fig. 32).

That is, light that enters the prisms 161 at an angle of 0° to θ° with respect to the parallel light can be received by the line sensors 1, whereas light that enters the prisms 161 at an angle larger than θ° with respect to the parallel light cannot be received by the line sensors 1. In other words, light (parallel light) that enters the end surfaces 161a serving as mirrors vertically to the end surfaces 161a and light that enters the lenses 162 vertically to the lenses 162 can be received by the line sensors 1, whereas light that enters the end surfaces 161 a serving as mirrors at an angle larger than θ° with respect to the parallel light and light that enters the lenses 162 at an angle larger than θ° with respect to the parallel light cannot be received by the line sensors 1.

Accordingly, in a case where the lenses 162 are provided between the prisms 161 and the line sensors 1 as described above, measurement of a position (coordinate) of an object to be detected can be carried out without being affected by light emitted from a neighboring infrared LED 3.

Note that the light-receiving angle θ can be adjusted by changing at least one of W and L as described above. Note also that the light focusing power of the lenses 162 can be adjusted by adjusting a ratio between the width D of the lenses 162 and the width W of the line sensors 1 as described above.

In a case where the lenses 162 which are convex lenses are provided between the end surfaces 161a of the prisms 161 which end surfaces 161 a serve as mirrors and the line sensors 1 (in a case where the lenses 162 are provided on a light path) as described above, a light focusing effect and directivity of light can be achieved in the coordinate sensor 160.

[Embodiment 14]

Another embodiment of the present invention is described below with reference to Figs. 33 through 35. Note that the present embodiment discusses differences from the Embodiments 1 through 13. Note also that constituents that have similar functions to those of the Embodiments 1 through 12 are given identical reference numerals, and are not explained repeatedly.

The present embodiment deals with another example of the case where a coordinate indicated by an object to be detected is detected by causing the object to be detected to block light that enters light path changing means from light sources for detection of an indicated coordinate after traveling over a display region of a coordinate input surface 20a.

Fig. 33 is a cross-sectional view schematically illustrating an outline configuration of a substantial part of a liquid crystal display device 40 of the present embodiment. Fig. 34 is a plan view schematically illustrating the outline configuration of the substantial part of the liquid crystal display device 40 of the present embodiment.

As illustrated in Fig. 33, the liquid crystal display device 40 of the present embodiment includes: a backlight 30, a rear-side polarization plate 27, a liquid crystal panel 20, and a front-side polarization plate 26 that are stacked in this order. In the present embodiment, a counter substrate 22 of the liquid crystal panel 20 is a color filter substrate including color filters 29 of red (R), blue (B), and green (G). However, the present embodiment is not limited to this.

As illustrated in Figs. 33 and 34, a coordinate sensor 170 used in the liquid crystal display device 40 of the present embodiment includes: a cover plate 310 (protection plate) that protects a surface of an image display member, at least two line sensors 1 that are disposed in x-axis and y-axis directions, light path changing means 320 (light path changing sections) that are disposed above the line sensors 1 so as to overlap the line sensors 1 in plan view, linear light guide plates 330 that are disposed so as to face the respective light path changing means 320, an infrared LED 3 that is provided below one of the linear light guide plates 330, and a collimating section 340 that converts light emitted from the infrared LED 3 into parallel light.

The cover plate 310 is provided on the front-side polarization plate 26. Each of the light path changing means 320 and the linear light guide plates 330 is provided on an end portion (outside a display region) of a top surface 310a of the cover plate 310 so as to have an L-shape. That is, the light path changing means and the linear light guide plates 330 extends in x-axis and y-axis directions so as to surround the display region of the liquid crystal display device 40 (more specifically, a coordinate input region 310b (display region, coordinate input section) of the top surface 310a of the cover plate 310).

Each of the light path changing means 320 includes: a 45° mirror 321 (reflector, reflecting surface), an infrared light transmitting filter 322 provided on a light incident surface of the light path changing means 320, and a light blocking layer 323 provided on a top surface of the light path changing means 320. Each of the light path changing means 320 is used as a light path changing member.

Note that the light path changing means 320 may be configured such that an end surface thereof is a 45° mirror or may be configured such that an optical member such as a prism is bonded to the light path changing means 320 via the 45° mirror. Needless to say, any of the various light path changing means (light path changing sections) used in the above embodiments can be used as the light path changing means 320.

Also in the present embodiment, the line sensors 1 are provided so that light-receiving surfaces 1a of the lines sensors 1 are located on light paths of light reflected by the 45° mirror 321. For example, the line sensors 1 are provided so as to overlap the 45° mirror 321 in plan view and so that the light-receiving surfaces 1a face upward.

Also in the present embodiment, since each of the light-receiving surfaces 1a of the line sensors 1 is constituted by light-receiving surfaces of a plurality of light-receiving elements 11, each of the light path changing means 320 and the 45° mirror 321 that serves as a reflector of the light path changing means 320 can include a plurality of distinct pieces that correspond with the light-receiving elements 11 of the line sensors 1. That is, each of the light path changing means 320 and the 45° mirror 321 may be constituted by a plurality of distinct pieces that correspond one-to-one with the light-receiving elements 11 or may be a single continuous structure.

The infrared light transmitting filter 322 is a filter that absorbs visible light and transmits infrared light. Examples of the infrared light transmitting filter 322 include an optical element that controls transmitting wavelength with the use of light-absorbing materials dispersed in glass. A commercially available infrared light (IR) transmitting filter can be used as the infrared light transmitting filter 322.

The light blocking layer 323 is not limited to a specific one, and therefore can be a layer made of a conventionally known light blocking material such as a black resin (e.g., black matrix), black ink or a metal film.

Each of the linear light guide plates 330 can be, for example, a linear light guide plate similar to the linear light guide plate 163 (see Fig. 28) shown in the Embodiment 11. However, in the present embodiment, the infrared LED 3 is provided below one of the linear light guide plates 330 as illustrated in Figs. 33 and 34. Accordingly, a part of one of the linear light guide plates 330 is formed so as to protrude outside the top surface 310a of the cover plate 310.

As illustrated in Fig. 34, the infrared LED 3 is disposed below an extension 330a of one of the linear light guide plates 330 which extension 330a protrudes outside the top surface 310a of the cover plate 310 in a planar direction, specifically, in parallel to the cover plate 310.

The collimating section 340 includes: a mirror or a prism that causes light emitted from the infrared LED 3 to be reflected in a planar direction of the linear light guide plates 330, and a lens (lens section) that guide, to the mirror or the prism, the light emitted from the infrared LED 3.

In the present embodiment, an end surface of the extension 330a of the linear light guide plate 330 is tilted, and the end surface that is tilted is the mirror or prism (hereinafter referred to simply as "mirror"). The infrared LED 3 is disposed so as to overlap the collimating section 340 in plan view. Accordingly, the collimating section 340 is located on a light path of light emitted from the infrared LED 3.

With reference to Fig. 34, the following description deals with, in detail, how a (x, y) coordinate is detected in the present embodiment. Note that, in the description below, expressions "upward direction", "leftward direction", and "downward direction" each refer to a direction in Fig. 34.

In the present embodiment, the linear light guide plates 330 are disposed so as to form an L-shape that is bent at an upper right corner of Fig. 34 where a light-reflecting member is provided.

Accordingly, in the present embodiment, light that is emitted from the infrared LED 3 towards the collimating section 340, i.e., in a direction in which a paper surface on which Fig. 34 is drawn faces is reflected parallel to the paper surface in an upward direction by the collimating section 340, and then enters one of the linear light guide plates 330 (hereinafter referred to simply as "right-side linear light guide plate 330") which is located along a right side of the cover plate 310 and is located on a line extended from the extension 330.

Next, the infrared light which has entered the right-side linear light guide plate 330 propagates within the right-side linear light guide plate 330 in the upward direction, and a part of the infrared light is outputted, in a leftward direction, from an end surface 330b (light output surface, light emitting surface) of the right-side linear light guide plate 330 which end surface 330b faces the light path changing means 320.

Then, infrared light that has reached an upper end of the right-side linear light guide plate 330 (i.e., a corner section of the linear light guide plate 330 which corner section is located on the line extended from the extension 330) is reflected in the leftward direction by the light-reflecting member (not shown), and then enters one of the linear light guide plates 330 (hereinafter referred to simply as "upper-side linear light guide plate 330") which is located along an upper side of the cover plate 310 and is adjacent to the right-side linear light guide plate 330.

The infrared light that has thus entered the upper-side linear light guide plate 330 propagates in the leftward direction, and a part of the infrared light is outputted, in a downward direction, from an end surface 330b (light output surface, light emitting surface) of the upper-side linear light guide plate 330 which end surface 330b faces the light path changing means 320.

The light that has been thus outputted from the end surfaces 330b of the right-side and upper-side linear light guide plates 330 propagates along a surface of the cover plate 310 over the cover plate 310 so as to traverse a coordinate input region 310b (display region, coordinate input section) of the cover plate 310 serving as a touch panel, and then enters the light path changing means 320 that are disposed so as to face the right-side and upper-side linear light guide plates 330.

The light that has thus entered the light path changing means 320 is reflected downward (i.e., in a depth direction of the paper surface, in a direction pointing from an upper layer towards a lower layer) by the 45° mirror 321 so as to enter the line sensors 1. Therefore, also in the present embodiment, a (x, y) coordinate can be detected by a similar principle to that described in the Embodiment 11.

According to the present embodiment, the linear light guide plates 330 are provided outside the display region as described above. Accordingly, only a single infrared LED 3 that is provided so as to face the extension 330a of the linear light guide plate 330 is required. This allows a reduction in the number of infrared LEDs 3, thereby allowing lower power consumption than the liquid crystal display devices 40 of the Embodiments 11 through 13.

Further, according to the present embodiment, the infrared LED 3 is provided below the extension 330a, i.e., provided so that lead wires of the line sensors 1 extend in a direction in which the layers constituting the liquid crystal display device 40 are stacked, as illustrated in Figs. 33 and 34. This allows the liquid crystal display device 40 to be smaller in size, as compared to a case where an infrared LED 3 is provided so as to face an end surface 330c of the linear light guide plate 330 which end surface 330c is opposite to the end surface 330b.

Fig. 35 is a view showing directivity (luminous intensity distribution characteristics), at a room temperature (25°C), of the infrared LED 3 used in the present embodiment.

In the present embodiment, the linear light guide plates 330 that extend in x-axis and y-axis directions causes light to propagate in the x-axis and y-axis directions along the top surface 310a (coordinate input surface) of the cover plate 310 as described above. On this account, the infrared LED 3 is an infrared LED whose light directivity (luminous intensity distribution characteristics) is sharp in vertical and horizontal directions, as shown in Fig. 35. For example, the above-mentioned bullet-shaped (half-spheroid shaped) infrared LED is used as such an infrared LED 3.

Needless to say, in the present embodiment, the cover plate 310 need not be necessarily provided, and therefore the light path changing means 320 and the linear light guide plates 330 may be provided, for example, on the front-side polarization plate 26 that becomes a top layer (or may be provided on the counter substrate 22 depending on a configuration of the liquid crystal display device 40).

[Embodiment 15]

Another embodiment of the present invention is described below with reference to Figs. 36 through 38. Note that the present embodiment discusses differences from the Embodiments 1 through 14 (especially differences from the Embodiment 14). Note also that constituents that have similar functions to those of the Embodiments 1 through 14 are given identical reference numerals, and are not explained repeatedly.

The present embodiment deals with another example of the case where a coordinate indicated by an object to be detected is detected by causing the object to be detected to block light that enters light path changing means from light sources for detection of an indicated coordinate after traveling over a display region of a liquid crystal display device 40.

Fig. 36 is a cross-sectional view schematically illustrating an outline configuration of a substantial part of a liquid crystal display device 40 of the present embodiment. Fig. 37 is a plan view schematically illustrating the outline configuration of the substantial part of the liquid crystal display device 40 of the present embodiment.

As illustrated in Fig. 36, the liquid crystal display device 40 of the present embodiment includes: a backlight 30, a rear-side polarization plate 27, a liquid crystal panel 20, and a front-side polarization plate 26 that are stacked in this order, as in the liquid crystal display device 40 of the Embodiment 14. Also in the present embodiment, a counter substrate 22 of the liquid crystal panel 20 is a color filter substrate including color filters 29 of red (R), blue (B), and green (G). However, the present embodiment is not limited to this.

As illustrated in Figs. 36 and 37, a coordinate sensor 180 used in the liquid crystal display device 40 of the present embodiment includes: a light guide plate 350, at least two line sensors 1 that are disposed in x-axis and y-axis directions, light path changing means 320 (light path changing section) that is disposed above the line sensors 1 so as to overlap the line sensors 1, an infrared LED 3, and a collimating section 340 that converts light emitted from the infrared LED 3 into parallel light.

The light guide plate 350 is provided on the front-side polarization plate 26 so as to overlap and cover the front-side polarization plate 26. An end (side) of the light guide plate 350 is formed so as to protrude outside a top surface 26a of the front-side polarization plate 26 in a planar direction, specifically, in parallel to the front-side polarization plate 26.

The infrared LED 3 is disposed below the light guide plate 350 (on a rear-surface side of the light guide plate 350). Specifically, the infrared LED 3 is disposed so as to face a corner section (edge) of an extension 350b (extended side) that protrudes outside the top surface 26a of the front-side polarization plate 26. In other words, the infrared LED 3 is provided below the extension 350b so as to face a corner section of a coordinate input region 350c (display region, coordinate input section) of the light guide plate 350.

The corner section of the extension 350b of the light guide plate 350 which corner section faces the infrared LED 3 has a tilted surface. The tilted surface is a mirror or a prism as in the Embodiment 14, and is used as the collimating section 340. The infrared LED 3 is disposed so as to overlap the collimating section 340 in plan view. Accordingly, the collimating section 340 is located on a light path of light emitted from the infrared LED 3.

Further, the light path changing means 320 that is similar to the light path changing means 320 of the Embodiment 14 is provided, outside the display region, on the top surface 350a of the light guide plate 350 so as to extend parallel to two sides of the light guide plate 350 that sandwich the corner section which the infrared LED 3 faces.

Also in the present embodiment, the light path changing means 320 includes: a 45° mirror 321 (reflector, light-reflecting surface), and an infrared light transmitting filter 322 provided on a light incident surface of the light path changing means 320. Further, on a top surface of the light path changing means 320, a light blocking layer 323 is provided which is used as light path changing means (light path changing section).

Also in the present embodiment, the line sensors 1 are provided so that light-receiving surfaces 1a of the lines sensors 1 are located on light paths of light reflected by the 45° mirror 321. For example, the line sensors 1 are provided so as to overlap the 45° mirror 321 in plan view and so that the light-receiving surfaces 1a face upward.

Also in the present embodiment, the light path changing means 302 or the 45° mirror 321 may be constituted by a plurality of distinct pieces that correspond one-to-one with the light-receiving elements 11 of the line sensors 1 or may be a single continuous structure.

Further, Fresnel reflecting plates 360 are provided along remaining two sides of the light guide plate 350 that are opposite to the two sides along which the light path changing means 320 is provided (i.e., two sides sandwiching a corner section that is diametrically opposite to the corner section which the infrared LED 3 faces).

As illustrated in Fig. 36, each of the Fresnel reflecting plates 360 has a two-layer structure constituted by layers each having an end surface that is tilted (reflecting surface). That is, each of the Fresnel reflecting plates 360 has a cross-section of a saw-tooth shape. An end surface 360a (light emission surface) of an upper layer of each of the Fresnel reflecting plates 360 faces a light incident surface of the light path changing means 320.

As illustrated in Fig. 36, according to the present embodiment, light emitted from the infrared LED 3 is converted into parallel light by the collimating section 340, propagates within the light guide plate 350 provided in the display region, is reflected by the Fresnel reflecting plates 360 provided on end portions of the light guide plate 350 (outside the display region), and is then outputted from the end surface 360a (light output surface, light-emitting surface) of the upper layer of the Fresnel reflecting plates 360 which end surface 350a faces the light path changing means 320. The light thus outputted from the end surface 360a propagates along a surface of the light guide plate 350 over the light guide plate 350 so as to traverse the coordinate input region 350c (display region) of the light guide plate 350 serving as a touch panel, and then enters the light path changing means 320 facing the end surface 360a. The light that has thus entered the light path changing means 320 is reflected downward by the 45° mirror 321 so as to enter the line sensors 1. Therefore, also in the present embodiment, a (x, y) coordinate can be detected by a similar principle to that described in the Embodiment 11.

As described above, in the present embodiment, light that has propagated within the light guide plate 350 provided in the display region is reflected upward (i.e. in a direction from a lower layer towards the upper layer) by the Fresnel reflecting plates 360 as illustrated in Fig. 36. Then, the light propagates within the upper layer of each of the Fresnel reflecting plates 360, and is outputted from the end surface 360a of the upper layer towards the light path changing means 320 as illustrated in Figs. 36 and 37. Accordingly, the end surface of the lower layer of each of the Fresnel reflecting plates 360 is tilted at a different angle from the end surface of the upper layer.

As described above, the present embodiment is different from the Embodiment 14 in that (i) the light guide plate 350 is provided at least in the display region, (ii) light is reflected by the Fresnel reflecting plates 360 provided on the end portions of the light guide plate 350 so as to be guided to the light path changing means 320, (iii) the infrared LED 3 is provided so as to face the corner section of the extension 350b that forms one end (side) of the light guide plate 350, and (iv) one of the line sensors 1 is provided along the one end (side) of the light guide plate 350 (along the extension 350b).

Also in the present embodiment, the coordinate sensor 180 includes the light guide plate 350. Accordingly, only a single infrared LED 3 provided so as to face the corner section of the extension 350b is required. This allows a reduction in the number of infrared LEDs 3, thereby attaining smaller power consumption than the liquid crystal display devices of the Embodiments 11 through 13. Further, the infrared LED 3 is provided below the extension 350b, i.e., provided so that a lead wire extends in a direction in which the layers constituting the liquid crystal display device 40 are stacked. This allows the liquid crystal display device 40 to be smaller in size, as compared with a case where the infrared LED 3 facing an end surface of the extension 350b is provided so that the lead wire extends in a planar direction.

The present embodiment has dealt with an example in which the Fresnel reflecting plates 360 are provided on the end portions of the light guide plate 350 so as to face the light path changing means 320 as described above. However, the present embodiment is not limited to this. A configuration of the light guide plate 350 is not limited to a specific one, provided that the light guide member has end portions each having a two-layer structure outside the image display region, which end portions form two sides that face the two sides along which the light path changing means 320 are provided, the two-layer structure (i) being constituted by an upper layer and a lower layer each having an end surface having a light reflecting surface and (ii) causing light to be guided from the lower layer to the upper layer and to be outputted from the upper layer as described above.

Fig. 38 is a view showing directivity (luminous intensity distribution characteristics), at a room temperature (25°C), of the infrared LED 3 used in the present embodiment.

As illustrated in Fig. 37, in the present embodiment, the infrared LED 3 disposed so as to face the corner section of the extension 350b irradiates an entire internal area of the light guide plate 350 provided in the display region. Accordingly, in the present embodiment, the infrared LED 3 is an infrared LED which emits light whose directivity (luminous intensity distribution characteristics) in a horizontal direction is different from that in a vertical direction. Specifically, the infrared LED 3 is an infrared LED which emits light that spreads in a wider range in the horizontal direction than in the vertical direction, as shown in Fig. 38. A flat infrared LED whose thickness in a horizontal direction is larger than a thickness in a vertical direction (height) is used as such an infrared LED 3.

[Embodiment 16]

Another embodiment of the present invention is described below with reference to (a) and (b) of Fig. 39. Note that the present embodiment discusses differences from the Embodiments 1 through 15 (especially differences from the Embodiment 13). Note also that constituents that have similar functions to those of the Embodiments 1 through 15 are given identical reference numerals, and are not explained repeatedly.

(a) of Fig. 39 is a cross-sectional view schematically illustrating an outline configuration of a substantial part of a liquid crystal display device of the present embodiment. (b) of Fig. 39 is a plan view schematically illustrating (i) the outline configuration of the substantial part of the liquid crystal display device of the present embodiment and (ii) how a coordinate is detected in the liquid crystal display device.

As illustrated in (a) and (b) of Fig. 39, a coordinate sensor 410 of the present embodiment includes: a plurality of line sensors 1 that are disposed in x-axis and y-axis directions, prisms 161 (light path changing means, light path changing sections) similar to those of the Embodiment 13 which incorporate lenses and respectively overlap the line sensors 1, and infrared LEDs 3 that are disposed on corner sections of a top surface 22c of a counter substrate 22. Specifically, the infrared LEDs 3 are disposed so as to face corner sections of a coordinate input region 22e (coordinate input section, display region).

The prisms 161 are provided along respective end portions (i.e., respective sides of the display region) of the top surface 22c of the counter substrate 22 so as to surround the display region.

Also in the present embodiment, bottom surfaces 161c of the prisms 161 and flat surfaces 162a of the lenses 162 are bonded (optically coupled) to the top surface 22c of the counter substrate 22 with the use of an optical coupling material 4 having a refractive index equal to that of the counter substrate 22 although not shown in the drawing.

The line sensors 1 are provided, outside the display region, on an array substrate 21 so that light-receiving surfaces 1a of the line sensors 1 are located on light paths of light reflected by the prisms 161. For example, the line sensors 1 are provided so as to overlap end surfaces 161a (45° mirrors) of the prisms 161 in plan view and so that the light-receiving surfaces 1a face upward.

Also in the present embodiment, the line sensors 1 are provided, outside the display region, on the array substrate 21. Note, however, that in the present embodiment, the line sensors 1 are provided inside sealing materials 24.

As with a general liquid crystal panel, a liquid crystal panel 20 has the display region in which a liquid crystal material is sealed and a peripheral region located around the display region which are sandwiched by upper and lower electrode substrates (i.e., the array substrate 21 and the counter substrate 22). In the peripheral region, the sealing materials 24 for allowing the liquid crystal material to be kept in the display region are provided. The line sensors 1 are provided in regions (hereinafter referred to simply as "inside the sealing regions") between the display region (effective display area) and sealing lines (sealing regions) formed by the sealing materials 24.

In a case where, for example, the line sensors 1 are disposed in the sealing regions as described before, a mechanical stress is applied to the line sensors 1 although spaces (i.e., spaces in which the line sensors 1 are provided) can be saved. Meanwhile, in a case where the line sensors 1 are disposed inside the sealing regions as described above or in a case where the line sensors 1 are disposed outside the sealing regions as described before, there is no concern about the stress although there is a disadvantage in terms of the spaces as compared with the case where the line sensors 1 are disposed in the sealing regions.

According to the present embodiment, the line sensors 1 are provided in the above regions. This allows the line sensors 1 to be easily provided, outside the display region, on the array substrate 21 and prevents an increase in size of the liquid crystal panel 20.

The prisms 161 are provided along an outer periphery (edges) of the display region. That is, in the present embodiment, the display region is a region surrounded by the prisms 161, and is used as the coordinate input region 22e (coordinate input section) of the touch panel.

In a general liquid crystal panel, a black matrix (BM) made of a material such as an insulating black resin is formed in regions between a display region and a sealing region formed outside the display region. However, in the present embodiment, BM is not required since the line sensors 1 are provided in these regions. Note that a driving circuit terminal section (not shown) is provided outside the sealing regions.

A single infrared LEDs 3 is provided for each of the corner sections (four corners) of the top surface 22c of the counter substrate 22. The infrared LEDs 3 emit light so that the light travels along a surface of the counter substrate 22 and spreads across the entire coordinate input region 22e (touch region).

According to the present embodiment, when an object to be detected such as a finger touches the coordinate input region 22e, light emitted from the infrared LEDs 3 disposed in the corner sections of the top surface 22c of the counter substrate 22 diagonally strikes the object to be detected, is diffused/reflected by the object to be detected, and then enters the line sensors 1 via the prisms 161, as illustrated in (a) and (b) of Fig. 39.

Here, a light-receiving angle θ (see Fig. 32) of the line sensors 1 is restricted by the lenses 162 as described in the Embodiment 13. Consequently, only components (see the solid lines) that are substantially parallel to an x-axis and components (see the solid lines) that are substantially parallel to a y-axis (specifically, light that is tilted at an angle of 0° to θ° with respect to parallel light (θ (half light-receiving angle) = atan (W/2L))) can be detected by the line sensors 1, as shown in (b) of Fig. 39.

Accordingly, light beams (see the broken lines) which are emitted from directions of the corner sections of the coordinate input region 22e and which enter the prisms 161 diagonally (at an angle larger than θ° with respect to the parallel light) do not reach light-receiving sections of the line sensors 1.

That is, light which enters the prisms 161 via the display region from the directions of the corner sections without being reflected by the object to be detected and light which is reflected diagonally with respect to the x-axis and y-axis by the object to be detected do not reach the light-receiving sections of the line sensors 1. Therefore, according to the present embodiment, a (x, y) coordinate of a touched part can be detected.

As described above, in the present embodiment, when an object to be detected such as a finger touches the coordinate input region 22e, the object to be detected reflects (diffuses/reflects) a part of light that enters the prisms 161 from the infrared LEDs 3 after traveling over the display region of the counter substrate 22 (specifically, light beams which travel over a coordinate where the object to be detected is present out of light beams traveling over the display region along the surface of the counter substrate 22). A (x, y) coordinate of a touched part is detected by utilizing this.

The present embodiment has dealt with an example in which the prisms 161 and the line sensors 1 are provided along the four sides of the counter substrate 22 and the infrared LEDs 3 are provided so as to respectively face all the corner sections (four corners) of the top surface 22c of the counter substrate 22. However, the present embodiment is not limited to this. It is only necessary that the prisms 161 and the line sensors 1 be provided along at least two sides (at least a side extending in an x-axis direction and a side extending in a y-axis direction) and the infrared LEDs 3 be provided so as to face at least one corner.

Note, however, that in a case where the line sensors 1 are provided along four sides of the liquid crystal panel 20 as illustrated in (b) of Fig. 39, a signal of one of the line sensors 1 and a signal of another one which faces the one can be compared. This makes it possible to improve accuracy of coordinate detection and to reduce incorrect detection due to external light (stray light). Note that an amount of light received by a light-receiving element 11 of each of the line sensors 1 varies depending on a distance between a touched position and the line sensor 1.

Further, in a case where the line sensors 1 are provided along four sides of the liquid crystal panel 20, it is possible to reduce mutual interference (interference caused by shadow in illumination light) that occurs in a case where plural portions of the coordinate input region 22e (coordinate input surface 20a) are touched at the same time by objects to be detected such as fingers (multi-touch). Accordingly, it is especially preferable that the prisms 161 and the line sensors 1 be provided along the four sides of the counter substrate 22.

In the present embodiment, the infrared LED 3 disposed on the corner sections of the top surface 22c of the counter substrate 22 irradiates the entire display region of the top surface 22c of the counter substrate 22 with light as described above. Accordingly, also in the present embodiment, the infrared LEDs 3 are preferably infrared LEDs which emit light whose directivity (luminous intensity distribution characteristics) in a horizontal direction is different from that in a vertical direction. Specifically, the infrared LEDs 3 are preferably infrared LEDs which emit light that spreads in a larger range in the horizontal direction than in the vertical direction, as shown in Fig. 38.

The present embodiment has dealt with an example in which the line sensors 1 are provided inside the sealing regions as described above. However, the present embodiment is not limited to this. Positions of the line sensors 1 are not limited in particular, provided that the line sensors 1 are provided outside the display region. Accordingly, the line sensors 1 may be provided in the sealing regions or may be provided outside the sealing regions as described before. Needless to say, also in the other embodiments, the line sensors 1 may be provided inside the sealing regions as described in the present embodiment.

Also in the present embodiment, bottom surfaces 161c of the prisms 161 and flat surfaces 162a of the lenses 162 are bonded (optically coupled) to the top surface 22c of the counter substrate 22 with the use of an optical coupling material 4 having a refractive index equal to that of the counter substrate 22 although not shown in the drawing.

Further, the present embodiment has dealt with an example in which the lenses 162 which are convex lenses are provided on the bottom surfaces 161c (light output surfaces) of the prisms 161 as described above. However, the present embodiment is not limited to this. Needless to say, light path changing means similar to the light path changing means described in the Embodiment 11 or 12 may be used for example.

[Embodiment 17]

Another embodiment of the present invention is described below with reference to Figs. 40 and 41. Note that the present embodiment discusses differences from the Embodiments 1 through 16 (especially differences from the Embodiment 16). Note also that constituents that have similar functions to those of the Embodiments 1 through 16 are given identical reference numerals, and are not explained repeatedly.

Fig. 40 is a cross-sectional view schematically illustrating an outline configuration of a substantial part of a liquid crystal display device 40 of the present embodiment. Fig. 41 is a cross-sectional view illustrating the substantial part of the liquid crystal display device 40 and light paths of light guided to line sensors 1.

In the Embodiment 16, a single line sensor 1 is provided per side of a liquid crystal panel 20. The present embodiment is different from the Embodiment 1 in that a plurality of line sensors 1 (three line sensors 1 in the example shown in Figs. 40 and 41) are provided per side of the liquid crystal panel 20 as illustrated in Figs. 40 and 41. That is, the liquid crystal display device 40 and a coordinate sensor 420 of the present embodiment respectively have similar configurations as the liquid crystal display device 40 and the coordinate sensor 410 shown in (b) of Fig. 39 in plan view except for that a plurality of line sensors 1 are provided per side of the liquid crystal panel 20.

The present embodiment is the same as the Embodiment 16 in that a (x, y) coordinate of a touched part is detected by utilizing reflection (diffusion/reflection) of light by an object to be detected, which light is emitted from infrared LEDs 3 disposed on respective corner sections of a top surface 22c of a counter substrate 22 and diagonally strikes the object to be detected.

In the present embodiment, however, the infrared LEDs 3 emit infrared light not only along a surface of a coordinate input region 22e serving as a touch area (i.e., parallel to a substrate surface), but also towards a space above the coordinate input region 22e as necessary, as illustrated in Fig. 40.

According to the present embodiment, a plurality of line sensors 1 are provided per side of the liquid crystal panel 20 in x-axis and y-axis directions, and the infrared LEDs 3 irradiates an entire surface of the coordinate input region 22e and the space above the coordinate input region 22e with light from directions of corner sections of the coordinate input region 22e, as described above. Thus, just by bringing an object to be detected such as a finger close to the coordinate input region 22e so that the object to be detected is located on a light path of light for detection of an indicated coordinate that passes through the space above (over) the coordinate input region 22e, a part of the light reflected by the object to be detected enters light path changing means from the space above an image display section. The line sensors 1 detects the light thus reflected. Thus, a coordinate position (x, y) of the object to be detected and a distance from the surface of the coordinate input region 22e to the object to be detected can be detected.

As indicated by the broken lines in Fig. 40, light that enters prisms 161 from an infrared LED 3 after traveling along the surface of the counter substrate 22 over the coordinate input region 22e (display region) of the counter substrate 22 reaches the line sensors 1 provided on a side opposite to the infrared LED 3 without being reflected by the object to be detected.

Note, however, that a light-receiving angle θ (see Fig. 32) of the line sensors 1 is restricted by the lenses 162. Note also that light emitted from the infrared LEDs 3 disposed in the respective corner sections of the top surface 22c of the counter substrate 22 diagonally crosses the coordinate input region 22e. Accordingly, light that enters the prisms 162 without being reflected by the object to be detected does not reach light-receiving sections of the lines sensors 1. That is, components which are not substantially parallel to an x-axis or a y-axis, i.e., light beams which diagonally enter the lenses 162 from the directions of the corner sections of the coordinate input region 22e are out of ranges of the light-receiving sections of the line sensors 1 within a horizontal plane.

Further, as indicated by the dashed-dotted lines in Fig. 40, light which does not strike the object to be detected out of light emitted towards the space above the coordinate input region 22e does not return since there is no object which reflects the light.

Meanwhile, light (indicated by the solid lines in Fig. 40) reflected by the object to be detected that is located in the air above the coordinate input region 22e reaches a light-receiving section (light-receiving surface 1a) of a line sensor 1 corresponding to a position of the object to be detected (an angle of elevation from the line sensors 1), as illustrated in Fig. 41. Which of the line sensors 1 the light reaches is determined depending on an angle of elevation (an angle of the object to be detected with respect to an image display surface) of light which is reflected by the object and enters the light path changing section. In a case where which of the line sensors 1 provided on the right side or the left side has received the light is found out, a distance from the image display surface to the object can be also detected by triangulation.

Consequently, according to the present embodiment, it is possible to detect that a finger or an object is brought near the coordinate input region 22e within a reach of infrared light, provided that light which is reflected by the finger or the object and which enters the light path changing means in a z-axis direction (normal with respect to the top surface 22c of the counter substrate 22) can be detected by the line sensors 1.

[Embodiment 18]

Another embodiment of the present invention is described below with reference to (a) and (b) of Figs. 42 through Fig. 44. Note that the present embodiment discusses differences from the Embodiments 1 through 17 (especially differences from the Embodiments 16 and 17). Note also that constituents that have similar functions to those of the Embodiments 1 through 17 are given identical reference numerals, and are not explained repeatedly.

(a) of Fig. 42 is a cross-sectional view schematically illustrating an outline configuration of a substantial part of a liquid crystal display device of the present embodiment. (b) of Fig. 42 is a plan view schematically illustrating (i) the outline configuration of the substantial part of the liquid crystal display device of the present embodiment and (ii) how a coordinate is detected in the liquid crystal display device.

The Embodiment 16 has dealt with a case where a (x, y) coordinate of a part of a coordinate input region 22e which part is touched by an object to be detected such as a finger is detected by utilizing reflection (diffusion/reflection) of light crossing the coordinate input region 22e by the object to be detected, as illustrated in (b) of Fig. 39.

The present embodiment deals with a case where light that radially travels across the coordinate input region 22e within a plane parallel to a screen is guided to light-receiving surfaces 1a of line sensors 1 so that a position of an object to be detected such as a finger is detected by triangulation from a shadow of the object to be detected in illumination light.

As illustrated in (a) of Fig. 42, a coordinate sensor 410 and a liquid crystal display device 40 of the present embodiment respectively have the same configurations as the coordinate sensor 410 and the liquid crystal display device 40 described in the Embodiment 16.

The present embodiment also deals with an example in which prisms 161 including lenses 162 (convex lenses) provided on bottom surfaces 161c (light output surfaces) of the prisms 161 are used as light path changing means (light path changing sections). However, the present embodiment is not limited to this.

In the present embodiment, the lenses 162 (convex lenses) need not necessarily be provided. It is also possible that no convex lens is provided on the light output surfaces of the prisms 161. Further, it is also possible that light path changing means similar to those described in the Embodiment 11 or 12 for example are used as the light path changing means.

Note, however, that in a case where light that travels parallel to an x-axis or y-axis direction along a surface of a counter substrate 22 is detected or in a case where shadow that is parallel to the x-axis or y-axis direction is detected as shadow caused by illumination light (see Fig. 28 or (b) of Fig. 39 of the Embodiment 16), it is preferable that general axisymmetrical convex lenses are used as described above, whereas in a case where shadow produced by radially spreading light is detected as in the present embodiment, it is preferable that convex lenses that are cylindrical lenses (lenses with a D-shape cross section) are used as the lenses 162 instead of axisymmetrical lenses.

In a case where convex lenses that are cylindrical lenses are disposed between the prisms 161 serving as light path changing means and line sensors 1, a light-receiving angle is restricted as for light which enters the prisms 161 at an angle of elevation with respect to a surface of the counter substrate 22 although a light-receiving angle is not restricted as for light that is parallel to the surface of the counter substrate 22 which surface serves as a display screen.

In the present embodiment, at least three prisms and at least three line sensors 1 are disposed along at least three sides (three or four sides) of the counter substrate 22. Further, in the present embodiment, at least two infrared LEDs 3 are disposed on at least two corners (two or four corners) of the counter substrate 22. Also in the present embodiment, the infrared LEDs 3 emit light so that the light travels along a surface of the counter substrate 22 and spreads across an entire surface of a coordinate input region 22e (touch region).

(b) of Fig. 42 illustrates an example in which (i) the prisms 161 and the line sensors 1 are provided along three sides of the counter substrate 22 and (ii) the infrared LEDs 3 are disposed on adjacent two corners of a top surface 22c of the counter substrate 22 which two corners correspond to both ends of a remaining side of the counter substrate 22.

When an object to be detected such as a finger blocks light which radially spread within a plane parallel to a surface of the counter substrate 22 (i.e., along the surface of the counter substrate 22), shadows are produced behind the object to be detected when viewed from the infrared LEDs 3 (the broken lines in (b) of Fig. 42 indicate blocked light). Accordingly, the light does not enter line sensors 1 located behind the object to be detected when viewed from the infrared LEDs 3 (i.e., line sensors 1 corresponding to prisms 161 located behind the object to be detected when viewed from the infrared LEDs 3). Thus, shadows are cast on the line sensors 1. As a result, detection signal levels of the line sensors 1 on which the shadows are cast become lower than a detection signal level of a line sensor 1 on which no shadow is cast.

Thus, a part touched by the object to be detected such as a finger can be detected from positions of the shadows by triangulation.

Next, with reference to Fig. 43, the following describes how a (x, y) coordinate of the object to be detected is calculated by triangulation.

A method for calculating a (x, y) coordinate of an object to be detected is classified into four cases according to which region of the coordinate input region 22e (touch region) is touched.

For convenience of description, an infrared LED 3 disposed at a left end of a side (hereinafter referred to as "lower side") of the counter substrate 22 that is located on a lower portion of (b) of Fig. 39 is hereinafter referred to as "light source 3a", and an infrared LED 3 disposed at a right end of the lower side of the counter substrate 22 is hereinafter referred to as "light source 3b".

In a case where the top surface 22c of the counter substrate 22 is diagonally divided so that the coordinate input region 22e is divided into four regions, a triangular region whose base is a side (hereinafter referred to as "right side") of the counter substrate 22 that is located on a right side of (b) of Fig. 39 and whose apex is a center (i.e., intersection of diagonal lines) of the top surface 22c of the counter substrate 22 (hereinafter referred to simply as "center") is hereinafter referred to as "region A". Similarly, a triangular region whose base is a side (hereinafter referred to as "upper side") located on an upper side of (b) of Fig. 39 and whose apex is the center is hereinafter referred to as "region B", a triangular region whose base is a side (hereinafter referred to as "left side") located on a left side of (b) of Fig. 39 and whose apex is the center is hereinafter referred to as "region C", and a triangular region whose base is the lower side and whose apex is the center is hereinafter referred to as "region D".

A length of each of the upper side and the lower side of the counter substrate 22 is hereinafter referred to as "H", and a length of each of the right side and the left side of the counter substrate 22 is hereinafter referred to as "V".

In a case where a point (hereinafter referred to as "point A") within the region A (see (b) of Fig. 39) is touched, a shadow is produced behind (at the back of) the point A when viewed from the light source 3a. As a result, the light source 3a casts a shadow on the right side of the counter substrate 22. Similarly, the light source 3b casts a shadow on the upper side of the counter substrate 22.

A straight line (1) that passes through the light source 3a and the point A is expressed with the use of coordinates x and y by the following equation (1):

$$y = a \times x / H \ \dots \ (1)$$

where a is a distance between (i) the light source 3b (i.e., the lower right corner of the counter substrate 22) and (ii) an intersection (i.e., a position of the shadow cast on the right side of the counter substrate 22) of the straight line (1) and the right side of the counter substrate 22.

Meanwhile, a straight line (2) that passes through the light source 3b and the point A is expressed with the use of coordinates x and y by the following equation (2):

$$y = V (H - x) / (H - b) \ \dots \ (2)$$

where b is a distance between (i) the corner that is diametrically opposite to the light source 3b (i.e., the upper left corner of the counter substrate 22) and (ii) an intersection (i.e., a position of the shadow cast on the upper side of the counter substrate 22) of the straight line (2) and the upper side of the counter substrate 22.

The following equation (3) can be obtained from the equations (1) and (2):

$$a \times x / H = V (H - x) / (H - b) \ \dots \ (3).$$

A coordinate (x, y) of the point A can be obtained from the following equations (4) and (5) which are obtained from the equation (3):

$$x = H^2 \times V / (a \times H - a \times b + H \times V) \ \dots \ (4)$$

$$y = y = a \times H \times V / (a \times H - a \times b + H \times V) \ \dots \ (5).$$

Next, in a case where a point (hereinafter referred to as "point B") within the region B (see (b) of Fig. 39) is touched, both of the light source 3a and the light source 3b cast a shadow on the upper side of the counter substrate 22. For convenience of description, the following description deals with a case where the point B is located on the straight line (2) that passes through the light source 3b and the point A as shown in (b) of Fig. 39. However, a coordinate (x, y) of the point B can be obtained in a similar manner to that described below by changing variables b and c in accordance with a position of the point B.

A straight line (3) that passes through the light source 3a and the point B is expressed with the use of coordinates x and y by the following equation (6):

$$y = V \times x / c \ \dots \ (6)$$

where c is a distance between (i) the upper left corner of the counter substrate 22 and (ii) an intersection (i.e., a position of the shadow cast on the upper side of the counter substrate 22) of the straight line (3) and the upper side of the counter substrate 22.

Meanwhile, the straight line (2) that passes through the light source 3b and the point B is expressed with the use of coordinates x and y by the equation (2) as described above where b is the distance between (i) the upper left corner of the counter substrate 22 and (ii) the intersection (i.e., the position of the shadow cast on the upper side of the counter substrate 22) of the straight line (2) and the upper side of the counter substrate 22.

The following equation (7) is obtained from the equations (2) and (6):

$$V \times x / c = V(H-x)/(H-b) \ \dots \ (7).$$

A coordinate (x, y) of the point B can be obtained from the following equations (8) and (9) which are obtained from the equation (7):

$$x = c \times H / (H-b+c) \ \dots \ (8)$$

$$y = H \times V / (H-b+c) \ \dots \ (9).$$

Meanwhile, in a case where a point (hereinafter referred to as "point C") within the region C (see (b) of Fig. 39) is touched, the light source 3a casts a shadow on the upper side of the counter substrate 22 and the light source 3b casts a shadow on the left side of the counter substrate 22. For convenience of description, the following description deals with a case where the point C is located on the straight line (3) that passes through the light source 3a and the point B as shown in (b) of Fig. 39. However, a coordinate (x, y) of the point C can be obtained in a similar manner to that described below by changing variables c and d in accordance with a position of the point C.

The straight line (3) that passes through the light source 3a and the point C is expressed with the use of coordinate x and y by the equation (6) as described above where c is the distance between (i) the upper left corner of the counter substrate 22 and (ii) the intersection (i.e., the position of the shadow cast on the upper side of the counter substrate 22) of the straight line (3) and the upper side of the counter substrate 22.

Meanwhile, a straight line (4) that passes through the light source 3b and the point C is expressed with the use of coordinates x and y by the following equation (10):

$$y = d - d \times H \times x \ \dots \ (10)$$

where d is a distance between (i) the light source 3a (i.e., the lower left corner of the counter substrate 22) and (ii) an intersection (i.e., a position of the shadow cast on the left side of the counter substrate 22) of the straight line (4) and the left side of the counter substrate 22.

The following equation (11) is obtained from the equations (6) and (10):

$$V \times x / c = d - d \times H \times x \ \dots \ (11).$$

A coordinate (x, y) of the point C can be obtained from the following equations (12) and (13) which are obtained from the equation (11):

$$x = c \times d \times H / (c \times d + H \times V) \ \dots \ (12)$$

$$y = d \times H \times V / (c \times d + H \times V) \ \dots \ (13).$$

Meanwhile, in a case where a point (hereinafter referred to as "point D") within the region D (see (b) of Fig. 39) is touched, the light source 3a casts a shadow on the right side of the counter substrate 22 and the light source 3b casts a shadow on the left side of the counter substrate 22. For convenience of description, the following description deals with a case where the point D is located on an intersection of (i) the straight line (1) that passes through the light source 3a and the point A and (ii) the straight line (4) that passes through the light source 3b and the point C as shown in (b) of Fig. 39. However, a coordinate (x, y) of the point Dcan be obtained in a similar manner to that described below by changing variables a and d in accordance with a position of the point D.

The point D is located on the intersection of (i) the straight line (1) that passes through the light source 3a and the point A and (ii) the straight line (4) that passes through the light source 3b and the point C. As described above, the straight line (1) that passes through the light source 3a and the point D is expressed by the equation (1), and the straight line (4) that passes through the light source 3b and the point D is expressed by the equation (10).

That is, the straight line that passes through the light source 3a and the point D is expressed with the use of coordinates x and y by the equation (1) where a is the distance between (i) the light source 3b and (ii) the intersection (i.e., the position of the shadow cast on the right side of the counter substrate 22) of the straight line connecting the light source 3a and the point D and the right side of the counter substrate 22. Further, the straight line (4) that passes through the light source 3b and the point D is expressed with the use of coordinates x and y by the equation (10) where d is the distance between (i) the light source 3a and (ii) the intersection (i.e., the position of the shadow cast on the left side of the counter substrate 22) of the straight line (4) and the left side of the counter substrate 22.

The following equation (14) is obtained from the equations (1) and (10):

$$a \times x / H = d - d \times H \times x \ \cdots \ (14).$$

A coordinate (x, y) of the point D can be obtained from the following equations (15) and (16) which are obtained from the equation (14):

$$x = d \times H / (a + d) \ \cdots \ (15)$$

$$y = a \times d / (a + d) \ \cdots \ (16).$$

As described above, according to the present embodiment, a coordinate indicated by an object to be detected can be obtained by triangulation by utilizing the fact that detection signal levels (received light amounts) of line sensors 1 on which shadows are cast are smaller than a detection signal level of a line sensor 1 on which no shadow is cast.

According to the present embodiment, it is possible to provide (i) the coordinate sensor 410 which is small in size, can detect a coordinate easily and highly accurately, and does not require an imaging device and the like which are conventionally used for coordinate detection using triangulation and (ii) an electronic device such as the liquid crystal display device 40 including the coordinate sensor 410. Note that the coordinate calculation may be carried out in the coordinate sensor 410 (coordinate input device) or the electronic device such as the liquid crystal display device 40 including the coordinate sensor 410 or may be carried out in an electronic calculator which is provided separately from the coordinate sensor 410 and which is connected to the coordinate sensor 410 via an interface.

Further, according to the present embodiment, the plurality of infrared LEDs 3 may be simultaneously turned on so that shadows of an object to be detected which are produced by the respective infrared LEDs 3 are simultaneously detected or may be sequentially turned on so that shadows of an object to be detected which are produced by the respective infrared LEDs 3 are sequentially detected.

Fig. 43 shows an example in which (i) the prisms 161 and the line sensors 1 are provided along four sides of the counter substrate 22 and (ii) the infrared LEDs 3 are disposed on all the corner sections (four corners) of the counter substrate 22. Also in this case, the infrared LEDs 3 emit light so that the light travels along a surface of the counter substrate 22 and spreads across an entire surface of the coordinate input region 22e (touch region).

Also in this case, shadows are produced behind an object to be detected when viewed from the infrared LEDs 3, respectively (the broken lines in Fig. 43 indicate blocked light).

In a case where the prisms 161 and the line sensors 1 are provided along four sides of the counter substrate 22 as described above, signals of the respective line sensors 1 can be compared. This allows an improvement in accuracy of coordinate detection.

In a case where light that travels parallel to an x-axis direction or a y-axis direction along the surface of the counter substrate 22 as described above (i.e., in a case where light that travels parallel to the x-axis direction or the y-axis direction across the coordinate input region 22e along a screen are guided to light-receiving surface 1a of the line sensors 1), coordinate calculation is simple, and the accuracy of coordinate detection and detection resolution do not depend on a touched position. Further, it is only necessary that the line sensors 1 be provided along two sides of the coordinate input region 22e. However, in a case where light which radially travels across the coordinate input region 22e within a plane parallel to the screen are guided to light-receiving surfaces 1a of the line sensors 1 as described above, a configuration of a light source section can be simplified.

The present invention is not limited to the description of the embodiments above, but may be altered by a skilled person within the scope of the claims. An embodiment based on a proper combination of technical means disclosed in different embodiments is encompassed in the technical scope of the present invention.

Industrial Applicability

The present invention can be suitably applied to a display device having a coordinate sensor function.

Reference Signs List

1: Line sensor
1a: Light-receiving surface
2: Right angle prism (light path changing section)
3: Infrared LED (light source for detection of an indicated coordinate)
4: Optical coupling material
10: Coordinate sensor
11: Light-receiving element
12: Driving control circuit
13: Shift register
14: Switching element
15: Detection line
16: A/D converting circuit
20: Liquid crystal panel (image display member)
20a: Coordinate input surface
21: Array substrate
21c: Top surface
22: Counter substrate (light guide member)
22a: End surface
22b: End surface
22c: Top surface
22d: Bottom surface
22e: Coordinate input region (image display region)
23: Liquid crystal layer
24: Sealing material
25: Sealing material
26: Front-side polarization plate
26a: Top surface
27: Rear-side polarization plate
29: Color filter
30: Backlight (light source for display)
40: Liquid crystal display device (display device, electronic device)
50: Backlight (light source for display, light source for detection of an indicated coordinate)
51: Light guide plate
51a: Light guide plate
51b: Light guide plate
52: Light source section
53: Light source section
60: Coordinate sensor
61: Diffraction grating
70: Coordinate sensor
71: Light guide plate
71a: End surface (light path changing section)
71b: End surface
71c: Bottom surface

72: Lens (convex lens)
72a: Flat surface
80: Coordinate sensor
81: 45° mirror (light path changing section)
90: Coordinate sensor
91: Transparent substrate (light guide member)
91a: Surface
100: Image display member
100a: Image display surface
110: Reflectance changing section
110a: Elastic film
110b: Elastic film
110c: Air layer
110d: Projection
110e: Support film
110f: Adhesion layer
120: Coordinate input section (light guide member, reflectance changing member)
120a: Coordinate input surface
130: Coordinate sensor
131: Coordinate input section (light guide member, reflectance changing member)
132: Substrate
133: Coordinate input section (light guide member, reflectance changing member)
140: Coordinate input section (light guide member, reflectance changing member)
140a: Coordinate input surface
141: Elastic film
142: Transparent substrate
143: Ridges and grooves
143a: Ridges
144: Air layer
150: Coordinate sensor
160: Coordinate sensor
161: Prism (light path changing section)
161a: End surface
161b: Light incident surface
161c: Bottom surface
161d: Recessed part
162: Lens (convex lens)
162a: Flat surface
163: Linear light guide plate (light guide member) 163a: End surface
163b: End surface
170: Coordinate sensor
180: Coordinate sensor
210: Backlight (light source for display, light source for detection of an indicated coordinate)
211: Visible light source
212: Infrared light source
213: Light source section
214: Light guide plate
310: Cover plate
310a: Top surface
310b: Coordinate input region (image display region)
320: Light path changing means (light path changing section)
321: 45° mirror (light path changing section)
322: Infrared light transmitting filter
323: Light blocking layer
330: Linear light guide plate (light guide member)
330a: Extension
330b: End surface
330c: End surface

340: Collimating section
350: Light guide plate (light guide member)
350a: Top surface
350b: Extension (extended side)
350c: Coordinate input region (image display region)
360: Fresnel reflecting plate
360a: End surface
410: Coordinate sensor
420: Coordinate sensor

**Claims**

1. A coordinate sensor which causes light-receiving elements to receive light that has passed through an image display region of an image display member and which detects, based on a difference in amount of light received by the light-receiving elements, an indicated coordinate, on the image display region, that is indicated by an object to be detected, comprising:

    at least two line sensors including a line sensor having light-receiving elements disposed in an x-axis direction and a line sensor having light-receiving elements disposed in a y-axis direction; and
    light path changing sections that are paired with the respective line sensors and that are disposed in the x-axis direction and the y-axis direction, the light path changing sections changing a light path of the light that has passed through the image display region,
    said at least two line sensors being disposed outside the image display region and having light-receiving surfaces parallel to an image display surface of the image display member, and
    the light path changing sections each guiding the light that has passed through the image display region to a light-receiving surface of a corresponding one of said at least two line sensors.

2. The coordinate sensor according to claim 1, further comprising a light guide member that is provided at least in the image display region, the light guide member causing light that enters the image display region of the image display member to propagate in the x-axis direction and the y-axis direction in the image display region and to be guided to the light path changing sections,
    the light path changing sections being provided so as to face respective end surfaces of the light guide member and being light reflecting members that reflect light outputted from the end surfaces of the light guide member.

3. The coordinate sensor according to claim 2, wherein the light reflecting members are bonded to the light guide member with use of an optical coupling material having a refractive index equal to that of the light guide member.

4. The coordinate sensor according to claim 2 or 3, wherein the light guide member is a reflectance changing member that changes reflectance of light propagating within the light guide member when a pressure is applied to a surface of the light guide member by the object to be detected.

5. The coordinate sensor according to claim 4, wherein:

    the light guide member includes two elastic films, and has an air layer that is created between the two elastic films while no pressure is being applied to the surface of the light guide member, and
    when a pressure is applied to the surface of the light guide member, the two elastic films make contact with each other, thereby changing the reflectance of the light propagating within the light guide member.

6. The coordinate sensor according to claim 5, wherein a distance maintaining member for creating the air layer is provided on at least one of the two elastic films.

7. The coordinate sensor according to claim 5, wherein
    at least one of the two elastic films has ridges and grooves on a surface which makes contact with the other one of the two elastic films.

8. The coordinate sensor according to claim 4, wherein the light guide member includes an elastic film and a transparent substrate that are stacked on each other.

9. The coordinate sensor according to claim 8, wherein:

the light guide member has an air layer that is created between the elastic film and the transparent substrate while no pressure is being applied to the surface of the light guide member,
a distance maintaining member for creating the air layer is provided on at least one of the elastic film and the transparent substrate, and
when a pressure is applied to the surface of the light guide member, the elastic film and the transparent substrate make contact with each other, thereby changing the reflectance of the light propagating within the light guide member.

10. The coordinate sensor according to claim 8, wherein the elastic film has ridges and grooves on at least one of (i) a surface which makes contact with the transparent substrate and (ii) a surface opposite to the surface which makes contact with the transparent substrate.

11. The coordinate sensor according to claim 8, wherein the transparent substrate has ridges and grooves on a surface which makes contact with the elastic film.

12. The coordinate sensor according to claim 1, further comprising a light guide member that is provided at least in the image display region, the light guide member causing light that enters the image display region of the image display member to propagate in the x-axis direction and the y-axis direction in the image display region and to be guided to the light path changing sections,
the light guide member being provided so as to overlap said at least two line sensors, and
the light path changing sections being diffraction gratings that are provided on at least one of a top surface and a rear surface of the light guide member so as to overlap said at least two line sensors.

13. The coordinate sensor according to claim 1, further comprising a light guide member that is provided at least in the image display region, the light guide member causing light that enters the image display region of the image display member to propagate in the x-axis direction and the y-axis direction in the image display region and to be guided to the light path changing sections,
the light guide member being provided so that end portions of the light guide member overlap said at least two line sensors,
the light path changing sections being provided so as to be integral with the light guide member so that the end portions of the light guide member that are curved or tilted serve as the light path changing sections, and
the light guide member causing light propagating within the light guide member to be reflected by the end portions that are curved or tilted so that the light is outputted.

14. The coordinate sensor according to any one of claims 1 through 13, further comprising light sources that emit light into the image display region of the image display member,
the light sources being provided so as to face, in plan view, the light path changing sections across the image display region in the x-axis direction and the y-axis direction or being provided so as to face respective corner sections of the image display region.

15. The coordinate sensor according to any one of claims 1 through 13, further comprising a light source that emits light into the image display region of the image display member,
the light source being provided so as to face a surface of the image display member which surface is opposite to the image display surface and to irradiate the image display region with light from behind the image display member.

16. A coordinate sensor which detects, based on a difference in amount of light received by light-receiving elements, an indicated coordinate, on an image display region of an image display member, that is indicated by an object to be detected, comprising:

at least two line sensors including a line sensor having light-receiving elements disposed in an x-axis direction and a line sensor having light-receiving elements disposed in a y-axis direction; and
light path changing sections that are paired with the respective line sensors and that are disposed outside the image display region in the x-axis direction and the y-axis direction, the light path changing sections changing a light path of light that enters the light path changing sections,
said at least two line sensors being disposed outside the image display region and having light-receiving surfaces parallel to an image display surface of the image display member, and

the light path changing sections each guiding the light that enters the light path changing sections to a light-receiving surface of a corresponding one of said at least two line sensors.

17. The coordinate sensor according to claim 16, wherein each of the light path changing sections is provided on the image display member and causes light that travels over the image display region along the image display surface to be guided to a light-receiving surface of a corresponding one of said at least two line sensors.

18. The coordinate sensor according to claim 17, wherein each of the light path changing sections causes light that travels along the image display surface in the x-axis direction and the y-axis direction to be guided to a light-receiving surface of a corresponding one of said at least two line sensors.

19. The coordinate sensor according to claim 17, wherein each of the light path changing sections causes light that radially travels along the image display surface within a plane parallel to the image display surface to be guided to a light-receiving surface of a corresponding one of said at least two line sensors.

20. The coordinate sensor according to claim 17, wherein:

said at least two line sensors include line sensors disposed in parallel in the x-axis direction and line sensors disposed in parallel in the y-axis direction, and said at least two line sensors receive light that enters the light path changing sections from above the image display region.

21. The coordinate sensor according to any one of claims 17 through 20, further comprising light sources that are provided, outside the image display region, on the image display member, the light sources emitting light that travels over the image display region.

22. The coordinate sensor according to claim 21, wherein the light sources are provided so as to face respective corner sections of the image display region.

23. The coordinate sensor according to claim 22, wherein:

the light path changing sections and said at least two line sensors are provided along sides of the image display region so as to surround the image display region, and
the light sources are provided so as to face the respective corner sections of the image display region.

24. The coordinate sensor according to claim 17, further comprising:

a light guide member that is provided, outside the image display region, on the image display member so as to face the light path changing sections across the image display region in plan view; and
a light source that emits light into the light guide members.

25. The coordinate sensor according to claim 24, wherein:

the light guide member has an extension that protrudes outside the image display member in a planar direction,
the light source is provided below the extension of the light guide member, and
the coordinate sensor further comprising a collimating section that converts the light that enters the light guide member from the light source into light parallel to the image display surface of the image display member.

26. The coordinate sensor according to claim 16, further comprising:

a light guide member that is provided on the image display member; and
a light source that is disposed so as to face a corner section of the light guide member and that emits light into the light guide member,
the light path changing sections being provided, outside the image display region, on the light guide member so as to be located along two sides of the light guide member that sandwich the corner section which faces the light source,
the light guide member having end portions each having a two-layer structure outside the image display region, which end portions form two sides that face, in plan view, the two sides along which the light path changing sections are provided, the two-layer structure (i) being constituted by an upper layer and a lower layer each having an end surface having a light reflecting surface and (ii) causing light to be guided from the lower layer to the upper layer and to be outputted from the upper layer, and

the light path changing sections each guiding, to a light-receiving surface of a corresponding one of said at least two line sensors, the light that is outputted from the upper layer of the light guide member facing the light path changing section and that travels over the image display region.

27. The coordinate sensor according to claim 26, wherein:

the light guide member has an extended side that protrudes outside the image display member in a planar direction, and

the light source is provided below the extended side of the light guide member,

the coordinate sensor further comprising a collimating section that converts the light that enters the light guide member from the light source into light parallel to the image display surface of the image display member.

28. The coordinate sensor according to any one of claims 17 through 27, wherein the light path changing sections each have a curved or tilted end surface, and causes the light that travels over the image display region to be reflected by the curved or tilted end surface so that the light is outputted.

29. The coordinate sensor according to claim 13 or 26, wherein convex lenses are provided between the light path changing sections and said at least two line sensors.

30. The coordinate sensor according to claim 13 or 28, wherein:

light output surfaces of the light path changing sections have recessed parts, and

convex lenses are provided so as to fill the recessed parts.

31. The coordinate sensor according to claim 18, wherein axisymmetrical convex lenses are provided on light output surface of the light path changing sections.

32. The coordinate sensor according to claim 19, wherein convex lenses that are cylindrical lenses are provided on light output surfaces of the light path changing sections.

33. The coordinate sensor according to any one of claims 14, 15, and 21 through 27, wherein the light source(s) include (s) an infrared light source that emits infrared light.

34. An electronic device comprising a coordinate sensor as set forth in any one of claims 1 through 33.

35. A display device comprising a coordinate sensor as set forth in any one of claims 1 through 33, wherein the image display member is an electronic display panel.

36. A display device with a built-in coordinate sensor which display device includes an electronic display panel including an array substrate, the display device causing light-receiving elements to receive light that has passed through an image display region of the electronic display panel and detecting, based on a difference in amount of light received by the light-receiving elements, an indicated coordinate, on the image display region, that is indicated by an object to be detected, comprising:

at least two line sensors including a line sensor having light-receiving elements disposed in an x-axis direction and a line sensor having light-receiving elements disposed in a y-axis direction; and

light path changing sections that are paired with the respective line sensors and that are disposed in the x-axis direction and the y-axis direction, the light path changing sections changing a light path of the light that has passed through the image display region,

said at least two line sensors being provided, outside the image display region, on a circuit formation surface of the array substrate and having light-receiving surfaces parallel to an image display surface of the electronic display panel, and

the light path changing sections each guiding the light that has passed through the image display region to a light-receiving surface of a corresponding one of said at least two line sensors.

37. A display device with a built-in coordinate sensor which display device includes an electronic display panel including an array substrate, the display device detecting, based on a difference in amount of light received by light-receiving elements, an indicated coordinate, on an image display region of the electronic display panel, that is indicated by an object to be detected, comprising:

at least two line sensors including a line sensor having light-receiving elements disposed in an x-axis direction and a line sensor having light-receiving elements disposed in a y-axis direction; and

light path changing sections that are paired with the respective line sensors and that are disposed outside the image display region in the x-axis direction and the y-axis direction, the light path changing sections changing a light path of light that enters the light path changing sections,

said at least two line sensors being provided, outside the image display region, on a circuit formation surface of the array substrate and having light-receiving surfaces parallel to an image display surface of the electronic display panel, and

the light path changing sections each guiding the light that enters the light path changing sections to a light-receiving surface of a corresponding one of said at least two line sensors.

38. The display device according to claim 36 or 37, wherein:

the electronic display panel includes a counter substrate that is disposed so as to face the array substrate, and said at least two line sensors are provided outside sealing regions formed between the array substrate and the counter substrate.

39. The display device according to claim 36 or 37, wherein:

the electronic display panel includes a counter substrate that is disposed so as to face the array substrate, and said at least two line sensors are provided in sealing regions formed between the array substrate and the counter substrate.

40. The display device according to claim 36 or 37, wherein:

the electronic display panel includes a counter substrate that is disposed so as to face the array substrate, and said at least two line sensors are provided between (i) sealing regions that are formed between the array substrate and the counter substrate and (ii) a display region.

41. The display device according to any one of claims 38 through 40, wherein the counter substrate is a light guide member, and causes light that enters the image display region to propagate in the x-axis direction and the y-axis direction in the image display region and to be guided to the light path changing sections.

42. The display device according to any one of claims 36 through 40, further comprising a light guide member that is provided on the electronic display panel so as to be located at least in the image display region, the light guide member causing light that enters the image display region to propagate in the x-axis direction and the y-axis direction in the image display region and to be guided to the light path changing sections.

43. The display device according to claim 41 or 42, further comprising light sources that are provided so as to face end surfaces of the light guide member that face the light path changing sections across the image display region in the x-axis direction and the y-axis direction or provided so as to face respective corner sections of the light guide member, the light source emitting light into the image display region.

44. The display device according to any one of claims 36 through 43, further comprising a backlight that irradiates the electronic display panel with light, the backlight serving as both of (i) a light source for display and (ii) a light source that emits light into the image display region so that the indicated coordinate indicated by the object is detected.

45. A light-receiving unit which receives light that has passed through an image display region of an image display member, comprising:

a line sensor that is disposed, outside the image display region, on the image display member and that has a plurality of light-receiving elements which are disposed in a one-dimensional array and which have respective light-receiving surfaces parallel to an image display surface of the image display member; and

a light path changing section that changes a light path of the light that has passed through the image display region of the image display member so that the light is guided to the light-receiving surfaces of the line sensor.

46. A light-receiving unit which receives light that travels over an image display region of an image display member, comprising:

a light source that emits the light that travels over the image display region;
a line sensor that is disposed, outside the image display region, on the image display member and that includes a plurality of light-receiving elements which are disposed in a one-dimensional array and which have respective light-receiving surfaces parallel to an image display surface of the image display member; and
a light path changing section that changes a light path of the light that travels over the image display region of the image display member so that the light is guided to the light-receiving surfaces of the line sensor.

F I G. 1

(a)

(b)

Y
COORDINATE 1

LINE SENSOR

LINE SENSOR

OUTPUT OF LINE
SENSOR

X COORDINATE

# F I G. 2

CLK

13 SHIFT REGISTER

SCANNING SIGNAL

15:DETECTION LINE

14 (×5 switches)

11 LIGHT-RECEIVING ELEMENT (×5)

LIGHT

12

1

16 A/D CONVERTING CIRCUIT

SIGNAL OUTPUT

F I G. 3

F I G. 4

(a)

(b)

LINE SENSOR

LINE SENSOR

Y
↓COORDINATE

OUTPUT OF LINE SENSOR

X COORDINATE

FIG. 5

(a)

(b)

EP 2 336 859 A1

F I G. 6

62

F I G. 7

(a)

(b)

Y
↓ COORDINATE

LINE SENSOR

OUTPUT OF LINE
SENSOR

X COORDINATE

FIG. 8

FIG. 9

F I G. 1 0

F I G. 1 1

FIG. 12

FIG. 13

F I G. 1 4

F I G. 1 5

F I G . 1 6

F I G . 1 7

F I G . 1 8

F I G . 1 9

FIG.20

FIG.21

F I G. 2 2

F I G. 2 3

F I G. 2 4

200a    200

201    PIXEL

FIG. 25

F I G. 2 6

F I G. 2 7

F I G. 2 8

↓ Y COORDINATE

163b 163a 163 3 3

40

161a
162
1a

161

3
163
163b
163a

22
22e
20a

160

161

1a 162 161a 21c 21

OUTPUT OF LINE
SENSOR

X COORDINATE

FIG. 29

FIG. 30

F I G. 3 1

F I G. 3 2

F I G. 3 3

F I G. 3 4

F I G. 3 5

VERTICAL DIRECTION          HORIZONTAL DIRECTION

DIRECTIVITY OF LED

F I G. 3 6

F I G. 3 7

A/D CONVERTING CIRCUIT

SIGNAL OUTPUT

F I G. 3 8

VERTICAL DIRECTION 　　　　HORIZONTAL DIRECTION

0°

90°　　　　　　　90°

1.0
RELATIVE EMISSION
INTENSITY

0°

90°　　　　　　　90°

0　　　1.0
RELATIVE EMISSION
INTENSITY

DIRECTIVITY OF LED

F I G. 3 9

F I G. 4 0

F I G . 4 1

FIG. 42

(a)

(b)

FIG.43

FIG.44

**INTERNATIONAL SEARCH REPORT**

| | International application No. |
|---|---|
| | PCT/JP2009/059898 |

A. CLASSIFICATION OF SUBJECT MATTER
G06F3/041(2006.01)i, G02F1/1333(2006.01)i, G02F1/13357(2006.01)i,
G02F1/1343(2006.01)i, G06F3/042(2006.01)i, G09F9/00(2006.01)i

According to International Patent Classification (IPC) or to both national classification and IPC

B. FIELDS SEARCHED

Minimum documentation searched (classification system followed by classification symbols)
G06F3/03-3/047, G02F1/1333, G02F1/13357, G02F1/1343, G09F9/00

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2004-303172 A (Seiko Epson Corp.),<br>28 October, 2004 (28.10.04),<br>Full text; all drawings<br>(Family: none) | 1,15-18,21,<br>31,34-37,<br>44-46<br>32<br>2-14,19,20,<br>22-30,33,<br>38-43 |
| X<br>A | JP 2002-116428 A (Mitsubishi Electric Corp.),<br>19 April, 2002 (19.04.02),<br>Full text; all drawings<br>(Family: none) | 1,15-18,21,<br>33-37,45,46<br>2-14,19,20,<br>22-32,38-44 |
| Y | JP 2004-005200 A (Ricoh Co., Ltd.),<br>08 January, 2004 (08.01.04),<br>Par. No. [0034]; Fig. 3<br>(Family: none) | 32 |

☒ Further documents are listed in the continuation of Box C.        ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>25 August, 2009 (25.08.09) | Date of mailing of the international search report<br>08 September, 2009 (08.09.09) |
|---|---|
| Name and mailing address of the ISA/<br>Japanese Patent Office | Authorized officer |
| Facsimile No. | Telephone No. |

Form PCT/ISA/210 (second sheet) (April 2007)

EP 2 336 859 A1

| INTERNATIONAL SEARCH REPORT | | International application No.<br>PCT/JP2009/059898 |
|---|---|---|

C (Continuation).    DOCUMENTS CONSIDERED TO BE RELEVANT

| Category* | Citation of document, with indication, where appropriate, of the relevant passages | Relevant to claim No. |
|---|---|---|
| A | JP 10-162698 A  (Idec Izumi Corp.),<br>19 June, 1998 (19.06.98),<br>Full text; all drawings<br>(Family: none) | 1-46 |
| A | JP 07-294708 A  (Fujitsu Ltd.),<br>10 November, 1995 (10.11.95),<br>Full text; all drawings<br>(Family: none) | 1-46 |

Form PCT/ISA/210 (continuation of second sheet) (April 2007)

## INTERNATIONAL SEARCH REPORT

International application No.

PCT/JP2009/059898

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

The matter common to the inventions of claims 1-46 is "a coordinate sensor comprising two line sensors in which a plurality of light-receiving elements are arranged in the x-axis direction and the y-axis direction, respectively, and optical path changing units which are disposed so as to pair up with the two line sensors, respectively, and change the optical paths of light beams which have passed an image display region".

However, the search has revealed that this common matter is not novel since it is disclosed in document JP 2004-303172 A (Seiko Epson Corp.), 28 October, 2004 (28.10.04), the full text, all figures (no patent family), and document (Continued to the extra sheet.)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**

the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

| **INTERNATIONAL SEARCH REPORT** | International application No. |
| --- | --- |
| | PCT/JP2009/059898 |

Continuation of Box No.III of continuation of first sheet(2)

JP 2002-116428 A (Mitsubishi Electric Corp.), 19 April, 2002 (19.04.02), the full text, all figures (no patent family).

In consequence, since the common matter makes no contribution over the prior art, this common matter cannot be a special technical feature within the meaning of PCT Rule 13.2, second sentence, and there exists no matter common to all the inventions of claims 1-46. Therefore, the inventions of 1-46 do not comply with the requirement of unity of invention.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004264846 A
- JP 2008003296 A

- WO 2007029257 A